# EUROPEAN PATENT SPECIFICATION

(11) **EP 4 518 223 B1**
(45) Date of publication and mention of the grant of the patent: **15.07.2026**
(21) Application number: 23795477.1
(22) Date of filing: 26.04.2023
(51) Int. Cl.: H04L 5/00

(54) **CSI REPORTING METHOD, TERMINAL, NETWORK DEVICE, APPARATUS, AND STORAGE MEDIUM**
CSI-MELDEVERFAHREN, ENDGERÄT, NETZWERKVORRICHTUNG, VORRICHTUNG UND SPEICHERMEDIUM
PROCÉDÉ DE RAPPORT D'INFORMATIONS CSI, TERMINAL, DISPOSITIF DE RÉSEAU, APPAREIL ET SUPPORT DE STOCKAGE

(30) Priority: 29.04.2022 CN 202210476118; 12.08.2022 CN 202210969482
(43) Date of publication of application: 05.03.2025
(73) Proprietor: Datang Mobile Communications Equipment Co., Ltd., Beijing 100085 (CN)
(72) Inventor: LU, Yiwen, Beijing 100085 (CN); SU, Xin, Beijing 100085 (CN); GAO, Qiubin, Beijing 100085 (CN)
(74) Representative: Studio Torta S.p.A.
(86) International application number: PCT/CN2023/090876
(87) International publication number: WO 2023/208045

(56) References cited:
- WO-A1-2021/162522
- CN-A- 103 858 501
- CN-A- 111 614 389
- CN-A- 113 259 051
- CN-A- 114 390 581
- ZTE: "CSI enhancements for Multi-TRP and FR1 FDD reciprocity", vol. RAN WG1, no. e-Meeting; 20210125 - 20210205, 19 January 2021 (2021-01-19), XP051970906, Retrieved from the Internet <URL:https://ftp.3gpp.org/tsg_ran/WG1_RL1/TSGR1_104-e/Docs/R1-2100291.zip R1-2100291 CSI enhancements for Multi-TRP and FR1 FDD reciprocity.docx> [retrieved on 20210119]
- HUAWEI ET AL: "Discussion on CSI Enhancements for Rel-17", vol. RAN WG1, no. e-Meeting; 20210816 - 20210827, 7 August 2021 (2021-08-07), XP052037797, Retrieved from the Internet <URL:https://ftp.3gpp.org/tsg_ran/WG1_RL1/TSGR1_106-e/Docs/R1-2106469.zip R1-2106469.docx> [retrieved on 20210807]

## Description

### FIELD

The present application relates to the field of communications, and in particular, to methods and apparatuses for reporting channel state information (CSI), a terminal, a network device and a storage medium.

### BACKGROUND

At present, measurement and reporting schemes of multiple transmission reception point (MTRP) channel state information (CSI) in the new radio (NR) system only performs CSI enhancement on a non-coherent joint transmission (NCJT) mode. Based on a current MTRP CSI framework, a terminal cannot accurately perform measurement and reporting on a current channel state for a transmission characteristic of a coherent joint transmission (CJT).

Moreover, the current NR system only supports CSI reporting of coordinated channels of two transmission points. When the terminal reports the CSI of an NCJT transmission, CSI of joint transmission for all transmission reception points (TRPs) is required to be reported, which results in large overhead on network resources. In recent technological developments, in case that four or more transmission points are to be added for coherent coordinated transmission, if CSI reporting is also performed for coordinated channels of all transmission points, the corresponding overhead may be greatly increased, and it is impossible to report optimal part of the transmission points for coordinated transmission. The above problems have become problems that need to be solved urgently in the industry.

Document ZTE: "CSI enhancements for Multi-TRP and FR1 FDD reciprocity", 3GPP DRAFT; R1-2100291, (2021-01-19) provides views to enhance CSI measurement and reporting for MTRP and FDD reciprocity.

Document HUAWEI ET AL: "Discussion on CSI Enhancements for Re1-17",3GPP DRAFT; R1-2106469, (2021-08-07) provides views on CSI enhancement based on angle and delay reciprocity and CSI enhancement for multi-TRP.

### BRIEF SUMMARY

Embodiments of the present application provide methods and apparatuses for reporting channel state information (CSI). By configuring a corresponding channel state information-reference signal (CSI-RS) resource configuration and a corresponding CSI reporting configuration through a network device, a terminal may feed back CSI situations corresponding to different transmission schemes and recommended selections of corresponding resource pairing groups in different transmission schemes based on the above configuration.

A method performed by a terminal, a method performed by a network device, a terminal and a network device are defined by the appended independent claims 1, 12, 14 and 15 respectively. The invention is defined by the appended claims.

In methods and apparatuses for reporting the CSI reporting, the terminal, the network device, storage mediums provided by the embodiments of the present application, the corresponding CSI-RS resource configuration and the corresponding CSI reporting configuration are configured by the network device, the CSI-RS resource configuration includes multiple resource pairing groups, and the CSI reporting configuration at least includes a CJT mode, which provides a mode for enhancing CSI measurement feedback for the CJT mode. The terminal may feed back CSI situations corresponding to different transmission schemes and recommended selections of corresponding resource pairing groups in different transmission schemes based on the above-mentioned CSI-RS resource configuration and the above-mentioned CSI reporting configuration, and further feed back a more realistic channel state, which improves the transmission performance during multi-point collaboration, and reduces feedback overhead.

### BRIEF DESCRIPTION OF THE DRAWINGS

In order to illustrate solutions disclosed in the embodiments of the present application and the related art more clearly, drawings used in the description of the embodiments and the related art are briefly described below. The drawings in the following description are only some embodiments of the present application, and other drawings may be obtained according to these drawings without any creative work for those skilled in the art.
FIG. 1 is an example diagram of a channel state information (CSI) feedback framework in the related art;
FIG. 2 is a first schematic flowchart of a method for reporting CSI according to an embodiment of the present application;
FIG. 3 is a second schematic flowchart of a method for reporting CSI according to an embodiment of the present application;
FIG. 4 is a schematic structural diagram of a terminal according to an embodiment of the present application;
FIG. 5 is a schematic structural diagram of a network device according to an embodiment of the present application;
FIG. 6 is a first schematic flowchart of an apparatus for reporting CSI according to an embodiment of the present application; and
FIG. 7 is a second schematic flowchart of an apparatus for reporting CSI according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more, and other quantifiers are similar.

Solutions of the embodiments of the present application may be clearly and completely described in combination with the drawings of the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In order to more clearly explain the protection scheme of the present application, the relevant technologies are first introduced.

In different standardized versions of a long-term evolution (LTE) system, various feedback types are defined to support channel state information (CSI) feedback for different multiple-input multiple-output (MIMO) transmission schemes. This design leads to the dispersion and the complexity of different transmission modes and information feedback. In order to avoid introducing multiple feedback types/sub-feedback types in the 5G system, a unified CSI feedback framework is considered. It is designed as follows: by decoupling CSI measurement modes from CSI feedback modes, measurement resources and measurement operations are separated from specific reporting operations, to support application of different MIMO transmission modes in multiple scenarios and multiple frequency ranges in a more flexible mode. In addition, for an emerging beam management requirement in the 5G system, a beam indicator and its corresponding reference signal received power (RSRP) and other information are required to be reported.

In the new radio (NR) system, CSI may include a channel quality indicator (CQI), a pre-coding matrix indicator (PMI), a channel state information-reference signal indicator (CRI), a synchronization signal/physical broadcast channel resource block indicator (SSBRI), a layer indicator (LI), a rank indicator (RI) and a layer-1 reference signal received power (L1-RSRP). The SSBRI, the LI and the L1-RSRP are newly added feedback quantities based on the CSI feedback of the LTE system. The LI is used to indicate a strongest column in the PMI and is used for phase tracking-reference signal (PT-RS) mapping. The SSBRI and the L1-RSRP are used for beam management, one indicates a beam index, and the other indicates a beam strength.

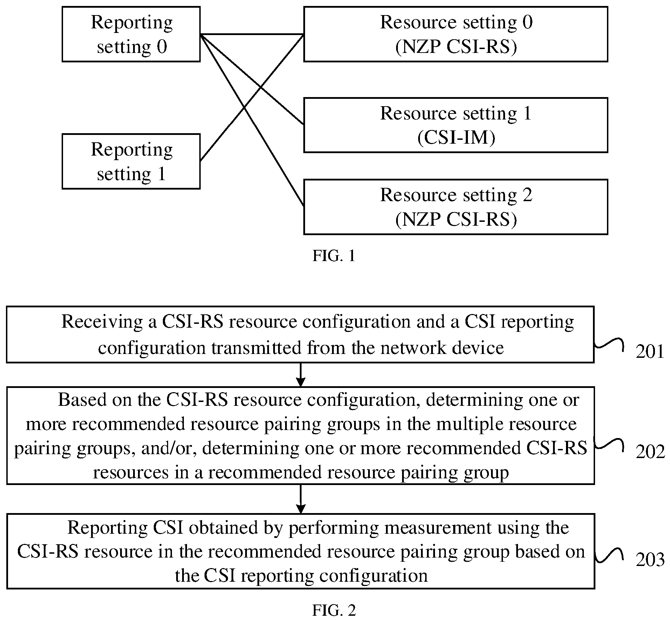

Based on the above principle for decoupling the CSI measurement from the CSI feedback, the system may configure, for each user equipment (UE), N ≥ 1 reporting settings for reporting different measurement results, and M ≥ 1 channel state information reference signal (CSI-RS) measurement resource settings. Each reporting setting is associated with one or more resource settings for channel and interference measurement and reporting, and different measurement sets and reporting combinations may be flexibly set based on different terminal requirements and application scenarios. FIG. 1 is an example diagram of a channel state information (CSI) feedback framework in the related art. As shown in FIG. 1, for a certain terminal, three measurement sets are configured, which correspond to different CSI-RS measurement resource combinations respectively. The terminal is also configured with two reporting settings. For setting 0, results of three measurement sets are reported, and for setting 1, a result of one measurement set is reported.

The reporting setting includes configurations of the following parameters: a CSI feedback parameter (for example, report quantity), a codebook configuration, a time domain behavior of CSI feedback, frequency domain granularities of a pre-coding matrix indicator (PMI) and a channel quality indicator (CQI), and a measurement constraint configuration. The CSI feedback parameter is used to indicate whether the UE performs beam management-related feedback or CSI obtaining-related feedback.

The NR supports periodic, semi-persistent and aperiodic CSI feedback. For the periodic CSI feedback and the semi-persistent CSI feedback, feedback periods and feedback slot offsets need to be configured in the reporting setting. Each Reporting Setting may be associated with one or two resource settings. For the aperiodic CSI feedback, the feedback slot offset is indicated by dynamic signaling, and each reporting setting may be associated with one, two or three resource settings.

The NR supports broadband or subband feedback. A subband size for the subband CSI reporting is associated with a bandwidth part (BWP) actually used by the terminal (since a BWP of the 5G system is generally wide, from the perspective of power saving, the BWP of the entire system is usually divided into BWPs of different sizes, and each terminal transmits and receives within an allocated BWP), as shown in the following table. Each BWP is configured with two candidate subbands, which may be configured through radio resource control (RRC). When subband CSI is reported, multiple subbands may be configured continuously in a frequency domain or discontinuously in a frequency domain. Table 1 shows relationships between CSI and subband sizes.

**Table 1**

| BWP (the number of physical resource blocks (PRBs)) | Subband size (the number of PRBs) |
|---|---|
| <24 | N/A |
| 24-72 | 4, 8 |
| 73-144 | 8, 16 |
| 145-275 | 16, 32 |

The time domain behavior of the CSI-RS in the NR may be configured as a periodic CSI-RS, a semi-persistent CSI-RS and an aperiodic CSI-RS. The following gives combinations of reporting setting and resource setting supported in the NR. Periodic CSI reporting may only be associated with the periodic CSI-RS, semi-persistent CSI reporting may be associated with the periodic CSI-RS and the semi-persistent CSI-RS, and aperiodic CSI reporting may be associated with the periodic CSI-RS, the semi-persistent CSI-RS and the aperiodic CSI-RS. Table 2 shows associations between reporting settings and resource settings.

**Table 2**

| CSI-RS configuration | Periodic CSI report | Semi-persistent CSI report | Aperiodic CSI report |
|---|---|---|---|
| Periodic CSI-RS | Supported, without being triggered//activated | Supported, media access control control element (MAC CE)/DCI activated | Supported, DCI triggered |
| Semi-persistent CSI-RS | Not supported | Supported, MAC CE/ DCI activated | Supported, DCI triggered |
| Aperiodic CSI-RS | Not supported | Not supported | Supported, DCI triggered |

The resource setting is used for channel or interference measurement. Each resource setting contains S ≥ 1 resource sets, and each resource set contains Ks ≥ 1 CSI-RS resources. The NR supports periodic, semi-persistent and aperiodic resource settings, and its time domain behavior is configured in the resource setting. For the periodic resource setting and the semi-persistent resource setting, only one resource set may be configured, that is, S = 1. The aperiodic resource setting may be configured with one or more resource sets. In order to distinguish CSI obtaining from beam management, a beam repetition indication parameter (repetition) is further introduced, and is configured in the resource set to indicate whether the CSI-RS in this resource set is used for beam management and whether repeated beams are used for transmission.

Multi-point coordination is an important means in the NR R16 system. Considering deployment conditions, frequency ranges and antenna forms of the NR system, the application of coordinated multi-point transmission technologies in the NR system has more significant practical significance. From the perspective of network morphology, network deployment with a large number of distributed access points and baseband centralized processing may be more conducive to providing a balanced user experience rate, and significantly reducing the delay and signaling overhead caused by handover. As the frequency range increases, relatively dense access point deployment is also required from the perspective of ensuring network coverage. In the high frequency range, as the integration of active antenna equipment increases, modular active antenna arrays may be more inclined to be adopted. An antenna array of each transmission reception point (TRP) may be divided into several relatively independent antenna sub-arrays (or panels), and the shape and the number of ports of the entire array may be flexibly adjusted based on the deployment scenario and business requirements. Panels or TRPs may also be connected by an optical fiber for more flexible distributed deployment. In the millimeter wave band, as the wavelength decreases, the blocking effect caused by obstacles such as human bodies or vehicles may become more significant. From the perspective of ensuring the robustness of link connections, the coordination between multiple TRPs or panels may also be used to transmit/receive from multiple beams at multiple angles, thereby reducing the adverse effects cause by the blocking effect.

Based on mapping relationships between a transmitted signal stream to multiple TRPs/panels, the coordinated multi-point transmission technologies may be roughly divided into coherent transmission and non-coherent transmission. For the coherent transmission, each data layer is mapped to multiple TRPs/panels through a weighted vector. For the non-coherent transmission, each data stream is only mapped to part of the TRP/panel.

The Rel-16 standardizes the non-coherent transmission mode of single-physical downlink control channel (PDCCH) scheduling-based multi-TRP physical downlink shared channel (PDSCH), and the transmission mode for improving transmission reliability/reducing latency (hereinafter referred to as an ultra-reliable and low latency communications (URLLC) enhancement scheme) based on the multi-point collaboration. The URLLC enhancement scheme uses a single downlink control information (S-DCI) mechanism as a whole. During transmission, collaboration of multiple TRPs may be used for introduce redundancy in a spatial domain, a time domain, and a frequency domain, to improve the reliability/reduce the latency.

The Rel-17 only enhances the measurement and reporting of the CSI for a non-coherent joint transmission (NCJT) mode. The resources in each channel state information reference signal (CSI-RS) resource set may be divided into two groups in units of TRP, and channel measurement reference signals (CMRs) between the two groups may be paired. The terminal may feed back the CSI in the NCJT mode and/or the CSI in the single-point transmission mode for each CMR pair.

The Rel-17 standardizes a PDSCH/PDCCH coherent transmission mode supported with a single-frequency network (SFN) transmission scheme. Channels for demodulation reference signal (DMRS) of data layers of PDSCH/PDCCH/the PDSCH have a Quasi colocation (QCL) relationship with one or more QCL reference signals having at least one largescale property parameter. Therefore, DMRS of the data layers of PDSCH/PDCCH is transmitted from different transmission points (TRP/panel).

FIG. 2 is a first schematic flowchart of a method for reporting CSI according to an embodiment of the present application. The method may be performed by a terminal. As shown in FIG. 2, the method includes the following steps.

Step 201: receiving a CSI-RS resource configuration and a CSI reporting configuration transmitted from the network device, where the CSI-RS resource configuration includes multiple resource pairing groups and first indication information corresponding to each resource pairing group, the first indication information is used to indicate the resource pairing group and/or indicate each CSI-RS resource in the resource pairing group, each resource pairing group includes CSI-RS resources selected from different pre-allocated resource groups, and the pre-allocated resource groups are a first number of pre-allocated resource groups determined based on a CSI-RS resource set.

In an embodiment, the network side may configure different resource pairing groups and related parameters in the CSI-RS resource configuration based on requirements, for the terminal side to perform joint channel measurement, recommend one or more resource pairing groups and/or one or more recommended CSI-RS resources in this resource pairing group based on an actual measurement result from the terminal, the network side may obtain a transmission node indicated by the best channel state information for collaborative transmission.

The network device divides the CSI-RS resource set including multiple CSI-RS resources into M groups to form M CSI-RS resource groups, and selects one or more CSI-RS resources from different CSI-RS resource groups to form a resource pairing group. That is, each CSI-RS resource in the resource pairing group is selected from different CSI-RS resource groups. Usually, M is the number of TRPs. The above procedure of dividing the CSI-RS resource set into M groups means allocating all CSI-RS resources to different TRPs, and each corresponding resource pairing group selects one or more CSI-RS resources allocated to different TRPs from the CSI-RS resources allocated to each TRP. A specific resource pairing group and/or each CSI-RS resource included in the resource pairing group may be indicated by the first indication information. The first indication information may be an index value, or a number, etc. When the first indication information is represented by an index value, index values corresponding to each resource pairing group may be one-dimensional, two-dimensional or three-dimensional. In case that the index value is one-dimensional, it indicates an identifier of the resource pairing group. In case that the index value is two-dimensional, it indicates an identifier of the resource pairing group and a CSI-RS resource group to which each CSI-RS resource in the resource pairing group belongs, that is, a TRP to which each CSI-RS resource in the resource pairing group belongs. In case that the index value is three-dimensional, it indicates an identifier of the resource pairing group, a CSI-RS resource group to which each CSI-RS resource in the resource pairing group belongs, and a transmission mode applied to all CSI-RS resources in the resource pairing group. The transmission mode applied to the resource pairing group may also be configured in other modes, and is necessarily configured through the third parameter of the index value. For example, indication information may be additionally configured to indicate the transmission mode applied to the resource pairing group.

The network device may configure the CSI reporting configuration for the terminal to report a joint channel measurement result based on requirements, the CSI reporting configuration includes one or more reporting settings, and the reporting setting may include one or more transmission modes.

Step 202: based on the CSI-RS resource configuration, determining one or more recommended resource pairing groups in the multiple resource pairing groups, and/or, determining one or more recommended CSI-RS resources in a recommended resource pairing group.

After performing joint channel measurement based on the CSI-RS resources in the CSI-RS resource configuration transmitted from the network device, the terminal may determine one or more recommended resource pairing groups to be reported, or may further determine one or more CSI-RS resources recommended in this recommended resource pairing group, or the recommended resource pairing group to be reported and one or more CSI-RS resources in the group.

Step 203: based on the CSI reporting configuration, reporting CSI obtained by performing measurement using the CSI-RS resource in the recommended resource pairing group, and reporting the recommended resource pairing group corresponding to the CSI, and/or, one or more recommended CSI-RS resources in the recommended resource pairing group.

The CSI reporting configuration includes a configuration of one or more transmission schemes, and the first number is a positive integer.

After determining the recommended resource pairing group to be reported, and/or one or more recommended CSI-RS resources in the recommended resource pairing group, the terminal needs to determine one or more transmission schemes based on the CSI reporting configuration received from the network device. The transmission scheme may be a single transmission mode or a combined transmission mode, which is not limited here. After all transmission modes included in the transmission scheme are determined, the recommended resource pairing group, the recommended part of the CSI-RS resources recommended in the recommended resource pairing group, and any one of the recommended resource pairing group and the recommended part of the CSI-RS resources recommended in the recommended resource pairing group are reported based on these transmission modes. In addition, the CSI corresponding to the recommended resource pairing group or the recommended CSI-RS resources is further reported. The network device determines a specific corresponding TRP based on the recommended resource pairing group or the recommended CSI-RS resources in the group reported by the terminal, and uses the recommended TRP to transmit messages to the terminal and perform related interaction when transmitting messages subsequently.

In the method for reporting the CSI provided by the embodiment of the present application, the corresponding CSI-RS resource configuration and the corresponding CSI reporting configuration are configured by the network device, the CSI-RS resource configuration includes multiple resource pairing groups, and the CSI reporting configuration at least includes a CJT mode, which provides a mode for enhancing CSI measurement feedback for the CJT mode. The terminal may feed back CSI situations corresponding to different transmission schemes and recommended selections of corresponding resource pairing groups in different transmission schemes based on the above-mentioned CSI-RS resource configuration and the above-mentioned CSI reporting configuration, and further feed back a more realistic channel state, which improves the transmission performance during multi-point collaboration, and reduces feedback overhead.

In an embodiment, based on the CSI-RS resource configuration, determining the one or more recommended resource pairing groups in the multiple resource pairing groups includes:
determining first reference signal received powers (RSRPs) and first signal to interference plus noise ratios (SINRs) of each resource pairing group based on RSRPs and SINRs of each CSI-RS resource in each resource pairing group in the CSI-RS resource configuration; and
determining the recommended resource pairing group based on a first rule,
where the first rule includes one or more of the following:
   a front second number of resource pairing groups having a highest first RSRP;
   a front second number of resource pairing groups having a highest first SINR; or
   a resource pairing group having a highest first RSRP and a highest first SINR, where the first RSRP or the first SINR has a highest difference with a first threshold,
   where the first threshold is a preset minimum value of RSRPs or SINRs of all CSI-RS resources in the resource pairing group, and the second number is a positive integer.

In an embodiment, after the terminal performs joint channel measurement, it may determine the recommended resource pairing group from the multiple resource pairing groups included in all CSI-RS resource configurations based on a measurement result.

This step may be achieved by any of the following modes.

Based on the RSRPs of all CSI-RS resources in each resource pairing group, by summing, averaging or taking the maximum value, the first RSRPs of each resource pairing group are determined, the determined first RSRPs are sorted, and the front second number of recommended resource pairing groups having the highest RSRP are determined.

Or, based on the SINRs of all CSI-RS resources in each resource pairing group, by summing, averaging or taking the maximum value, the first SINRs of each resource pairing group are determined, the determined first SINR are sorted, and the front second number of resource pairing groups having the highest SINR are determined.

Or, by comparing the first RSRP determined based on the RSRPs of all CSI-RS resources in each resource pairing group and the first SINR determined based on the SINRs of all CSI-RS resources in each resource pairing group with the first threshold (where the first threshold is the preset total minimum RSRP/SINR in the resource pairing groups), the front second number of resource pairing groups having the largest difference from the first threshold and highest corresponding SINR and RSRP are taken as the recommended CSI-RS resources.

The second number is a positive integer.

The front second number of resource pairing groups having the optimal RSRP or SINR measurement result may be dynamically screened out from all resource pairing groups, and all CSI-RS resources corresponding to this resource pairing group are therefore determined. Each CSI-RS resource is selected from the first number of pre-allocated resource groups, and each CSI-RS resource in the pre-allocated resource group corresponds to a transmission point. Therefore, determining the recommended resource pairing group is equivalent to determining the corresponding transmission point. The recommended resource pairing group is transmitted to the network device, and the network device may obtain which transmission point has a better signal, use the corresponding transmission point to transmit messages to the terminal, and perform interaction. The second number may be preset, or configured through high layer signaling transmitted from a base station, or determined by the terminal itself.

In an embodiment, based on the CSI-RS resource configuration, determining the one or more recommended CSI-RS resources in the recommended resource pairing group includes:
determining RSRPs and SINRs of each CSI-RS resource in the recommended resource pairing group as second RSRPs and second SINRs respectively; and
determining the recommended CSI-RS resource in the recommended resource pairing group based on a second rule,
where the second rule includes one or more of the following:
   a front third number of the CSI-RS resources having a highest second RSRP;
   a front third number of the CSI-RS resources having a highest second SINR; or
   a CSI-RS resource having a second RSRP or a second SINR greater than or equal to a second threshold,
   where the second threshold is a preset minimum value of RSRPs or SINRs of the CSI-RS resource, and the third number is a positive integer.

In an embodiment, after the terminal determines the recommended resource pairing group, the recommended CSI-RS resources in the recommended resource pairing group may also be determined. Therefore, the terminal may more flexibly select the corresponding resource pairing group and report the CSI-RS resources in the resource pairing group to the network device. The specific implementation includes the following steps.

After determining the recommended resource pairing group, the terminal may also need to determine the recommended CSI-RS resources in the resource pairing group.

Based on sorting of the RSRPs of each CSI-RS resource in each recommended resource pairing group, the front third number of CSI-RS resources having the highest RSRP are recommended and reported.

Or, based on sorting of the SINRs of each CSI-RS resource in each recommended resource pairing group, the front third number of CSI-RS resources having the highest SINR are recommended and reported.

Or, by comparing the RSRPs and the SINRs of each CSI-RS resource in each recommended resource pairing group with the second preset minimum RSRP/SINR threshold, one or more CSI-RS resources having RSRPs or SINRs greater than or equal to the second preset minimum RSRP/SINR threshold in each recommended resource pairing group are recommended. The third number may be preset, configured by high layer signaling transmitted from the base station, or determined by the terminal itself.

In addition, if the network device does not configure the above resource pairing group information, randomly selects several CSI-RS resources from the above CSI-RS resource set and transmits them to the terminal through CSI-RS resource configuration, the terminal may determine the above several CSI-RS resources as one resource pairing group.

In the method for reporting the CSI provided by the embodiment of the present application, the corresponding CSI-RS resource configuration and the corresponding CSI reporting configuration are configured by the network device, the CSI-RS resource configuration includes multiple resource pairing groups, and the CSI reporting configuration at least includes a CJT mode, which provides a mode for enhancing CSI measurement feedback for the CJT mode. The terminal may select different resource groups or specific CSI-RS resources within the group for recommendation and reporting based on the above-mentioned CSI-RS resource configuration and the above-mentioned CSI reporting configuration, feed back CSI situations corresponding to different transmission schemes and recommended selections of corresponding resource pairing groups in different transmission schemes, and further feed back a more realistic channel state, which improves the transmission performance during multi-point collaboration, and reduces feedback overhead.

In an embodiment, based on the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining whether second indication information is configured for the multiple resource pairing groups in the CSI-RS resource configuration, where the second indication information is used to indicate a first transmission mode applied when the CSI-RS resource in the resource pairing group is used for measurement, and the first transmission mode includes a single-point transmission mode or a coordinated multi-point transmission mode; and
in case that no second indication information is configured in the CSI-RS resource configuration, based on a transmission scheme configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group; or
in case that the second indication information is configured in the CSI-RS resource configuration, based on a transmission scheme configured in the CSI reporting configuration corresponding to the second indication information, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the CSI reporting configuration includes a configuration of one or more transmission schemes, the transmission scheme includes one or more transmission modes, the transmission mode includes a coordinated multi-point transmission mode or a combination of a single-point transmission mode and a coordinated multi-point transmission mode, the coordinated multi-point transmission mode includes a coherent joint transmission (CJT) and a non-coherent joint transmission (NCJT), and the single-point transmission mode includes a single transmission reception point (STRP).

In an embodiment, after the terminal determines the resource pairing group to be recommended and all CSI-RS resources in the recommended resource pairing group, or the CSI resources in the resource pairing group to be recommended, the CSI of the recommended resource pairing group is necessary to be reported based on the CSI reporting configuration. Before reporting, it is necessary to determine whether the second indication information is configured for multiple resource pairing groups in the CSI-RS resource configuration, that is, to determine whether specific transmission modes of each resource pairing group used for CSI reporting is configured.

If no above second indication information is configured, it is determined that the reporting configuration configured by the network device includes a coordinated multi-point transmission mode, or a combination of a single-point transmission mode and a coordinated multi-point transmission mode. The coordinated multi-point transmission mode includes CJT and NCJT. Based on the above transmission mode, the CSI-RS resources allocated in the recommended resource pairing group are used for measurement and reporting.

If the second indication information is configured, the network device may configure the corresponding CSI reporting configuration based on the second indication information. The terminal may determine to report the CSI corresponding to the resource pairing group based on the CSI reporting configuration corresponding to the second indication information after performing the joint channel measurement by using the resource pairing group. The transmission mode specifically applied to the resource pairing group indicated by the second indication information includes any one of a STRP, an NCJT or a CJT. The transmission mode specifically applied to the resource pairing group indicated by the second indication information is taken as the target transmission mode.

One or more transmission schemes are configured in the CSI reporting configuration corresponding to the second indication information. Each transmission scheme at least includes the target transmission mode. For example, the second indication information indicates that the resource pairing group is applied to a CJT. The configuration of the transmission scheme included in the CSI reporting configuration corresponding to the second indication information includes a CJT, a CJT and an NCJT, a CJT and a STRP, and a CJT, an NCJT and a STRP, that is, the resource pairing group applied to the CJT mode, when reporting the CSI of the resource pairing group, the adopted transmission schemes include a CJT, a CJT and an NCJT, a CJT and a STRP, and a CJT, an NCJT and a STRP.

In addition, the second indication information may also be configured with the CJT/NCJT mode. Therefore, when the terminal performs joint channel measurement, multiple possible cases may exist.

Case 1: both the CJT mode and the NCJT mode may be used. After performing measurement, the terminal performs CSI reporting in a transmission mode corresponding to an optimal measurement result.

Case 2: only the CJT mode or the NCJT mode may be used. After performing measurement, the terminal performs CSI reporting in a transmission mode corresponding to an optimal measurement result.

Case 3: only the transmission mode of the CJT combined with the STRP or the NCJT combined with the STRP may be used. After measurement, the terminal performs CSI reporting based on the corresponding transmission mode having a better measurement result.

In an embodiment, in case that no second indication information is configured in the CSI-RS resource configuration, based on the transmission scheme configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining all transmission schemes for CSI reporting as a first transmission scheme set based on the CSI reporting configuration; and
based on whether a restriction indicator and the first transmission scheme set are configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the restriction indicator is used to indicate that rank indicators (RIs) of different transmission modes included in the transmission scheme are the same.

In an embodiment, when no second indication information is configured for the recommended resource pairing group, a set of all transmission modes configured therein is determined based on the CSI reporting configuration configured by the network side, and taken as the first transmission scheme set.

Whether the restriction indicator is configured in the CSI reporting configuration is further determined. The restriction indicator is used to indicate that the RIs of different transmission modes are the same, to reduce the RI feedback overhead.

The first transmission scheme set is determined based on whether the restriction indicator is configured in the CSI reporting configuration and the CSI reporting configuration, and the joint measurement is performed by using all CSI-RS resources included in the recommended resource pairing group, or part of the CSI-RS resources included in the recommended resource pairing group, that is, one or more CSI resources in the resource pairing group are used. A joint measurement result is reported to the network device based on the CSI reporting configuration.

In an embodiment, based on whether the restriction indicator is configured in the CSI reporting configuration and the first transmission scheme set, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining a target resource set based on all CSI-RS resources included in the recommended resource pairing group or the one or more recommended CSI-RS resources in the recommended resource pairing group;
in case that no restriction indicator is configured, reporting CSI obtained by performing measurement using the target resource set in each transmission mode included in the first transmission scheme set respectively; or
in case that the restriction indicator is configured, reporting CSI obtained by performing measurement using the target resource set jointly in each transmission mode included in the first transmission scheme set; and
reporting the recommended resource pairing group corresponding to the CSI, and/or, the one or more recommended CSI-RS resources in the recommended resource pairing group.

In an embodiment, the terminal determines the recommended resource pairing group and/or part of the CSI-RS resources recommended in the recommended resource pairing group. The part of the CSI-RS resources may be one or more CSI-RS resources. The target resource set is determined based on all CSI-RS resources included in the recommended resource pairing group or part of the CSI-RS resources recommended in the recommended resource pairing group.

The terminal further determines whether to report the CSI jointly or respectively based on whether the network side configures the restriction indicator. The restriction indicator is used to restrict the RIs of different transmission points to be the same to reduce the RI feedback overhead.

In case that the restriction indicator is configured, that is, joint channel measurement is performed in different transmission modes, at different transmission points by using a common CSI-RS resource. In the transmission mode included in the CSI reporting configuration, a joint reporting mode is used for reporting the CSI corresponding to the above target resource set.

In case that no restriction indicator is configured, that is, joint channel measurement is performed indifferent transmission modes, at different transmission points by using a corresponding CSI-RS resource. In the transmission mode included in the CSI reporting configuration, a respective reporting mode is used for reporting the CSI corresponding to the above target resource set.

In an embodiment, in case that no restriction indicator is configured, reporting the CSI obtained by performing measurement using the target resource set in each transmission mode included in the first transmission scheme set respectively includes:
in case that a transmission mode included in the first transmission scheme set is a single transmission mode, reporting measurement values of a pre-coding matrix indicator (PMI) and a layer indicator (LI) obtained by performing measurement using each CSI-RS resource in the target resource set, and measurement values of an RI and a channel quality indicator (CQI) obtained by performing measurement using the target resource set based on the single transmission mode; or
in case that a transmission mode included in the first transmission scheme set is a combined transmission mode, reporting measurement values of a PMI and an LI obtained by performing measurement using each CSI-RS resource in the target resource set, and measurement values of an RI and a CQI obtained by performing measurement using the target resource set based on each transmission mode included in the combined transmission mode respectively,
where the combined transmission mode at least includes a CJT, and the single transmission mode includes any one of a CJT, an NCJT or a STRP.

In an embodiment, when the network side does not configure the restriction indicator in the CSI reporting configuration, the transmission mode included in the CSI reporting configuration is determined. The transmission mode may be a single transmission mode or a combined transmission mode. The single transmission mode includes any one of a CJT, an NCJT or a STRP. The combined transmission mode at least includes a CJT, that is, it may be a CJT and an NCJT, or a CJT and a STRP, or a CJT, an NCJT and a STRP.

In the single transmission mode, channel measurement is performed respectively in the single transmission mode, and the measurement values of the PMI and the LI for each CSI-RS resource in the target resource set are reported, that is, the corresponding PMI and the corresponding LI in the corresponding transmission mode are reported at each transmission point. The RI and the CQI are reported based on the target resource set. For different transmission modes, the number of corresponding RI measurement values may be different. For example, in the NCJT mode, the number of reported measurement values is the same as the number of CSI-RS resources in the target resource set.

In the combined transmission mode, corresponding measurement values of the PMI, the LI, the RI and the CQI are reported respectively based on each transmission mode included in the combined transmission mode. That is, each transmission mode corresponds to the corresponding CSI measurement value. For example, if the combined transmission mode is {transmission mode 1, transmission mode 2, transmission mode 3}, the corresponding PMI measurement value further includes three parts: {PMI1, PMI2, PMI3}. The PMI1 corresponds to the measurement value of the transmission mode 1, the PMI2 corresponds to the measurement value of the transmission mode 2, and the PMI3 corresponds to the measurement value of the transmission mode 3. Similarly, measurement values of other reported parameters LI, RI and CQI also have such a corresponding relationship.

In an embodiment, in case that the restriction indicator is configured, reporting CSI obtained by performing measurement using the target resource set jointly in each transmission mode included in the first transmission scheme set includes:
in case that a transmission mode included in the first transmission scheme set is a single transmission mode, reporting measurement values of a PMI and an LI obtained by performing measurement using each CSI-RS resource in the target resource set, and measurement values of an RI and a CQI obtained by performing measurement using the target resource set based on the combined transmission mode; or
in case that a transmission mode included in the first transmission scheme set is a combined transmission mode, reporting a maximum value among measurement values of a PMI and an LI obtained by performing measurement using each CSI-RS resource in the target resource set, and measurement values of an RI and a CQI obtained by performing measurement using the target resource set based on each transmission mode included in the combined transmission mode,
where the combined transmission mode at least includes a CJT, and the single transmission mode includes any one of a CJT, an NCJT or a STRP.

In an embodiment, when the network device has configured the restriction indicator in the CSI reporting configuration, the first transmission scheme set composed of all transmission schemes included in the CSI reporting configuration is determined. The first transmission scheme set may include a single transmission mode or a combined transmission mode. The single transmission mode includes any one of a CJT, an NCJT or a STRP, and the combined transmission mode at least includes a CJT, that is, it may be a CJT and an NCJT, or a CJT and a STRP, or a CJT, an NCJT and a STRP.

In the single transmission mode, channel measurement is performed based on the single transmission mode, and the measurement values of the PMI and the LI for each CSI-RS resource in the target resource set are reported, that is, the corresponding PMI and the corresponding LI in the corresponding transmission mode are reported at each transmission point. The RI and the CQI are reported based on the target resource set. For different transmission modes, the number of corresponding RI measurement values may be different. For example, in the NCJT mode, the number of reported measurement values is the same as the number of CSI-RS resources in the target resource set.

In the combined transmission mode, the measurement values of the PMI, the LI, the RI and the CQI corresponding to each transmission mode included in the combined transmission mode are determined respectively. In case of determining that the CSI measurement value corresponding to a certain transmission mode is the largest, measurement values of the PMI, the LI, the RI and the CQI corresponding to this transmission mode are reported. For example, if the combined transmission mode is {transmission mode 1, transmission mode 2, transmission mode 3}, the corresponding CSI measurement value further includes three parts: {CSI1, CSI2, CSI3}. The CSI1 corresponds to the measurement value in the transmission mode 1, the CSI2 corresponds to the measurement value in the transmission mode 2, and the CSI3 corresponds to the measurement value in the transmission mode 3. The channel state characterized by the measurement value of the CSI1 is the best, and measurement values of the PMI, the LI, the RI and the CQI in the transmission mode corresponding to the CSI1 are reported.

In an embodiment, the method further includes:
comparing CSI obtained by performing measurement using each CSI-RS resource in the target resource set in each transmission mode included in the first transmission scheme set, and determining a first CSI-RS resource in the target resource set used when CSI characterizing a best transmission performance is obtained; and
reporting the CSI corresponding to the first CSI-RS resource.

In an embodiment, in each transmission mode included in the first transmission scheme set, the target resource set is used for measurement, the CSI corresponding to each CSI-RS resource is determined, the CSI corresponding to each CSI-RS resource is compared, the CSI-RS resource corresponding to CSI characterizing the best transmission performance is determined, and the CSI corresponding to the CSI resource having the best transmission performance is reported.

In an embodiment, in case that the second indication information is configured in the CSI-RS resource configuration, based on the transmission scheme configured in the CSI reporting configuration corresponding to the second indication information, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining a target transmission mode applied to the recommended resource pairing group and a CSI reporting configuration corresponding to the target transmission mode based on the second indication information;
determining a second transmission scheme set corresponding to each target transmission mode based on the target transmission mode and the CSI reporting configuration corresponding to the target transmission mode; and
based on whether a restriction indicator and the second transmission scheme set are configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the CSI reporting configuration corresponding to the target transmission mode includes multiple transmission schemes, each transmission scheme at least includes the target transmission mode, and the target transmission mode includes a STRP, an NCJT or a CJT; and
the restriction indicator is used to indicate that RIs of different transmission modes included in the transmission scheme are the same.

In an embodiment, a transmission mode for a specific application is also configured for each resource pairing group in the CSI-RS resource configuration configured by the network side. In an embodiment, the transmission mode for the specific application may be determined as any one of a CJT, an NCJT or a STRP by configuring the second indication information. In addition, the network side may also need to determine its corresponding CSI reporting configuration based on the second indication information and report it to the terminal.

The terminal receives information about the CSI-RS resource configuration configured with the second indication information and the corresponding CSI reporting configuration, and determines the transmission mode applied to each resource pairing group in the CSI-RS resource configuration based on the second indication information and takes the determined transmission mode as the target transmission mode. The target transmission mode includes any one of a STRP, an NCJT or a CJT.

In addition, a set of all transmission modes included in the corresponding CSI reporting configuration is determined based on the target transmission mode, and is taken as the second transmission scheme set.

Further, whether the restriction indicator is configured in the CSI reporting configuration needs to be determined. The restriction indicator is used to restrict the RIs of different transmission points to be the same to reduce the RI feedback overhead. The reported content based on the restriction indicator and the determined second transmission scheme set may specifically include any one of the following.

A first type: the CSI corresponding to the recommended resource pairing group and the recommended resource pairing group.

A second type: the CSI corresponding to the recommended resource pairing group and one or more recommended CSI-RS resources in the recommended resource pairing group.

A third type: the CSI corresponding to the recommended resource pairing group and the recommended resource pairing group and one or more CSI-RS resources in the recommended resource pairing group.

In an embodiment, determining the second transmission scheme set corresponding to each target transmission mode based on the target transmission mode and the CSI reporting configuration corresponding to the target transmission mode includes:
in case that the target transmission mode is a STRP, the second transmission scheme set includes a STRP;
in case that the target transmission mode is a CJT, the second transmission scheme set includes a CJT, a CJT and a STRP, and a CJT, an NCJT and a STRP; or
in case that the target transmission mode is an NCJT, the second transmission scheme set includes an NCJT, an NCJT and a STRP, and a CJT, an NCJT and a STRP.

In an embodiment, the transmission mode specifically applied to the resource pairing group in the CSI-RS resource configuration is determined. In case that the transmission mode is a STRP, the second transmission scheme set corresponding to the corresponding CSI reporting configuration includes a STRP. In case that the transmission mode is a CJT, the second transmission scheme set corresponding to the corresponding CSI reporting configuration includes a CJT, a CJT and a STRP, and a CJT, an NCJT and a STRP. In case that the transmission mode is an NCJT, the second transmission scheme set corresponding to the corresponding CSI reporting configuration includes an NCJT, an NCJT and a STRP, and a CJT, an NCJT and a STRP.

In an embodiment, based on whether the restriction indicator is configured in the CSI reporting configuration and the second transmission scheme set, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
in case that the second transmission scheme set includes the CJT, determining the target resource set based on all CSI-RS resources included in the recommended resource pairing group or multiple combinations of one or more recommended CSI-RS resources in the recommended resource pairing group; or
in case that the second transmission scheme set does not include the CJT, determining the target resource set based on all CSI-RS resources included in the recommended resource pairing group or one or more recommended CSI-RS resources in the recommended resource pairing group;
in case that no restriction indicator is configured, reporting CSI obtained by performing measurement using the target resource set in each transmission mode included in the second transmission scheme set respectively based on the second transmission scheme set; or
in case that the restriction indicator is configured, reporting CSI obtained by performing measurement using the target resource set in each transmission mode included in the second transmission scheme set jointly based on the second transmission scheme set; and
reporting the recommended resource pairing group corresponding to the CSI, and/or, the one or more recommended CSI-RS resources in the recommended resource pairing group.

In an embodiment, the terminal determines the recommended resource pairing group, and/or the recommended part of the CSI-RS resources in the recommended resource pairing group. The part of the CSI-RS resources may be one or more CSI-RS resources. The terminal determines first resource set based on all CSI-RS resources included in the recommended resource pairing group, or the recommended part of the CSI-RS resources in the recommended resource pairing group.

In case that the second transmission scheme set includes a CJT, for example, the second transmission scheme set is a CJT, or a CJT and an NCJT, or a CJT and a STRP, or a CJT, an NCJT and a STRP, the target resource set is of multiple combinations of CSI-RS resources included in the first resource set, that is, it may be a full set or a subset of the first resource set.

In case that the second transmission scheme set does not include a CJT, the target resource set is determined to be the first resource set.

After the terminal has determined a specific transmission mode set used by each resource pairing group in the CSI-RS resource configuration, that is, the second transmission scheme set, it needs to determine whether the restriction indicator is configured in the CSI reporting configuration. The restriction indicator is used to restrict the RIs of different transmission points to be the same to reduce the RI feedback overhead. That is, the terminal reports the CSI corresponding to the target resource set jointly or respectively.

In case that the restriction indicator is configured, that is, joint channel measurement is performed using a common CSI-RS resource in different transmission modes, at different transmission points. In the transmission mode included in the CSI reporting configuration, a joint reporting mode is used for reporting the CSI corresponding to the above target resource set.

In case that no restriction indicator is configured, that is, joint channel measurement is performed using a corresponding CSI-RS resource in different transmission modes, at different transmission points. In the transmission mode included in the CSI reporting configuration, a respective reporting mode is used for reporting the CSI corresponding to the above target resource set.

In an embodiment, in case that no restriction indicator is configured, reporting the CSI obtained by performing measurement using the target resource set in each transmission mode included in the second transmission scheme set respectively based on the second transmission scheme set includes:
in case that the transmission mode included in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode included in the second transmission scheme set is a combined transmission mode, based on each transmission mode included in the combined transmission mode respectively, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set,
where the combined transmission mode at least includes a CJT, and the single transmission mode includes any one of a CJT, an NCJT or a STRP; and
the second resource set is the CSI-RS resource set with a largest number of CSI-RS resources in the target resource set.

In an embodiment, in case that the network side does not configure the restriction indicator in the CSI reporting configuration, the transmission mode included in the CSI reporting configuration is determined. The transmission mode may be a single transmission mode or a combined transmission mode. The single transmission mode includes any one of a CJT, an NCJT or a STRP. The combined transmission mode at least includes a CJT, that is, it may be a CJT and an NCJT, or a CJT and a STRP, or a CJT, an NCJT and a STRP.

In the single transmission mode, channel measurement is performed respectively based on the single transmission mode, and the measurement values of the PMI and the LI for each CSI-RS resource in the target resource set are reported, that is, the corresponding PMI and the corresponding LI in the corresponding transmission mode are reported at each transmission point. The RI and the CQI are reported based on the target resource set. For different transmission modes, the number of corresponding RI measurement values may be different. For example, in the NCJT mode, the number of reported measurement values is the same as the number of CSI-RS resources in the target resource set. In the CJT mode, the number of CSI-RS resources in the target resource set is A, and the RI or the CQI of the corresponding CSI-RS resource may be determined based on any one or more of the A CSI-RS resources. For example, in the CJT mode, there are three combinations of CSI-RS resources in the target resource set, such as combination 1, combination 2 and combination 3. In the combination 1, corresponding CSI values include {PMI1, LI1, RI1, CQI1}. In the combination 2, corresponding CSI values include {PMI2, LI2, RI2, CQI2}. In the combination 3, corresponding CSI values include {PMI3, LI3, RI3, CQI3}. If the combination 3 includes the largest number of CSI-RS resources, when the terminal reports the PMI and the LI in the CSI, the reporting may be performed respectively based on the PMI and LI the determined by the combination 1, the combination 2 and the combination 3 of the target resource set, or {PMI3, LI3} may be reported.

In the combined transmission mode, corresponding measurement values of the PMI, the LI, the RI and the CQI are reported respectively based on each transmission mode included in the combined transmission mode. That is, each transmission mode corresponds to the corresponding CSI measurement value. For example, if the combined transmission mode is {transmission mode 1, transmission mode 2, transmission mode 3}, the corresponding PMI measurement value further includes three parts: {PMI1, PMI2, PMI3}. The PMI1 corresponds to the measurement value of the transmission mode 1, the PMI2 corresponds to the measurement value of the transmission mode 2, and the PMI3 corresponds to the measurement value of the transmission mode 3. Similarly, measurement values of other reported parameters LI, RI and CQI also have such a corresponding relationship. In case that the combined transmission mode includes a CJT mode, assuming that there are B CSI-RS resources in the target resource set, the RI or the CQI of the CSI-RS resources transmitted in the CJT mode may be determined based on any one or more of the B CSI-RS resources. For example, in the CJT mode, there are three combinations of CSI-RS resources in the target resource set, such as combination 1, combination 2 and combination 3. In the combination 1, corresponding CSI values include {PMI1, LI1, RI1, CQI1}. In the combination 2, corresponding CSI values include {PMI2, LI2, RI2, CQI2}. In the combination 3, corresponding CSI values include {PMI3, LI3, RI3, CQI3}. If the combination 3 includes the largest number of CSI-RS resources, when the terminal reports the PMI and the LI in the CSI, the reporting may be performed respectively based on the PMI and the LI determined by the combination 1, the combination 2 and the combination 3 of the target resource set, or {PMI3, LI3} may be reported.

In an embodiment, in case that the restriction indicator is configured, reporting the CSI obtained by performing measurement using the target resource set in each transmission mode included in the second transmission scheme set jointly based on the second transmission scheme set includes:
in case that the transmission mode included in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode included in the second transmission scheme set is a combined transmission mode, based on each transmission mode included in the combined transmission mode, reporting a maximum value among measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in the target resource set, and measurement values of an RI and a CQI obtained by performing measurement using the target resource set,
where the combined transmission mode at least includes a CJT, and the single transmission mode includes any one of a CJT, an NCJT or a STRP; and
the second resource set is the CSI-RS resource set with a largest number of CSI-RS resources in the target resource set.

In an embodiment, when the network device has configured the restriction indicator in the CSI reporting configuration, the second transmission scheme set composed of all transmission modes included in the CSI reporting configuration is determined. The second transmission scheme set may include a single transmission mode or a combined transmission mode. The single transmission mode includes any one of a CJT, an NCJT or a STRP. The combined transmission mode at least includes a CJT, that is, it may be a CJT and an NCJT, or a CJT and a STRP, or a CJT, an NCJT and a STRP.

In the single transmission mode, channel measurement is performed based on the single transmission mode, and the measurement values of the PMI and the LI for each CSI-RS resource in the target resource set are reported, that is, the corresponding PMI and the corresponding LI in the corresponding transmission mode are reported at each transmission point. The RI and the CQI are reported based on the target resource set. For different transmission modes, the number of corresponding RI measurement values may be different. For example, in the NCJT mode, the number of reported measurement values is the same as the number of CSI-RS resources in the target resource set. In the CJT mode, the number of CSI-RS resources in the target resource set is A, and the RI or CQI of the corresponding CSI-RS resource may be determined based on any one or more of the A CSI-RS resources.

In the combined transmission mode, the measurement values of the PMI, the LI, the RI and the CQI corresponding to each transmission mode included in the combined transmission mode are determined respectively. In case of determining that the CSI measurement value corresponding to a certain transmission mode is the largest, measurement values of the PMI, the LI, the RI and the CQI corresponding to this transmission mode are reported. For example, if the combined transmission mode is {transmission mode 1, transmission mode 2, transmission mode 3}, the corresponding CSI measurement value further includes three parts: {CSI1, CSI2, CSI3}. The CSI1 corresponds to the measurement value of the transmission mode 1, the CSI2 corresponds to the measurement value of the transmission mode 2, and the CSI3 corresponds to the measurement value of the transmission mode 3. The state of the channel characterized by the measurement value of the CSI1 is the best, and measurement values of the PMI, the LI, the RI and the CQI in the transmission mode corresponding to the CSI1 are reported. In case that the combined transmission mode includes a CJT mode, assuming that there are B CSI-RS resources in the target resource set, the RI or the CQI of the CSI-RS resources transmitted in the CJT mode may be determined based on any one or more of the B CSI-RS resources.

In an embodiment, the method further includes:
comparing CSI obtained by performing measurement using each CSI-RS resource in the target resource set in each transmission mode included in the second transmission scheme set, and determining a first CSI-RS resource in the target resource set used when the CSI characterizing a best transmission performance is obtained; and
reporting the CSI corresponding to the first CSI-RS resource.

In an embodiment, when each resource pairing group in the CSI-RS resource configuration is configured with an applied specific transmission mode, all transmission modes in the corresponding CSI reporting configuration are determined as the second transmission mode set. In each transmission mode included in the second transmission scheme set, the target resource set is used for measurement, the CSI corresponding to each CSI-RS resource is determined, the CSI corresponding to each CSI-RS resource is compared, the CSI-RS resource corresponding to CSI characterizing the best transmission performance is determined, and the CSI corresponding to the CSI resource having the best transmission performance is reported.

In the method for reporting the CSI provided by the embodiment of the present application, the corresponding CSI-RS resource configuration and the corresponding CSI reporting configuration are configured by the network device, the CSI-RS resource configuration includes multiple resource pairing groups, and the CSI reporting configuration at least includes a CJT mode, which provides a mode for enhancing CSI measurement feedback for the CJT mode. The terminal may feed back CSI situations corresponding to different transmission schemes and recommended selections of corresponding resource pairing groups in different transmission schemes based on the above-mentioned CSI-RS resource configuration and the above-mentioned CSI reporting configuration, and further feed back a more realistic channel state, which improves the transmission performance during multi-point collaboration, and reduces feedback overhead.

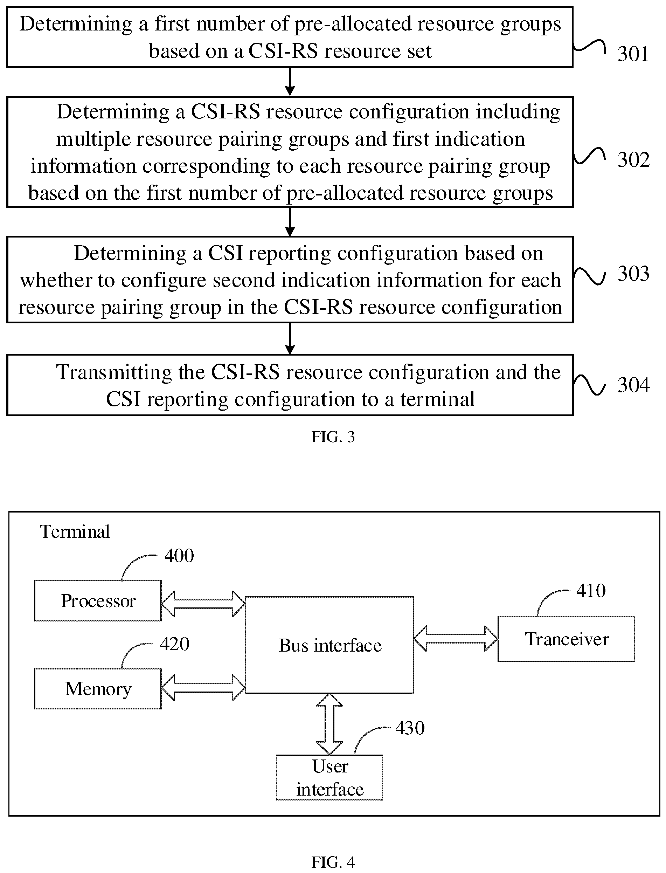

FIG. 3 is a second schematic flowchart of a method for reporting CSI according to an embodiment of the present application. As shown in FIG. 3, the method may be performed by a network device (e.g., a base station), and includes the following steps.

Step 301: determining a first number of pre-allocated resource groups based on a CSI-RS resource set.

Step 302: determining a CSI-RS resource configuration including multiple resource pairing groups and first indication information corresponding to each resource pairing group based on the first number of pre-allocated resource groups, where the first indication information is used to indicate the resource pairing group and/or indicate each CSI-RS resource in the resource pairing group, and the resource pairing group includes CSI-RS resources selected from different pre-allocated resource groups.

In an embodiment, the network device divides the CSI-RS resource set including multiple CSI-RS resources into M groups to form M CSI-RS resource groups, and selects one or more CSI-RS resources from different CSI-RS resource groups to form a resource pairing group. That is, each CSI-RS resource in the resource pairing group is selected from different CSI-RS resource groups. Usually, M is the number of TRPs. The above procedure of dividing the CSI-RS resource set into M groups means allocating all CSI-RS resources to different TRPs, and each corresponding resource pairing group selects one or more CSI-RS resources allocated to different TRPs from the CSI-RS resources allocated to each TRP. Each resource pairing group has a corresponding index value that may be one-dimensional, two-dimensional or three-dimensional. In case that the index value is one-dimensional, it indicates a specific resource pairing group. In case that the index value is two-dimensional, it indicates a specific resource pairing group and a CSI-RS resource group to which each CSI-RS resource in the resource pairing group belongs, that is, a TRP to which each CSI-RS resource in the resource pairing group belongs. In case that the index value is three-dimensional, it indicates an identifier of the resource pairing group, a CSI-RS resource group to which each CSI-RS resource in the resource pairing group belongs, and a transmission mode applied to all CSI-RS resources in the resource pairing group. The transmission mode applied to the resource pairing group may also be configured in other modes, and is necessarily configured through the third parameter of the index value. For example, indication information may be additionally configured to indicate the transmission mode applied to the resource pairing group.

Step 303: determining a CSI reporting configuration based on whether to configure second indication information for each resource pairing group in the CSI-RS resource configuration, where the CSI reporting configuration includes a configuration for different transmission schemes, the transmission scheme includes a coordinated multi-point transmission mode or a combination of a single-point transmission mode and a coordinated multi-point transmission mode, the coordinated multi-point transmission mode includes a CJT and an NCJT, the single-point transmission mode includes a STRP, the second indication information is used to indicate that the resource pairing group is applied to a first transmission mode, and the first transmission mode includes a single-point transmission mode or a coordinated multi-point transmission mode.

Step 304: transmitting the CSI-RS resource configuration and the CSI reporting configuration to a terminal.

In addition, the network device may configure the CSI reporting configuration for the terminal to report a joint channel measurement result based on requirements, the CSI reporting configuration includes one or more transmission schemes, and the transmission scheme may be any one of a STRP, a CJT or an NCJT or a combination thereof.

Based on requirements, the network side may configure whether to configure the second indication information for each resource pairing group in the CSI-RS resource configuration, and determine the CSI reporting configuration. The second indication information is used to indicate that the resource pairing group is applied to a single-point transmission mode or a coordinated multi-point transmission mode. The single-point transmission mode is a single transmission reception point/single-point transmission (STRP), and the coordinated multi-point transmission mode is a multi-transmission reception point/multi-point coordinated transmission (MTRP), and the coordinated multi-point transmission includes a CJT and an NCJT.

After determining the above-mentioned CSI-RS resource configuration and CSI reporting configuration, is the network device transmits them to the terminal. The terminal uses the CSI-RS resources included in the CSI-RS resource configuration to perform joint channel measurement, determines the recommended resource pairing group and/or one or more CSI-RS resources in the recommended resource pairing group, and reports the CSI corresponding to the recommended resource pairing group based on the CSI reporting configuration.

In the method for reporting the CSI provided by the embodiment of the present application, the corresponding CSI-RS resource configuration and the corresponding CSI reporting configuration are configured by the network device, the CSI-RS resource configuration includes multiple resource pairing groups, and the CSI reporting configuration at least includes a CJT mode, which provides a mode for enhancing CSI measurement feedback for the CJT mode. The terminal may feed back CSI situations corresponding to different transmission schemes and recommended selections of corresponding resource pairing groups in different transmission schemes based on the above-mentioned CSI-RS resource configuration and the above-mentioned CSI reporting configuration, and further feed back a more realistic channel state, which improves the transmission performance during multi-point collaboration, and reduces feedback overhead.

In addition, the network side may also randomly select several CSI-RS resources from the CSI-RS resource set, take them as a CSI-RS resource configuration, which is not in a form of the resource pairing group, and transmit it to the terminal. The terminal regards the several CSI-RS resources as a resource pairing group, and reports the CSI corresponding to each CSI-RS resource in the resource pairing group in combination with the corresponding CSI reporting configuration. Specific values of the several may be determined based on requirements of the network side.

In an embodiment, determining the CSI reporting configuration based on whether to configure the second indication information for each resource pairing group in the CSI-RS resource configuration includes:
in case that the second indication information is configured, determining the CSI reporting configuration corresponding to the second indication information based on the second indication information, where the CSI reporting configuration corresponding to the second indication information includes multiple transmission schemes, each transmission scheme at least includes the first transmission mode; or
in case that no second indication information is configured, determining that the CSI reporting configuration includes a configuration of one or more transmission schemes, where the transmission scheme includes a coordinated multi-point transmission mode, or a combination of a single-point transmission mode and a coordinated multi-point transmission mode, the coordinated multi-point transmission mode includes a CJT and an NCJT, and the single-point transmission mode includes a STRP.

In an embodiment, the network device may determine whether it is necessary to configure the second indication information for each resource pairing group included in the CSI-RS resource configuration based on actual application requirements or network load, etc., to indicate a transmission mode of a specific application of the resource pairing group. In case that the second indication information is configured for the resource pairing group, the corresponding CSI reporting configuration needs to be configured based on the second indication information. The CSI reporting configuration corresponding to the second indication information includes multiple transmission schemes, and each transmission scheme at least includes the transmission mode indicated by the second indication information. For example, in case that the second indication information indicates that the resource pairing group is applied to the CJT mode, the corresponding CSI reporting configuration includes a CJT, a CJT and a STRP, and a CJT, an NCJT and a STRP, that is, each transmission scheme in the CSI reporting configuration at least includes a CJT mode.

In case that the network side determines not to configure the second indication information, the CSI reporting configuration includes the configuration of one or more transmission schemes, and the transmission scheme may include a coordinated multi-point transmission mode, or a combination of a single-point transmission mode and a coordinated multi-point transmission mode. The coordinated multi-point transmission mode includes a CJT and an NCJT, and the single-point transmission mode includes a STRP. That is, an NCJT, a CJT, an NCJT and a STRP, a CJT and a STRP, and a CJT, an NCJT and a STRP may be included.

In an embodiment, determining the CSI reporting configuration corresponding to the second indication information based on the second indication information includes:
in case that the second indication information indicates that the first transmission mode applied to the resource pairing group is a STRP, a transmission scheme in the CSI reporting configuration corresponding to the second indication information is a STRP;
in case that the second indication information indicates that the first transmission mode applied to the resource pairing group is a CJT, a transmission scheme in the CSI reporting configuration corresponding to the second indication information includes a CJT, a CJT and a STRP, and a CJT, an NCJT and a STRP; and
in case that the second indication information indicates that the first transmission mode applied to the resource pairing group is an NCJT, a transmission scheme in the CSI reporting configuration corresponding to the second indication information includes an NCJT, an NCJT and a STRP, and a CJT, an NCJT and a STRP.

In an embodiment, based on the second indication information configured for each resource pairing group in the CSI-RS resource configuration, the target transmission mode specifically applied to the resource pairing group is determined, and the corresponding CSI reporting configuration is determined based on the target transmission mode. The specific case is as follows.

In case that the second indication information indicates that the transmission mode applied to the resource pairing group is a CJT in the coordinated multi-point transmission mode, the corresponding transmission schemes included in the CSI reporting configuration include a CJT, a CJT and a STRP, and a CJT, an NCJT and a STRP.

In case that the second indication information indicates that the transmission mode applied to the resource pairing group is an NCJT in the coordinated multi-point transmission mode, the corresponding transmission scheme in the CSI reporting configuration includes a STRP, and may further include a combination of a STRP and a coordinated multi-point transmission mode.

In an embodiment, the CSI reporting configuration further includes a restriction indicator, and the restriction indicator is used to indicate the terminal to report CSI obtained by performing measurement using the resource pairing group in each transmission mode respectively, or to report CSI obtained by performing measurement using the resource pairing group in each transmission mode jointly.

In an embodiment, in order to reduce the RI feedback overhead, the network side may configure the restriction indicator to limit the RIs of different transmission points to be the same. In an embodiment, in a combined transmission mode, a joint reporting mode may be adopted to report the CSI corresponding to the transmission mode characterizing the best channel quality measurement result. Similarly, in a single transmission mode, the restriction indicator may also be configured, and the corresponding function is the same.

In the method for reporting the CSI provided by the embodiment of the present application, the corresponding CSI-RS resource configuration and the corresponding CSI reporting configuration are configured by the network device, the CSI-RS resource configuration includes multiple resource pairing groups, and the CSI reporting configuration at least includes a CJT mode, which provides a mode for enhancing CSI measurement feedback for the CJT mode. The terminal may feed back CSI situations corresponding to different transmission schemes and recommended selections of corresponding resource pairing groups in different transmission schemes based on the above-mentioned CSI-RS resource configuration and the above-mentioned CSI reporting configuration, and further feed back a more realistic channel state, which improves the transmission performance during multi-point collaboration, and reduces feedback overhead.

The method for reporting the CSI provided by the embodiment of the present application is described below with a specific example.

Assuming that the maximum number of transmission points supported by the network is four, the network side divides the CSI reference signal resources in the CSI reference signal resource set used for channel measurement into four groups. That is, all CSI reference signal resources are allocated based on the number of transmission points, and the grouped CSI reference signal resources are paired to obtain resource pairing groups, which may be specifically expressed as *CMR_{i,j}, j* resource index value within the group. The index value represented by i may also represent the corresponding transmission point.
1. The network side configures multiple resource pairing groups, and there is a case of the number of CSI reference signal resources in the resource pairing group being less than the number of transmission nodes.

The network side configures two resource pairing groups CMR: a first resource pairing group is {*CMR*_{1,1}*, CMR*_{2,1}*, CMR*_{3,1}*, CMR*_{4,1}}*,* indicating that group 1 contains CMR transmitted from each transmission point; and a second resource pairing group is { *CMR*_{2,2}, *CMR*_{4,2}}, indicating that group 2 contains CMR transmitted form a transmission point 2 and a transmission point 4.

After receiving the CSI resources configured by the network side, the terminal side receives the CSI-RS resources transmitted from multiple transmission points, and performs joint channel measurement using the CMRs in the two pairing groups based on the above group pairing information.

The terminal side may report the pairing group index value based on the joint channel measurement result of the CMR in each pairing group. Taking the configuration information as an example, if joint measurement performed by the terminal side shows that the CMR transmitted from the transmission point 2 and the transmission point 4 in the second pairing group has better channel state, the UE reports an index value identifier of the second pairing information, and the occupied bit is log (N) = log (2) = 1 bit.

The terminal side reports the CSI based on the CMR resources included in the second pairing information, which may include the following cases. CJT1 and CJT2 also represent CJT modes, and are only used to distinguish that the used CSI-RS resources may be different.

1.1 For the reporting mode including the CJT mode, reporting of a corresponding PMI and a corresponding LI may be based on the full set of CSI-RS resources included in the second resource pairing group, and the reporting of a RI and a CQI is based on multiple combinations of CSI-RS resources included in the second resource pairing group.

In an embodiment, one or more of the following reporting modes may be reported based on the configuration information on the base station side.

Reporting mode 1-1: for the reporting of the PMI and the LI, in case of the CJT1 and the CJT2, a PMI and an LI in case that the largest number of CSI-RS resources are included are reported, regardless of whether part of the CSI-RS resources or all CSI-RS resources of the second resource pairing group are used. The UE reports two PMIs and two LIs.

For the reporting of the PMI and the LI, in case of CJT1: for the *CMR*_{2,2}, one RI and one CQI are reported, or for the *CMR*_{4*,*2}, one RI and one CQI are reported; or for the second resource pairing group, one RI and one CQI are reported.

In case of CJT2: for the *CMR*_{2,2}, one RI and one CQI are reported, or for the *CMR*_{4*,*2}, one RI and one CQI are reported; or for the second resource pairing group, one RI and one CQI are reported.

The CQI is reported in a unit of codeword.

Each PMI/LI corresponds to the optimal precoding recommendation for each transmission point in the group. One RI/CQI corresponds to the optimal recommendation during the CJT.

Reporting mode 1-2: in case of the CJT and the STRP: the UE reports 2+2 PMIs, 1+2 RIs, 2+2 LIs and 1+2 CQIs. The CQI is reported in a unit of codeword.

The first two PMI/LI correspond to the optimal precoding recommendation for each transmission point during the CJT, and the last two PMI/LI correspond to the optimal precoding recommendation for each transmission point of the single-point transmission STRP. The first one RI/CQI corresponds to the RI/CQI recommendation during the CJT, and the last two RI/CQI correspond to the RI/CQI recommendation for each transmission point of the single-point transmission STRP.

The optimal precoding recommendation for the first two PMI/LI corresponding to each transmission point of the CJT specifically includes the following.

In case of the CJT1 and the CJT2, a PMI and an LI in case that the largest number of CSI-RS resources are included are reported, regardless of whether part of the CSI-RS resources or all CSI-RS resources of the second resource pairing group are used. The UE reports two PMIs and two LIs. The RI recommendation for the first one RI/CQI corresponding to the CJT transmission specifically includes the following.

In case of the CJT1: for the *CMR*_{2,2}, one RI and one CQI are reported, or for the *CMR*_{4,2}*,* one RI and one CQI are reported; or for the second resource pairing group, one RI and one CQI are reported.

In case of the CJT2: for the *CMR*_{2,2}, one RI and one CQI are reported, or for the *CMR*_{4,2}*,* one RI and one CQI are reported; or for the second resource pairing group, one RI and one CQI are reported.

Reporting mode 1-3: in case of the CJT and the NCJT: the UE reports 2+2 PMIs, 1+2 RIs, 2+2 LIs, and 1+1 CQIs. The CQI is reported in a unit of codeword.

The first two PMI/LI correspond to the optimal precoding recommendation for each transmission point during the CJT, and the last two PMI/LI correspond to the optimal precoding recommendation for each transmission point during the NCJT. The first one RI corresponds to the RI recommendation during the CJT, and the last two RIs correspond to the RI recommendation for each transmission point during the NCJT. The first one CQI corresponds to the CQI recommendation for each transmission point during the CJT point transmission, and the last one CQI corresponds to the CQI recommendation during the NCJT.

The optimal precoding recommendation for the first two PMI/LI corresponding to each transmission point of the CJT specifically includes: in case of the CJT1 and the CJT2, a PMI and an LI in case that the largest number of CSI-RS resources are included are reported, regardless of whether part of the CSI-RS resources or all CSI-RS resources of the second resource pairing group are used. The UE reports two PMIs and two LIs.

The RI recommendation for the first one RI corresponding to the CJT transmission and the CQI recommendation for the first one CQI corresponding to each transmission point of the CJT point transmission specifically include the following.

In case of the CJT1: for the *CMR*_{2,2}, one RI and one CQI are reported, or for the *CMR*_{4,2}*,* one RI and one CQI are reported; or for the second resource pairing group, one RI and one CQI are reported.

In case of the CJT2: for the *CMR*_{2,2}, one RI and one CQI are reported, or for the *CMR*_{4,2}*,* one RI and one CQI are reported; or for the second resource pairing group, one RI and one CQI are reported.

Reporting mode 1-4: in case of the CJT, the STRP and the NCJT: the UE reports 2+2+2 PMIs, 1+2+2 RIs, 2+2+2 LIs, and 1+2+1 CQIs. The CQI is reported in a unit of codeword.

The first and the second PMI/LI corresponds to the optimal precoding recommendation for each transmission point during the CJT, the third and the fourth PMI/LI corresponds to the optimal precoding recommendation for each transmission point during the STRP, and the fifth and the sixth PMI/LI corresponds to the optimal precoding recommendation for each transmission point during the NCJT. The first RI corresponds to the RI recommendation during the CJT, the second and the third RIs correspond to the RI recommendation for each transmission point of the single-point transmission STRP, and the fourth and the fifth RIs correspond to the RI recommendation for each transmission point during the NCJT. The first CQI corresponds to the CQI recommendation during the CJT, the second and the third CQIs correspond to the CQI recommendation for each transmission point during the STRP, and the fourth CQI corresponds to the CQI recommendation for each transmission point during the NCJT.

The optimal precoding recommendation for the first and the second PMI/LI corresponding to each transmission point of the CJT specifically includes: in case of the CJT1 and the CJT2, a PMI and an LI in case that the largest number of CSI-RS resources are included are reported, regardless of whether part of the CSI-RS resources or all CSI-RS resources of the second resource pairing group are used. The UE reports two PMIs and two LIs.

The RI recommendation for the first RI corresponding to the CJT transmission and the CQI recommendation for the first CQI corresponding to the CJT transmission specifically include the following.

In case of the CJT1: for the *CMR*_{2,2}, one RI and one CQI are reported, or for the *CMR*_{4,2}*,* one RI and one CQI are reported; or for the second resource pairing group, one RI and one CQI are reported.

In case of the CJT2: for the *CMR*_{2,2}, one RI and one CQI are reported, or for the *CMR*_{4,2}*,* one RI and one CQI are reported; or for the second resource pairing group, one RI and one CQI are reported.

Reporting mode 1-5: the UE reports a CSI result of the optimal transmission mode.

If the UE measures different schemes for any one of or combinations of the CJT, the NCJT or the single-point transmission STRP based on the current resource pairing group, and the measurement results show that only the transmission point 2 has the best transmission performance in the single-point transmission STRP, the UE needs to report one PMI, one RI, one LI and one CQI for single-point transmission in the group. The CQI is reported in a unit of codeword.

All the above reporting modes and corresponding reporting parameters may be referred to table 3.

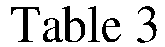

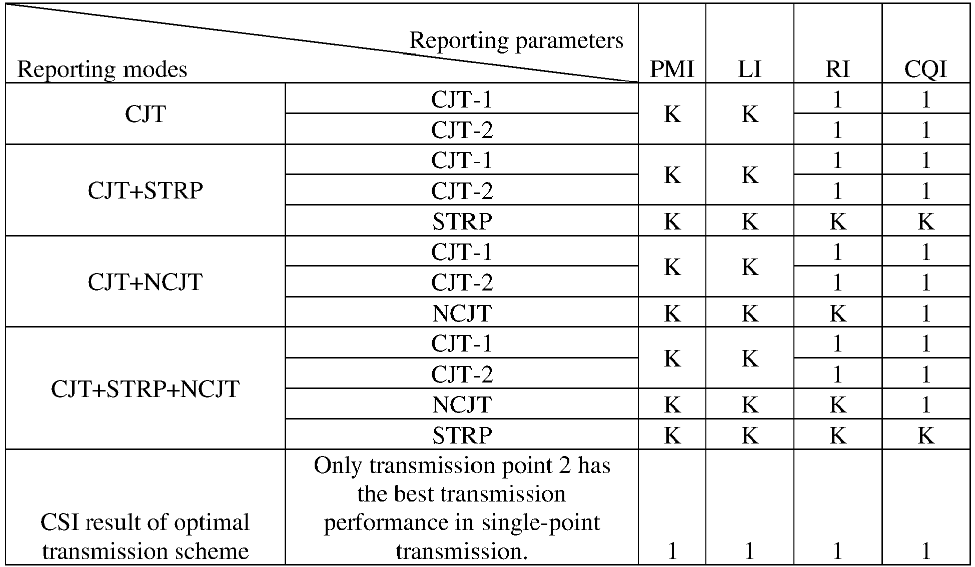

When all CSI-RS resources of the recommended resource pairing group are reported, the K has a value of the total number of all CSI-RS resources included in the recommended resource pairing group. When part of the recommended CSI-RS resources in the recommended resource pairing group are reported, the K has a value of the total number of part of the recommended CSI-RS resources in the recommended resource pairing group.

1.2 For the reporting mode including the CJT mode, reporting of a corresponding PMI and a corresponding LI may be based on multiple combinations of CSI-RS resources included in the second resource pairing group, and the reporting of a RI and a CQI is based on multiple combinations of CSI-RS resources included in the second resource pairing group.

In an embodiment, one or more of the following reporting modes may be reported based on the configuration information on the base station side.

Reporting mode 1-1: for the reporting of the PMI, the LI, the CQI and the RI, in case of the CJT1 and the CJT2, the corresponding CSI is reported based on the multiple combinations of CSI-RS resources included in the second resource pairing group.

For example, when the terminal uses part of the resources in the second resource pairing group, in case of the CJT1 and the CJT2: for the *CMR*_{2,2}, k PMIs, k LIs, one RI and one CQI are reported, for the *CMR*_{4,2}*,* k PMIs, k LIs, one RI and one CQI are reported. The k has a value determined by the number of CSI-RS resources in some resources in the second resource pairing group.

Reporting mode 1-2: in case of the CJT and the STRP: the UE reports 2+2 PMIs, 1+2 RIs, 2+2 LIs and 1+2 CQIs. The CQI is reported in a unit of codeword.

The first two PMI/LI correspond to the optimal precoding recommendation for each transmission point during the CJT, and the last two PMI/LI correspond to the optimal precoding recommendation for each transmission point of the single-point transmission STRP. The first one RI/CQI corresponds to the RI/CQI recommendation during the CJT, and the last two RI/CQI correspond to the RI/CQI recommendation for each transmission point of the single-point transmission STRP.

The CJT mode may be further subdivided into the CJT1 and the CJT2, which includes the following steps.

The CSI-RS resource combination in the second resource pairing group is determined. The CSI-RS resource combination may include multiple combinations, such as combination 1 being *CMR*_{2,2}, and combination 2 being *CMR*_{4,2}.

The PMI and the LI of each transmission point corresponding to the combination 1, as well as the recommended RI and the recommended CQI are reported through the CJT1. Or, the PMI and the LI of each transmission point corresponding to the combination 2, as well as the recommended RI and the recommended CQI through are reported the CJT2.

Reporting mode 1-3: in case of the CJT and the NCJT: the UE reports 2+2 PMIs, 1+2 RIs, 2+2 LIs, and 1+1 CQIs. The CQI is reported in a unit of codeword.

The first two PMI/LI correspond to the optimal precoding recommendation for each transmission point during the CJT, and the last two PMI/LI correspond to the optimal precoding recommendation for each transmission point during the NCJT. The first one RI corresponds to the RI recommendation during the CJT, and the last two RIs correspond to the RI recommendation for each transmission point during the NCJT. The first one CQI corresponds to the CQI recommendation for each transmission point during the CJT point transmission, and the last one CQI corresponds to the CQI recommendation during the NCJT.

The CJT mode may be further subdivided into the CJT1 and the CJT2, which includes the following steps.

The CSI-RS resource combination in the second resource pairing group is determined. The CSI-RS resource combination may include multiple combinations, such as combination 1 being *CMR*_{2,2}, and combination 2 being *CMR*_{4*,*2}.

The PMI and the LI of each transmission point corresponding to the combination 1, as well as the recommended RI and the recommended CQI are reported through the CJT1. Or, the PMI and the LI of each transmission point corresponding to the combination 2, as well as the recommended RI and the recommended CQI through are reported the CJT2.

Reporting mode 1-4: in case of the CJT, the STRP and the NCJT: the UE reports 2+2+2 PMIs, 1+2+2 RIs, 2+2+2 LIs, and 1+2+1 CQIs. The CQI is reported in a unit of codeword.

The first and the second PMI/LI corresponds to the optimal precoding recommendation for each transmission point during the CJT, the third and the fourth PMI/LI corresponds to the optimal precoding recommendation for each transmission point during the STRP, and the fifth and the sixth PMI/LI corresponds to the optimal precoding recommendation for each transmission point during the NCJT. The first RI corresponds to the RI recommendation during the CJT, the second and the third RIs correspond to the RI recommendation for each transmission point of the single-point transmission STRP, and the fourth and the fifth RIs correspond to the RI recommendation for each transmission point during the NCJT. The first CQI corresponds to the CQI recommendation during the CJT, the second and the third CQIs correspond to the CQI recommendation for each transmission point during the STRP, and the fourth CQI corresponds to the CQI recommendation for each transmission point during the NCJT.

The CJT mode may be further subdivided into the CJT1 and the CJT2, which includes the following steps.

The CSI-RS resource combination in the second resource pairing group is determined. The CSI-RS resource combination may include multiple combinations, such as combination 1 being *CMR*_{2,2}, and combination 2 being *CMR*_{4,2}*.*

The PMI and the LI of each transmission point corresponding to the combination 1, as well as the recommended RI and the recommended CQI are reported through the CJT1. Or, the PMI and the LI of each transmission point corresponding to the combination 2, as well as the recommended RI and the recommended CQI through are reported the CJT2.

Reporting mode 1-5: the UE reports a CSI result of the optimal transmission mode.

If the UE measures different schemes for any one of or combinations of the CJT, the NCJT or the single-point transmission STRP based on the current resource pairing group, and the measurement results show that only the transmission point 2 has the best transmission performance in the single-point transmission STRP, the UE needs to report one PMI, one RI, one LI and one CQI for single-point transmission in the group. The CQI is reported in a unit of codeword.

All the above reporting modes and corresponding reporting parameters may be referred to table 4.

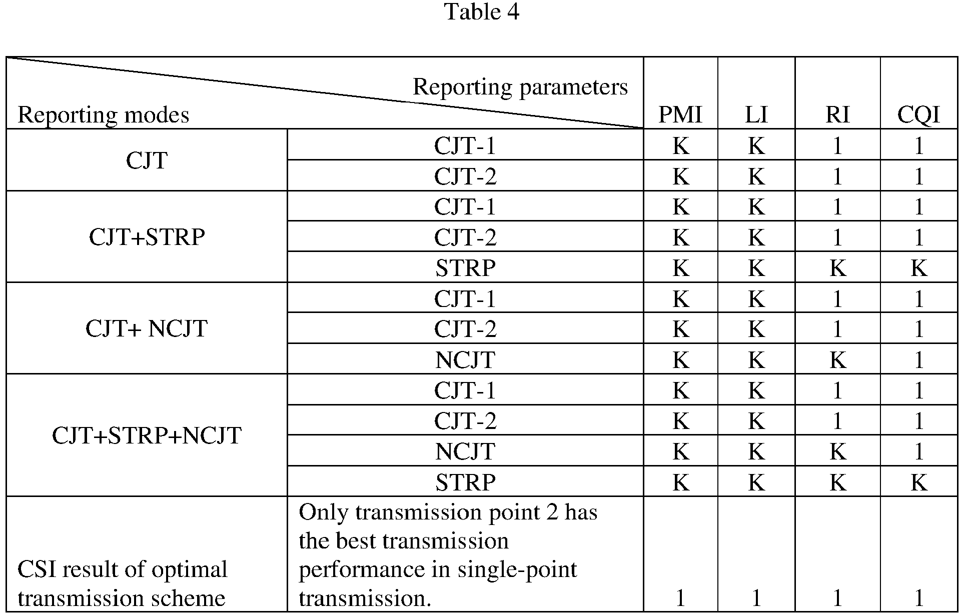

When the network side configures the restriction indicator, that is, the RIs of different transmission points are restricted to be the same, the number of parameters reported in the CSI is different in different reporting modes in this configuration, which specifically includes the following steps.

2.1 For the reporting mode including the CJT mode, reporting of a corresponding PMI and a corresponding LI may be based on the full set of CSI-RS resources included in the second resource pairing group, and the reporting of a RI and a CQI is based on multiple combinations of CSI-RS resources included in the second resource pairing group.

Reporting mode 2-1: for the reporting of the PMI and the LI, in case of the CJT1 and the CJT2, a PMI and an LI in case that the largest number of CSI-RS resources are included are reported, regardless of whether part of the CSI-RS resources or all CSI-RS resources of the second resource pairing group are used. The UE reports two PMIs and two LIs. The CQI is reported in a unit of codeword.

For the reporting of the RI, the CJT1 and the CJT2 are jointly reported: for the *CMR*_{2,2}, one RI may be reported, or for the *CMR*_{4,2}*,* one RI may be reported; or for the second resource pairing group, one RI may be reported.

For the reporting of the CQI, the CJT1 and the CJT2 are respectively reported: in case of the CJT1: for the *CMR*_{2,2}, one RI and one CQI are reported, or for the *CMR*_{4,2}*,* one RI and one CQI are reported; or for the second resource pairing group, one RI and one CQI are reported.

in case of the CJT2: for the *CMR*_{2,2}, one RI and one CQI are reported, or for the *CMR*_{4,2}*,* one RI and one CQI are reported; or for the second resource pairing group, one RI and one CQI are reported.

Each PMI/LI corresponds to the optimal precoding recommendation for each transmission point during the CJT. One RI/CQI corresponds to the optimal recommendation during the CJT.

Reporting mode 2-2: in case of the CJT and the STRP: the UE reports 2 PMIs, 1+2 RIs, 2 LIs and 1+2 CQIs. The CQI is reported in a unit of codeword.

Each PMI/LI corresponds to the optimal precoding recommendation for each transmission point in the second resource pairing group. The first one RI corresponds to the RI recommendation during the CJT, the first one CQI corresponds to the CQI recommendation during the CJT, and the last two RI/CQIs correspond to the RI recommendation for each transmission point of the single-point transmission STRP.

For the optimal precoding recommendation for each PMI/LI corresponding to each transmission point in the second resource pairing group, whether part of the CSI-RS resources of the second resource pairing group or all the CSI-RS resources are used for reporting the PMI and the LI, the PMI and the LI having the largest number of CSI-RS resources are reported in case of the CJT1, the CJT2 and the STRP transmission modes.

For the RI recommendation for the first one RI corresponding to the CJT transmission, the CJT mode specifically includes the CJT1 and the CJT2 (which are the same CJT mode, and only differ in the number of used CSI-RS resources). One RI value is reported jointly in case of the CJT1 and the CJT2.

For the CQI recommendation for the first one CQI corresponding to the CJT transmission, one CQI value is reported respectively in case of the CJT1 and the CJT2.

Reporting mode 2-3: in case of the CJT and the NCJT: the UE reports 2 PMIs, 1+2 RIs, 2 LIs and 1+1 CQIs. The CQI is reported in a unit of codeword.

The two PMI/LIs correspond to the optimal precoding recommendation for each transmission point in the second resource pairing group. The first one RI corresponds to the RI recommendation during the CJT, and the last two RIs correspond to the RI recommendation for each transmission point during the NCJT. The first one CQI corresponds to the RI recommendation during the CJT, and the last CQI corresponds to the RI recommendation for each transmission point during the NCJT.

For the optimal precoding recommendation for the two PMI/LI corresponding to each transmission point in the second resource pairing group, whether part of the CSI-RS resources of the second resource pairing group or all the CSI-RS resources are used for reporting the PMI and the LI, the PMI and the LI having the largest number of CSI-RS resources are reported in the CJT1, the CJT2 and the STRP transmission modes.

For the RI recommendation for the first one RI corresponding to the CJT transmission, the CJT mode specifically includes the CJT1 and the CJT2 (which are the same CJT mode, and only differ in the number of used CSI-RS resources). One RI value is reported jointly in case of the CJT1 and the CJT2.

For the RI recommendation for the first one CQI corresponding to the CJT transmission, one CQI value is reported respectively in case of the CJT1 and the CJT2.

Reporting mode 2-4: in case of the CJT, the STRP and the NCJT: the UE reports 2 PMIs, 1+2+2 RIs, 2 LIs and 1+2+1 CQIs. The CQI is reported in a unit of codeword.

The two PMI/LIs correspond to the optimal precoding recommendation for each transmission point in the second resource pairing group. The first RI corresponds to the RI recommendation during the CJT, the second and the third RIs correspond to the RI recommendation for each transmission point during the STRP, and the fourth and the fifth RIs correspond to the RI recommendation for each transmission point during the NCJT. The first CQI corresponds to the RI recommendation during the CJT, the second and the third CQIs correspond to the CQI recommendation for each transmission point during the STRP, and the fourth CQI corresponds to the RI recommendation for each transmission point during the NCJT.

For the optimal precoding recommendation for the two PMI/LI corresponding to each transmission point in the second resource pairing group, whether part of the CSI-RS resources of the second resource pairing group or all the CSI-RS resources are used for reporting the PMI and the LI, the PMI and the LI having the largest number of CSI-RS resources are reported in the CJT1, the CJT2 and the STRP transmission modes.

For the RI recommendation for the first RI corresponding to the CJT transmission, the CJT mode specifically includes the CJT1 and the CJT2 (which are the same CJT mode, and only differ in the number of used CSI-RS resources). One RI value is reported jointly in case of the CJT1 and the CJT2.

For the RI recommendation for the first CQI corresponding to the CJT transmission, one CQI value is reported respectively in case of the CJT1 and the CJT2.

Reporting mode 2-5: the UE reports a CSI result of the optimal transmission mode.

If the UE measures different schemes for any one of or combinations of the CJT, the NCJT and the STRP based on the current resource pairing group, and the measurement results show that only the transmission point 2 has the best transmission performance in the single-point transmission STRP, the UE needs to report one PMI, one RI, one LI and one CQI for single-point transmission in the group. The CQI is reported in a unit of codeword.

All the above reporting modes and corresponding reporting parameters may be referred to table 5.

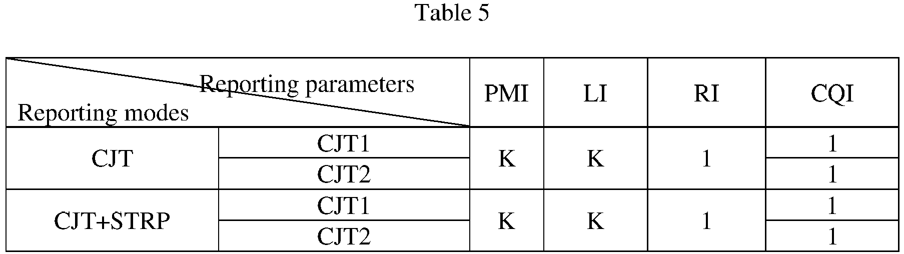

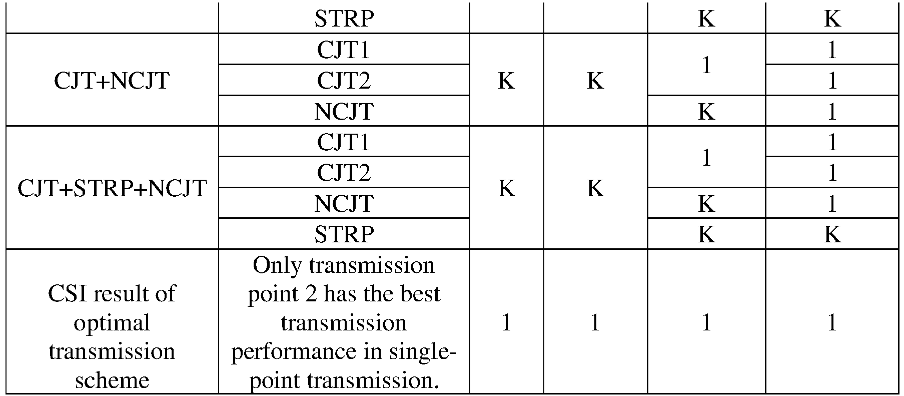

2.2 For the reporting mode including the CJT mode, reporting of a corresponding PMI and a corresponding LI may be based on multiple combinations of CSI-RS resources included in the second resource pairing group, and the reporting of a RI and a CQI is based on multiple combinations of CSI-RS resources included in the second resource pairing group.

In an embodiment, one or more of the following reporting modes may be reported based on the configuration information on the base station side.

Reporting mode 1-1: for the reporting of the PMI, the LI, the CQI and the RI, in case of the CJT1 and the CJT2, the corresponding CSI is reported based on the multiple combinations of CSI-RS resources included in the second resource pairing group. For example, if the number of CSI-RS resources used by the CJT1 is A, the PMI corresponding to the CJT1 is determined based on the A CSI-RS resources, and A PMIs are reported. If the number of CSI-RS resources used by the CJT2 is B, the PMI corresponding to the CJT2 is determined based on the B CSI-RS resources, and B PMIs are reported.

Reporting mode 2-2: in case of the CJT and the STRP: the UE reports 2 PMIs, 1+2 RIs, 2 LIs and 1+2 CQIs. The CQI is reported in a unit of codeword.

Each PMI/LI corresponds to the optimal precoding recommendation for each transmission point in the second resource pairing group. The first one RI corresponds to the RI recommendation during the CJT, the first one CQI corresponds to the CQI recommendation during the CJT, and the last two RI/CQIs correspond to the RI recommendation for each transmission point of the single-point transmission STRP.

For the optimal precoding recommendation for each PMI/LI corresponding to each transmission point in the second resource pairing group, whether part of the CSI-RS resources of the second resource pairing group or all the CSI-RS resources are used for reporting the PMI and the LI, the PMI and the LI having the largest number of CSI-RS resources are reported in the CJT1, the CJT2 and the STRP transmission modes.

For the RI recommendation for the first one RI corresponding to the CJT transmission, the CJT mode specifically includes the CJT1 and the CJT2 (which are the same CJT mode, and only differ in the number of used CSI-RS resources). One RI value is reported respectively in case of the CJT1 and the CJT2.

For the CQI recommendation for the first one CQI corresponding to the CJT transmission, one CQI value is reported respectively in case of the CJT1 and the CJT2.

Reporting mode 2-3: in case of the CJT and the NCJT: the UE reports 2 PMIs, 1+2 RIs, 2 LIs and 1+1 CQIs. The CQI is reported in a unit of codeword.

The two PMI/LIs correspond to the optimal precoding recommendation for each transmission point in the second resource pairing group. The first one RI corresponds to the RI recommendation during the CJT, and the last two RIs correspond to the RI recommendation for each transmission point during the NCJT. The first one CQI corresponds to the RI recommendation during the CJT, and the last CQI corresponds to the RI recommendation for each transmission point during the NCJT.

For the optimal precoding recommendation for the two PMI/LI corresponding to each transmission point in the second resource pairing group, whether part of the CSI-RS resources of the second resource pairing group or all the CSI-RS resources are used for reporting the PMI and the LI, the PMI and the LI having the largest number of CSI-RS resources are reported in the CJT1, the CJT2 and the STRP transmission modes.

For the RI recommendation for the first one RI corresponding to the CJT transmission, the CJT mode specifically includes the CJT1 and the CJT2 (which are the same CJT mode, and only differ in the number of used CSI-RS resources). One RI value is reported respectively in case of the CJT1 and the CJT2.

For the RI recommendation for the first one CQI corresponding to the CJT transmission, one CQI value is reported respectively in case of the CJT1 and the CJT2.

Reporting mode 2-4: in case of the CJT, the STRP and the NCJT: the UE reports 2 PMIs, 1+2+2 RIs, 2 LIs and 1+2+1 CQIs. The CQI is reported in a unit of codeword.

The two PMI/LIs correspond to the optimal precoding recommendation for each transmission point in the second resource pairing group. The first RI corresponds to the RI recommendation during the CJT, the second and the third RIs correspond to the RI recommendation for each transmission point during the STRP, and the fourth and the fifth RIs correspond to the RI recommendation for each transmission point during the NCJT. The first CQI corresponds to the RI recommendation during the CJT, the second and the third CQIs correspond to the CQI recommendation for each transmission point during the STRP, and the fourth CQI corresponds to the RI recommendation for each transmission point during the NCJT.

For the optimal precoding recommendation for the two PMI/LI corresponding to each transmission point in the second resource pairing group, whether part of the CSI-RS resources of the second resource pairing group or all the CSI-RS resources are used for reporting the PMI and the LI, the PMI and the LI having the largest number of CSI-RS resources are reported in the CJT1, the CJT2 and the STRP transmission modes.

For the RI recommendation for the first RI corresponding to the CJT transmission, the CJT mode specifically includes the CJT1 and the CJT2 (which are the same CJT mode, and only differ in the number of used CSI-RS resources). One RI value is reported respectively in case of the CJT1 and the CJT2.

For the RI recommendation for the first CQI corresponding to the CJT transmission, one CQI value is reported respectively in case of the CJT1 and the CJT2.

Reporting mode 2-5: the UE reports a CSI result of the optimal transmission mode.

If the UE measures different schemes for any one of or combinations of the CJT, the NCJT and the STRP based on the current resource pairing group, and the measurement results show that only the transmission point 2 has the best transmission performance in the single-point transmission STRP, the UE needs to report one PMI, one RI, one LI and one CQI for single-point transmission in the group. The CQI is reported in a unit of codeword.

All the above reporting modes and corresponding reporting parameters may be referred to table 6.

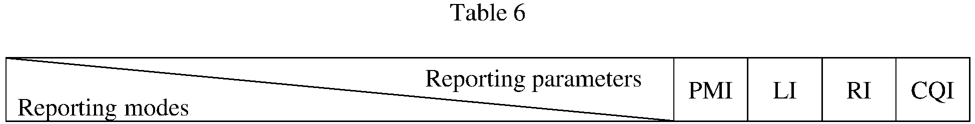

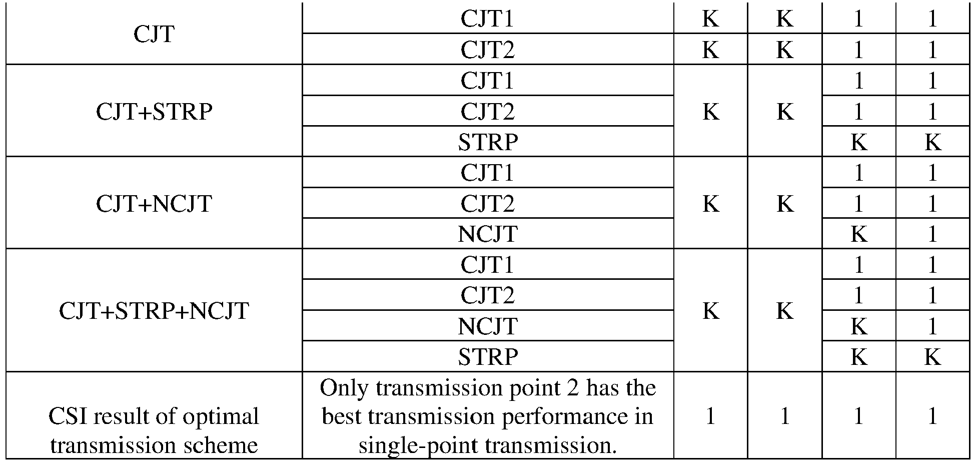

2. The network side configures multiple resource pairing groups, and there is a case of the number of CSI reference signal resources in each resource pairing group being equal to the number of transmission nodes.

The network side configures two resource pairing groups CMR: a third resource pairing group is {*CMR*_{1*,*1}*, CMR*_{2,1}*, CMR*_{3,1}*, CMR*_{4,1}}*,* indicating that group 3 contains CMR transmitted from each transmission point; and a second resource pairing group is { *CMR*_{2,2}, *CMR*_{4*,*2}}, indicating that group 4 contains CMR transmitted from each transmission point.

After receiving the resource pairing group configured by the network side, the terminal side receives the CSI reference signal resources transmitted from multiple transmission points, and performs joint channel measurement by using the CSI reference signal resources in the two resource pairing groups based on the resource pairing group information.

The terminal side may report the index value of the recommended resource pairing group based on the measurement result. Taking the resource pairing group as an example, if joint measurement performed by the terminal side shows that the fourth pairing information has better joint channel state, the UE reports an index value of the fourth resource pairing group, and the occupied bit is log (N) = log (2) = 1 bit.

The terminal side reports the CSI information based on the four CMR resources of the fourth pairing information. In an embodiment, one or more of the following reporting modes may be reported based on the configuration information of the base station side.

Reporting mode 3-1: for the CSI corresponding to CJT: the UE reports four PMIs, one RI, four LIs and one CQI. The CQI is reported in a unit of codeword.

Each PMI/LI corresponds to the optimal precoding recommendation for each transmission point in the fourth resource pairing group. One RI/LI/CQI corresponds to the optimal recommendation during the CJT.

Reporting mode 3-2: in case of the CJT and the STRP: the UE reports 4+4 PMIs, 1+4 RIs, 4+4 LIs and 1+4 CQIs. The CQI is reported in a unit of codeword.

The first four PMI/LI correspond to the optimal precoding recommendation for each transmission point during the CJT, and the last four PMI/LI correspond to the optimal precoding recommendation for each transmission point during the STRP. The first one RI/CQI corresponds to the RI recommendation during the CJT, and the last four RI/CQI correspond to the RI recommendation during STRP transmission.

Reporting mode 3-3: in case of the CJT and the NCJT: the UE reports 4+4 PMI, 1+4 RI, 4+4 LI and 1+1 CQI. The CQI is reported in a unit of codeword.

The first four PMI/LI correspond to the optimal precoding recommendation for each transmission point during the CJT, and the last four PMI/LI correspond to the optimal precoding recommendation for each transmission point during the NCJT. The first one RI corresponds to the RI recommendation during the CJT, and the last four RIs correspond to the RI recommendation for each transmission point during the NCJT. the first one CQI corresponds to the RI recommendation for each transmission point during the CJT point transmission, and the last one CQI corresponds to the RI recommendation during the NCJT.

Reporting mode 3-4: in case of the CJT, the STRP and the NCJT: the UE reports 4+4+4 PMIs, 1+4+4 RIs, 4+4+4 LIs and 1+4+1 CQIs. The CQI is reported in a unit of codeword.

The first to the fourth PMI/LI corresponds to the optimal precoding recommendation for each transmission point during the CJT, the fifth to the eighth PMI/LI corresponds to the optimal precoding recommendation for each transmission point during the STRP, and the ninth to the twelfth PMI/LI corresponds to the optimal precoding recommendation for each transmission point during the NCJT. The first RI corresponds to the RI recommendation during the CJT, the second to the fifth RIs correspond to the RI recommendation for each transmission point of the single-point transmission STRP, and the sixth to the ninth RIs correspond to the RI recommendation for each transmission point during the NCJT. The first CQI corresponds to the RI recommendation during the CJT, the second to the fifth CQIs correspond to the CQI recommendation for each transmission point during the STRP, and the sixth CQI corresponds to the RI recommendation for each transmission point during the NCJT.

Reporting mode 3-5: the UE reports a CSI result of the optimal transmission mode.

If the UE measures different schemes for any one of or combinations of the CJT, the NCJT or the single-point transmission STRP based on the current resource pairing group, and the measurement results show that only the transmission point 4 has the best transmission performance in the single-point transmission STRP, the UE needs to report one PMI, one RI, one LI and one CQI for single-point transmission in the group. The CQI is reported in a unit of codeword.

When the network side configures the restriction indicator, that is, the RIs of different transmission points are restricted to be the same, the number of parameters reported in the CSI is different in different reporting modes in this configuration, which specifically includes the following steps.

Reporting mode 4-1: For the CSI corresponding to CJT: the UE reports four PMIs, one RI, four LIs and one CQI. The CQI is reported in a unit of codeword.

Each PMI/LI corresponds to the optimal precoding recommendation for each transmission point during the CJT. One RI/CQI corresponds to the optimal recommendation during the CJT.

Reporting mode 4-2: in the CJT and the STRP: the UE reports 4 PMIs, 1+4 RIs, 4 LIs and 1+4 CQIs. The CQI is reported in a unit of codeword.

Each PMI/LI corresponds to the optimal precoding recommendation for each transmission point in the fourth resource pairing group. The first one RI/CQI corresponds to the RI recommendation during the CJT, and the last four RI/CQIs correspond to the RI recommendation for each transmission point during the STRP.

Reporting mode 4-3: in case of the CJT and the NCJT: the UE reports 4 PMIs, 1+4 RIs, 4 LIs and 1+1 CQIs. The CQI is reported in a unit of codeword.

The fourth PMI/LIs correspond to the optimal precoding recommendation for each transmission point in the fourth resource pairing group. The first one RI corresponds to the RI recommendation during the CJT, and the last four RIs correspond to the RI recommendation for each transmission point during the NCJT. The first one CQI corresponds to the RI recommendation during the CJT, and the last one CQI corresponds to the RI recommendation for each transmission point during the NCJT.

Reporting mode 4-4: in case of the CJT, the STRP and the NCJT: the UE reports 4 PMIs, 1+4+4 RIs, 4 LIs and 1+4+1 CQIs. The CQI is reported in a unit of codeword.

The fourth PMI/LI correspond to the optimal precoding recommendation for each transmission point in the fourth resource pairing group. The first RI corresponds to the RI recommendation during the CJT, the second to the fifth RI corresponds to the RI recommendation for each transmission point during the STRP, and the sixth to the ninth RI corresponds to the RI recommendation for each transmission point during the NCJT. The first CQI corresponds to the RI recommendation during the CJT, the second to the fifth CQI corresponds to the CQI recommendation for each transmission point during the STRP, and the sixth CQI corresponds to the RI recommendation for each transmission point during the NCJT.

Reporting mode 4-5: the UE reports a CSI result of the optimal transmission mode.

If the UE measures different schemes for any one of or combinations of the CJT, the NCJT and the STRP based on the current resource pairing group, and the measurement results show that only the transmission point 2 has the best transmission performance in the single-point transmission STRP, the UE needs to report one PMI, one RI, one LI and one CQI for single-point transmission in the group. The CQI is reported in a unit of codeword.

3. The network side configures multiple resource pairing groups and the transmission modes used by the resource groups, and there is a case of the number of CSI reference signal resources in the resource pairing group being less than the number of transmission nodes.

When the network side configures the CSI reference signal resources for channel measurement and the corresponding transmission mode of the resource, the corresponding resource pairing group is represented as *CMR_{i,j,z}, i* j represents a resource index value within the group, and z represents a transmission mode configuration.

The network side configures four resource pairing groups CMR: a fifth resource pairing group is { *CMR*_{1,1,1}, *CMR*_{2*,*1,1}*, CMR*_{3*,*1*,*1}*, CMR*_{4,1,1} }, indicating that it contains CMR resources transmitted from each transmission point in case of the CJT mode; a sixth resource pairing group is {*CMR*_{2,2,1}, *CMR*_{4*,*2*,*1}}, indicating that it contains CMR resources transmitted from transmission point 2 and transmission point 4 in case of the CJT mode; a seventh resource pairing group is { *CMR*_{1,1,2}, *CMR*_{2,1,2}, *CMR*_{3,1,2}, *CMR*_{4*,*1*,*2} }, indicating that it contains CMR resources transmitted from each transmission point in case of the NCJT mode; and an eighth resource pairing group is { *CMR*_{1,2,2}, *CMR*_{3,2,2} }, indicating that it contains CMR resources transmitted from transmission point 1 and transmission point 3 in case of the NCJT mode.

After receiving the CSI reference signal resource configuration on the network side, the terminal side receives the CSI reference signal resources transmitted from multiple transmission points, and performs joint channel measurement using the CMRs in the two groups in each transmission mode based on the resource pairing groups and the transmission mode configuration information.

The terminal side also needs to report the index value of the resource pairing group corresponding to the optimal joint channel measurement result. Taking the configuration information of the resource pairing group as an example, when the terminal side performs joint channel measurement, the corresponding resource pairing group being the sixth resource pairing group has the best measurement result, that is, the joint channel state of the transmission point 2 and the transmission point 4 is better, the UE reports an index value identifier { *CMR*_{2,2,1}, *CMR*_{4*,*2*,*1} } in pairing information 2, and the occupied bit is: the number of recommended transmission points * log (M) = 2 * log (4) = 4 bits.

The terminal side reports the CSI based on the two CMR resources in the sixth resource pairing group. In an embodiment, one or more of the following reporting modes may be reported based on the configuration information of the base station side.

Reporting mode 5-1: For the CSI corresponding to CJT: the UE reports two PMIs, one RI, two LIs and one CQI. The CQI is reported in a unit of codeword.

Each PMI/LI corresponds to the optimal precoding recommendation for each transmission point in the sixth resource pairing group. One RI/CQI corresponds to the optimal recommendation during the CJT.

Reporting mode 5-2: in case of the CJT and the STRP: the UE reports 2+2 PMIs, 1+2 RIs, 2+2 LIs and 1+2 CQIs. The CQI is reported in a unit of codeword.

The first 2 two PMI/LI correspond to the optimal precoding recommendation for each transmission point during the CJT, and the last two PMI/LI correspond to the optimal precoding recommendation for each transmission point during the STRP. The first one RI/CQI corresponds to the RI recommendation during the CJT, and the last two RI/CQI correspond to the RI recommendation for each transmission point during the STRP.

Reporting mode 5-3: the UE reports a CSI result of the optimal transmission mode.

If the UE measures different schemes for any one of or combinations of the CJT or the STRP based on the current resource pairing group, and the measurement results show that only the transmission point 2 has the best transmission performance in the single-point transmission, the UE needs to report one CRI, one PMI, one RI, one LI and one CQI for single-point transmission in the group. The CQI is reported in a unit of codeword.

When the network side further configures the restriction indicator, which indicating that the RIs of different transmission points are restricted to be the same, the number of parameters reported in the CSI is different in different reporting modes in this configuration, which specifically includes the following steps.

Reporting mode 6-1: For the CSI corresponding to CJT: the UE reports two PMIs, one RI, two LIs and one CQI. The CQI is reported in a unit of codeword.

Each PMI/LI corresponds to the optimal precoding recommendation for each transmission point in the sixth resource pairing group. One RI/CQI corresponds to the optimal recommendation during the CJT.

Reporting mode 6-2: in case of the CJT and the STRP: the UE reports 2 PMIs, 1+2 RIs, 2 LIs and 1+2 CQIs. The CQI is reported in a unit of codeword.

Each PMI/LI corresponds to the optimal precoding recommendation for each transmission point in the sixth resource pairing group. The first one RI/CQI corresponds to the RI recommendation during the CJT, and the last two RI/CQIs correspond to the RI recommendation for each transmission point during the STRP.

Reporting mode 6-3: the UE reports a CSI result of the optimal transmission mode.

If the UE measures different schemes for any one of or combinations of the CJT or the STRP based on the current resource pairing group, and the measurement results show that only the transmission point 2 has the best transmission performance in the single-point transmission STRP, the UE needs to report one CRI, one PMI, one RI, one LI and one CQI for single-point transmission in the group. The CQI is reported in a unit of codeword.

4. The network side configures multiple resource pairing groups and the transmission modes used by the resource groups, and there is a case of the number of CSI reference signal resources in each resource pairing group being equal to the number of transmission nodes.

The network side configures four resource pairing groups CMR: a ninth resource pairing group is { *CMR*_{1,1,1}, *CMR*_{2*,*1*,*1}, *CMR*_{3*,*1*,*1}*, CMR*_{4,1,1} } and a tenth resource pairing group is { *CMR*_{1,2,1}, *CMR*_{2,2,1}, *CMR*_{3*,*2,1}*, CMR*_{4*,*2,1} }, indicating that they contain CMR resources transmitted from each transmission point in case of the CJT mode; similarly, an eleventh resource pairing group is { *CMR*_{1,1,2}, *CMR*_{2,1,2}, *CMR*_{3*,*1*,*2}*, CMR*_{4*,*1*,*2} }, and a twelfth resource pairing group is { *CMR*_{1,2,2}, *CMR*_{2,2,2}, *CMR*_{3,2,2}, *CMR*_{4*,*2*,*2} }, indicating that they contain CMR resources transmitted from each transmission point in the NCJT mode.

After receiving the CSI reference signal resource configuration on the network side, the terminal side receives the CSI reference signal resources transmitted from multiple transmission points, and performs joint channel measurement using the CMRs in the two groups in each transmission mode based on the resource pairing group information and the transmission mode configuration information.

The terminal side also needs to report the index value of the resource pairing group corresponding to the optimal joint channel measurement result. Taking the configuration information of the resource pairing group as an example, if the terminal side measures that the CMR channel state transmitted from transmission point 2 and transmission point 4 in the CJT mode is better through the tenth resource pairing group, the UE reports an index value identifier of the resource pairing group, and the occupied bits is: the number of transmission mode types configured by the resource pairing group * log (N) = 2 * log (4) = 4 bits.

The terminal side reports the CSI based on the four CMR resources in the tenth resource pairing group. In an embodiment, one or more of the following reporting modes may be reported based on the configuration information of the base station side.

Reporting mode 7-1: For the CSI corresponding to CJT: the UE reports four PMIs, one RI, four LIs and one CQI. The CQI is reported in a unit of codeword.

Each PMI/LI corresponds to the optimal precoding recommendation for each transmission point in the tenth resource pairing group. One RI/CQI corresponds to the optimal recommendation during the CJT.

Reporting mode 7-2: in case of the CJT and the STRP: the UE reports 4+4 PMIs, 1+4 RIs, 4+4 LIs and 1+4 CQIs. The CQI is reported in a unit of codeword.

The first four PMI/LI correspond to the optimal precoding recommendation for each transmission point during the CJT, and the last four PMI/LI correspond to the optimal precoding recommendation for each transmission point during the STRP. The first one RI/CQI corresponds to the RI recommendation during the CJT, and the last four RI/CQI correspond to the RI recommendation for each transmission point during the STRP.

Reporting mode 7-3: UE reports a CSI result of the optimal transmission mode.

If the UE measures different schemes for any one of or combinations of the CJT or the STRP based on the current resource pairing group, and the measurement results show that only the transmission point 2 has the best transmission performance in the single-point transmission, the UE needs to report one CRI, one PMI, one RI, one LI and one CQI for single-point transmission in the group. The CQI is reported in a unit of codeword.

When the network side further configures the restriction indicator, which indicating that the RIs of different transmission points are restricted to be the same, the number of parameters reported in the CSI is different in different reporting modes in this configuration, which specifically includes the following steps.

Reporting mode 8-1: For the CSI corresponding to CJT: the UE reports four PMIs, one RI, four LIs and one CQI. The CQI is reported in a unit of codeword.

Each PMI/LI corresponds to the optimal precoding recommendation for each transmission point in the tenth resource pairing group. One RI/CQI corresponds to the optimal recommendation during the CJT.

Reporting mode 8-2: in case of the CJT and the STRP: the UE reports 4 PMIs, 1+4 RIs, 4 LIs and 1+4 CQIs. The CQI is reported in a unit of codeword.

Each PMI/LI corresponds to the optimal precoding recommendation for each transmission point in the tenth resource pairing group. The first one RI/CQI corresponds to the RI recommendation during the CJT, and the last four RI/CQIs correspond to the RI recommendation for each transmission point during the STRP.

Reporting mode 8-3: UE reports a CSI result of the optimal transmission mode.

If the UE measures different schemes for any one of or combinations of the CJT or the STRP based on the current resource pairing group, and the measurement results show that only the transmission point 2 has the best transmission performance in the single-point transmission, the UE needs to report one CRI, one PMI, one RI, one LI and one CQI for single-point transmission in the group. The CQI is reported in a unit of codeword.

FIG. 4 is a schematic structural diagram of a terminal according to an embodiment of the present application. As shown in FIG. 4, the terminal includes a memory 420, a transceiver 410 and a processor 400. The processor 400 and the memory 420 may also be physically arranged separately.

The memory 420 is used for storing a computer program, the transceiver 410 is used for receiving and transmitting data under control of the processor 400, and the processor 400 is used for reading the computer program in the memory 420 and performing the following operations:
receiving a CSI-RS resource configuration and a CSI reporting configuration transmitted from the network device, where the CSI-RS resource configuration includes multiple resource pairing groups and first indication information corresponding to each resource pairing group, the first indication information is used to indicate the resource pairing group and/or indicate each CSI-RS resource in the resource pairing group, each resource pairing group includes CSI-RS resources selected from different pre-allocated resource groups, and the pre-allocated resource groups are a first number of pre-allocated resource groups determined based on a CSI-RS resource set;
based on the CSI-RS resource configuration, determining one or more recommended resource pairing groups in the multiple resource pairing groups, and/or, determining one or more recommended CSI-RS resources in a recommended resource pairing group; and
based on the CSI reporting configuration, reporting CSI obtained by performing measurement using the CSI-RS resource in the recommended resource pairing group, and reporting the recommended resource pairing group corresponding to the CSI, and/or, one or more recommended CSI-RS resources in the recommended resource pairing group,
where the CSI reporting configuration includes a configuration of one or more transmission schemes, and the first number is a positive integer.

In an embodiment, the transceiver 410 is used for receiving and transmitting data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 410 may include multiple elements, i.e., including a transmitter and a receiver, units for providing communication with various other devices over transmission media including wireless channels, wired channels, fiber optic cables, and the like. For different user devices, the user interface 430 may also be an interface capable of externally or internally connecting required devices, and the connected devices include but are not limited to a keypad, a display, a speaker, a microphone, a joystick, and the like.

The processor 400 is responsible for managing the bus architecture and general processing, and the memory 420 may store data used by the processor 400 when performing operations.

The processor 400 may be a central processing unit (CPU), an application specific integrated circuit (ASIC), a field programmable gate array (FPGA) or a complex programmable logic device (CPLD), and the processor may also adopt a multi-core architecture.

The processor 400 is used to execute any of the methods provided by the embodiments of the present application according to the obtained executable instructions by calling the computer program stored in the memory 420. The processor 400 and the memory 420 may also be physically arranged separately.

In an embodiment, based on the CSI-RS resource configuration, determining the one or more recommended resource pairing groups in the multiple resource pairing groups includes:
determining first reference signal received powers (RSRPs) and first signal to interference plus noise ratios (SINRs) of each resource pairing group based on RSRPs and SINRs of each CSI-RS resource in each resource pairing group in the CSI-RS resource configuration; and
determining the recommended resource pairing group based on a first rule,
where the first rule includes one or more of the following:
a front second number of resource pairing groups having a highest first RSRP;
a front second number of resource pairing groups having a highest first SINR; or
a resource pairing group having a highest first RSRP and a highest first SINR, where the first RSRP or the first SINR has a highest difference with a first threshold,
where the first threshold is a preset minimum value of RSRPs or SINRs of all CSI-RS resources in the resource pairing group, and the second number is a positive integer.

In an embodiment, based on the CSI-RS resource configuration, determining the one or more recommended CSI-RS resources in the recommended resource pairing group includes:
determining RSRPs and SINRs of each CSI-RS resource in the recommended resource pairing group as second RSRPs and second SINRs respectively; and
determining the recommended CSI-RS resource in the recommended resource pairing group based on a second rule,
where the second rule includes one or more of the following:
   a front third number of the CSI-RS resources having a highest second RSRP;
   a front third number of the CSI-RS resources having a highest second SINR; or
   a CSI-RS resource having a second RSRP or a second SINR greater than or equal to a second threshold,
   where the second threshold is a preset minimum value of RSRPs or SINRs of the CSI-RS resource, and the third number is a positive integer.

In an embodiment, based on the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining whether second indication information is configured for the multiple resource pairing groups in the CSI-RS resource configuration, where the second indication information is used to indicate a first transmission mode applied when the CSI-RS resource in the resource pairing group is used for measurement, and the first transmission mode includes a single-point transmission mode or a coordinated multi-point transmission mode; and
in case that no second indication information is configured in the CSI-RS resource configuration, based on a transmission scheme configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group; or
in case that the second indication information is configured in the CSI-RS resource configuration, based on a transmission scheme configured in the CSI reporting configuration corresponding to the second indication information, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the CSI reporting configuration includes a configuration of one or more transmission schemes, the transmission scheme includes one or more transmission modes, the transmission mode includes a coordinated multi-point transmission mode or a combination of a single-point transmission mode and a coordinated multi-point transmission mode, the coordinated multi-point transmission mode includes a coherent joint transmission (CJT) and a non-coherent joint transmission (NCJT), and the single-point transmission mode includes a single transmission reception point (STRP).

In an embodiment, in case that no second indication information is configured in the CSI-RS resource configuration, based on the transmission scheme configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining all transmission schemes for CSI reporting as a first transmission scheme set based on the CSI reporting configuration; and
based on whether a restriction indicator and the first transmission scheme set are configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the restriction indicator is used to indicate that rank indicators (RIs) of different transmission modes included in the transmission scheme are the same.

In an embodiment, based on whether the restriction indicator is configured in the CSI reporting configuration and the first transmission scheme set, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining a target resource set based on all CSI-RS resources included in the recommended resource pairing group or the one or more recommended CSI-RS resources in the recommended resource pairing group;
in case that no restriction indicator is configured, reporting CSI obtained by performing measurement using the target resource set in each transmission mode included in the first transmission scheme set respectively; or
in case that the restriction indicator is configured, reporting CSI obtained by performing measurement using the target resource set jointly in each transmission mode included in the first transmission scheme set; and
reporting the recommended resource pairing group corresponding to the CSI, and/or, the one or more recommended CSI-RS resources in the recommended resource pairing group.

In an embodiment, in case that no restriction indicator is configured, reporting the CSI obtained by performing measurement using the target resource set in each transmission mode included in the first transmission scheme set respectively includes:
in case that a transmission mode included in the first transmission scheme set is a single transmission mode, reporting measurement values of a pre-coding matrix indicator (PMI) and a layer indicator (LI) obtained by performing measurement using each CSI-RS resource in the target resource set, and measurement values of a rank indicator (RI) and a channel quality indicator (CQI) obtained by performing measurement using the target resource set based on the single transmission mode; or
in case that a transmission mode included in the first transmission scheme set is a combined transmission mode, reporting measurement values of a PMI and an LI obtained by performing measurement using each CSI-RS resource in the target resource set, and measurement values of an RI and a CQI obtained by performing measurement using the target resource set based on each transmission mode included in the combined transmission mode respectively,
where the combined transmission mode at least includes a CJT, and the single transmission mode includes any one of a CJT, an NCJT or a STRP.

In an embodiment, in case that the restriction indicator is configured, reporting CSI obtained by performing measurement using the target resource set jointly in each transmission mode included in the first transmission scheme set includes:
in case that a transmission mode included in the first transmission scheme set is a single transmission mode, reporting measurement values of a PMI and an LI obtained by performing measurement using each CSI-RS resource in the target resource set, and measurement values of an RI and a CQI obtained by performing measurement using the target resource set based on the combined transmission mode; or
in case that a transmission mode included in the first transmission scheme set is a combined transmission mode, reporting a maximum value among measurement values of a PMI and an LI obtained by performing measurement using each CSI-RS resource in the target resource set, and measurement values of an RI and a CQI obtained by performing measurement using the target resource set based on each transmission mode included in the combined transmission mode,
where the combined transmission mode at least includes a CJT, and the single transmission mode includes any one of a CJT, an NCJT or a STRP.

In an embodiment, the operations further include:
comparing CSI obtained by performing measurement using each CSI-RS resource in the target resource set in each transmission mode included in the first transmission scheme set, and determining a first CSI-RS resource in the target resource set used when CSI characterizing a best transmission performance is obtained; and
reporting the CSI corresponding to the first CSI-RS resource.

In an embodiment, in case that the second indication information is configured in the CSI-RS resource configuration, based on the transmission scheme configured in the CSI reporting configuration corresponding to the second indication information, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
determining a target transmission mode applied to the recommended resource pairing group and a CSI reporting configuration corresponding to the target transmission mode based on the second indication information;
determining a second transmission scheme set corresponding to each target transmission mode based on the target transmission mode and the CSI reporting configuration corresponding to the target transmission mode; and
based on whether a restriction indicator and the second transmission scheme set are configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the CSI reporting configuration corresponding to the target transmission mode includes multiple transmission schemes, each transmission scheme at least includes the target transmission mode, and the target transmission mode includes a STRP, an NCJT or a CJT; and
the restriction indicator is used to indicate that RIs of different transmission modes included in the transmission scheme are the same.

In an embodiment, determining the second transmission scheme set corresponding to each target transmission mode based on the target transmission mode and the CSI reporting configuration corresponding to the target transmission mode includes:
in case that the target transmission mode is a STRP, the second transmission scheme set includes a STRP;
in case that the target transmission mode is a CJT, the second transmission scheme set includes a CJT, a CJT and a STRP, and a CJT, an NCJT and a STRP; or
in case that the target transmission mode is an NCJT, the second transmission scheme set includes an NCJT, an NCJT and a STRP, and a CJT, an NCJT and a STRP.

In an embodiment, based on whether the restriction indicator is configured in the CSI reporting configuration and the second transmission scheme set, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group includes:
in case that the second transmission scheme set includes the CJT, determining the target resource set based on all CSI-RS resources included in the recommended resource pairing group or multiple combinations of one or more recommended CSI-RS resources in the recommended resource pairing group; or
in case that the second transmission scheme set does not include the CJT, determining the target resource set based on all CSI-RS resources included in the recommended resource pairing group or one or more recommended CSI-RS resources in the recommended resource pairing group;
in case that no restriction indicator is configured, reporting CSI obtained by performing measurement using the target resource set in each transmission mode included in the second transmission scheme set respectively based on the second transmission scheme set; or
in case that the restriction indicator is configured, reporting CSI obtained by performing measurement using the target resource set in each transmission mode included in the second transmission scheme set jointly based on the second transmission scheme set; and
reporting the recommended resource pairing group corresponding to the CSI, and/or, the one or more recommended CSI-RS resources in the recommended resource pairing group.

In an embodiment, in case that no restriction indicator is configured, reporting the CSI obtained by performing measurement using the target resource set in each transmission mode included in the second transmission scheme set respectively based on the second transmission scheme set includes:
in case that the transmission mode included in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode included in the second transmission scheme set is a combined transmission mode, based on each transmission mode included in the combined transmission mode respectively, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set,
where the combined transmission mode at least includes a CJT, and the single transmission mode includes any one of a CJT, an NCJT or a STRP; and
the second resource set is the CSI-RS resource set with a largest number of CSI-RS resources in the target resource set.

In an embodiment, in case that the restriction indicator is configured, reporting the CSI obtained by performing measurement using the target resource set in each transmission mode included in the second transmission scheme set jointly based on the second transmission scheme set includes:
in case that the transmission mode included in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode included in the second transmission scheme set is a combined transmission mode, based on each transmission mode included in the combined transmission mode, reporting a maximum value among measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in the target resource set, and measurement values of an RI and a CQI obtained by performing measurement using the target resource set,
where the combined transmission mode at least includes a CJT, and the single transmission mode includes any one of a CJT, an NCJT or a STRP; and
the second resource set is the CSI-RS resource set with a largest number of CSI-RS resources in the target resource set.

In an embodiment, the operations further include:
comparing CSI obtained by performing measurement using each CSI-RS resource in the target resource set in each transmission mode included in the second transmission scheme set, and determining a first CSI-RS resource in the target resource set used when the CSI characterizing a best transmission performance is obtained; and
reporting the CSI corresponding to the first CSI-RS resource.

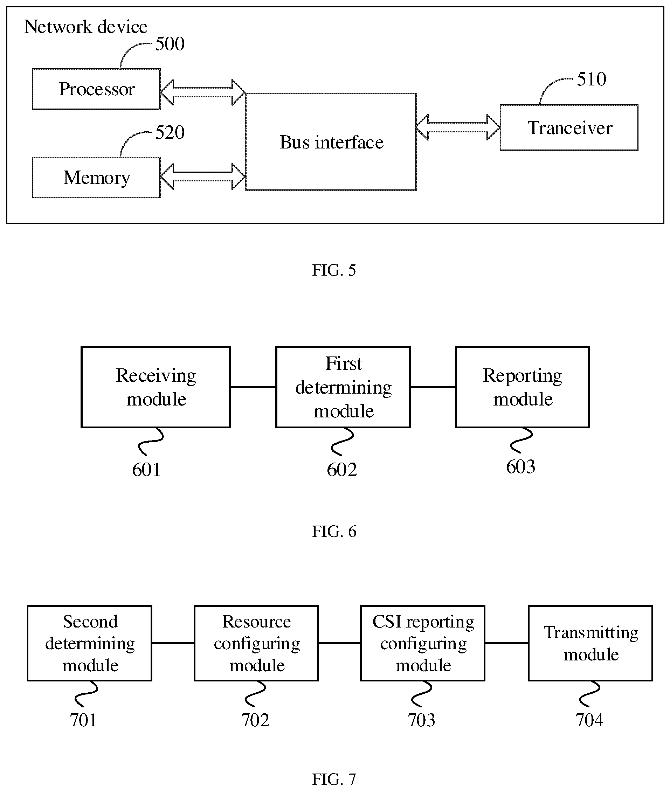

FIG. 5 is a schematic structural diagram of a network device according to an embodiment of the present application. As shown in FIG. 5, the terminal includes a memory 520, a transceiver 510 and a processor 500. The processor 500 and the memory 520 may also be physically arranged separately.

The memory 520 is used for storing a computer program, the transceiver 510 is used for receiving and transmitting data under control of the processor 500, and the processor 500 is used for reading the computer program in the memory 520 and performing the following operations:
determining a first number of pre-allocated resource groups based on a CSI-RS resource set;
determining a CSI-RS resource configuration including multiple resource pairing groups and first indication information corresponding to each resource pairing group based on the first number of pre-allocated resource groups, where the first indication information is used to indicate the resource pairing group and/or indicate each CSI-RS resource in the resource pairing group, and the resource pairing group includes CSI-RS resources selected from different pre-allocated resource groups;
determining a CSI reporting configuration based on whether to configure second indication information for each resource pairing group in the CSI-RS resource configuration; and
transmitting the CSI-RS resource configuration and the CSI reporting configuration to a terminal,
where the CSI reporting configuration includes a configuration for different transmission schemes, the transmission scheme includes a coordinated multi-point transmission mode or a combination of a single-point transmission mode and a coordinated multi-point transmission mode, the coordinated multi-point transmission mode includes a CJT and an NCJT, the single-point transmission mode includes a STRP, the second indication information is used to indicate that the resource pairing group is applied to a first transmission mode, and the first transmission mode includes a single-point transmission mode or a coordinated multi-point transmission mode.

In an embodiment, the transceiver 510 is used for receiving and transmitting data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 510 may include multiple elements, i.e., including a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a central processing unit (CPU), an application specific integrated circuit (ASIC), a field programmable gate array (FPGA) or a complex programmable logic device (CPLD), and the processor may also adopt a multi-core architecture.

In an embodiment, determining the CSI reporting configuration based on whether to configure the second indication information for each resource pairing group in the CSI-RS resource configuration includes:
in case that the second indication information is configured, determining the CSI reporting configuration corresponding to the second indication information based on the second indication information, where the CSI reporting configuration corresponding to the second indication information includes multiple transmission schemes, each transmission scheme at least includes the first transmission mode; or
in case that no second indication information is configured, determining that the CSI reporting configuration includes a configuration of one or more transmission schemes, where the transmission scheme includes a coordinated multi-point transmission mode, or a combination of a single-point transmission mode and a coordinated multi-point transmission mode, the coordinated multi-point transmission mode includes a CJT and an NCJT, and the single-point transmission mode includes a STRP.

In an embodiment, determining the CSI reporting configuration corresponding to the second indication information based on the second indication information includes:
in case that the second indication information indicates that the first transmission mode applied to the resource pairing group is a STRP, a transmission scheme in the CSI reporting configuration corresponding to the second indication information is a STRP;
in case that the second indication information indicates that the first transmission mode applied to the resource pairing group is a CJT, a transmission scheme in the CSI reporting configuration corresponding to the second indication information includes a CJT, a CJT and a STRP, and a CJT, an NCJT and a STRP; and
in case that the second indication information indicates that the first transmission mode applied to the resource pairing group is an NCJT, a transmission scheme in the CSI reporting configuration corresponding to the second indication information includes an NCJT, an NCJT and a STRP, and a CJT, an NCJT and a STRP.

In an embodiment, the CSI reporting configuration further includes a restriction indicator, and the restriction indicator is used to indicate the terminal to report CSI obtained by performing measurement using the resource pairing group in each transmission mode respectively, or to report CSI obtained by performing measurement using the resource pairing group in each transmission mode jointly.

It should be noted that the above network device and terminal provided by the embodiment of the present application may implement all the method steps implemented in the above method embodiment, and may achieve the same effect. The parts and beneficial effects of the embodiment of the present application that are the same as those of the method embodiment is not described in detail here.

FIG. 6 is a first schematic flowchart of an apparatus for reporting CSI according to an embodiment of the present application. The apparatus may be applied to the terminal. As shown in FIG. 6, the apparatus includes:
a receiving module 601, used for receiving a CSI-RS resource configuration and a CSI reporting configuration transmitted from the network device, where the CSI-RS resource configuration includes multiple resource pairing groups and first indication information corresponding to each resource pairing group, the first indication information is used to indicate the resource pairing group and/or indicate each CSI-RS resource in the resource pairing group, each resource pairing group includes CSI-RS resources selected from different pre-allocated resource groups, and the pre-allocated resource groups are a first number of pre-allocated resource groups determined based on a CSI-RS resource set;
a first determining module 602, used for, based on the CSI-RS resource configuration, determining one or more recommended resource pairing groups in the multiple resource pairing groups, and/or, determining one or more recommended CSI-RS resources in a recommended resource pairing group; and
a reporting module 603, used for, based on the CSI reporting configuration, reporting CSI obtained by performing measurement using the CSI-RS resource in the recommended resource pairing group, and reporting the recommended resource pairing group corresponding to the CSI, and/or, one or more recommended CSI-RS resources in the recommended resource pairing group,
where the CSI reporting configuration includes a configuration of one or more transmission schemes, and the first number is a positive integer.

In an embodiment, during the first determining module 602 being used for, based on the CSI-RS resource configuration, determining the one or more recommended resource pairing groups in the multiple resource pairing groups, the first determining module 602 is further used for:
determining first reference signal received powers (RSRPs) and first signal to interference plus noise ratios (SINRs) of each resource pairing group based on RSRPs and SINRs of each CSI-RS resource in each resource pairing group in the CSI-RS resource configuration; and
determining the recommended resource pairing group based on a first rule,
where the first rule includes one or more of the following:
   a front second number of resource pairing groups having a highest first RSRP;
   a front second number of resource pairing groups having a highest first SINR; or
   a resource pairing group having a highest first RSRP and a highest first SINR, where the first RSRP or the first SINR has a highest difference with a first threshold,
   where the first threshold is a preset minimum value of RSRPs or SINRs of all CSI-RS resources in the resource pairing group, and the second number is a positive integer.

In an embodiment, during the first determining module 602 being used for, based on the CSI-RS resource configuration, determining the one or more recommended CSI-RS resources in the recommended resource pairing group, the first determining module 602 is further used for:
determining RSRPs and SINRs of each CSI-RS resource in the recommended resource pairing group as second RSRPs and second SINRs respectively; and
determining the recommended CSI-RS resource in the recommended resource pairing group based on a second rule,
where the second rule includes one or more of the following:
   a front third number of the CSI-RS resources having a highest second RSRP;
   a front third number of the CSI-RS resources having a highest second SINR; or
   a CSI-RS resource having a second RSRP or a second SINR greater than or equal to a second threshold,
   where the second threshold is a preset minimum value of RSRPs or SINRs of the CSI-RS resource, and the third number is a positive integer.

In an embodiment, during the reporting module 603 being used for, based on the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group the reporting module 603 is further used for:
determining whether second indication information is configured for the multiple resource pairing groups in the CSI-RS resource configuration, where the second indication information is used to indicate a first transmission mode applied when the CSI-RS resource in the resource pairing group is used for measurement, and the first transmission mode includes a single-point transmission mode or a coordinated multi-point transmission mode; and
in case that no second indication information is configured in the CSI-RS resource configuration, based on a transmission scheme configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group; or
in case that the second indication information is configured in the CSI-RS resource configuration, based on a transmission scheme configured in the CSI reporting configuration corresponding to the second indication information, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the CSI reporting configuration includes a configuration of one or more transmission schemes, the transmission scheme includes one or more transmission modes, the tr ansmission mode includes a coordinated multi-point transmission mode or a combination of a single-point transmission mode and a coordinated multi-point transmission mode, the coordinated multi-point transmission mode includes a coherent joint transmission (CJT) and a non-coherent joint transmission (NCJT), and the single-point transmission mode includes a single transmission reception point (STRP).

In an embodiment, the reporting module 603 is further used for:
in case that no second indication information is configured in the CSI-RS resource configuration, based on the transmission scheme configured in the CSI reporting configuration, reporting the CSI obtained by performing measurement using the CSI-RS resource in the recommended resource pairing group,, and reporting the recommended resource pairing group corresponding to the CSI, and/or, the one or more recommended CSI-RS resources in the recommended resource pairing group including:
determining all transmission schemes for CSI reporting as a first transmission scheme set based on the CSI reporting configuration; and
based on whether a restriction indicator and the first transmission scheme set are configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the restriction indicator is used to indicate that rank indicators (RIs) of different transmission modes included in the transmission scheme are the same.

In an embodiment, the reporting module 603 is further used for:
based on whether the restriction indicator is configured in the CSI reporting configuration and the first transmission scheme set, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group, including:
determining a target resource set based on all CSI-RS resources included in the recommended resource pairing group or the one or more recommended CSI-RS resources in the recommended resource pairing group;
in case that no restriction indicator is configured, reporting CSI obtained by performing measurement using the target resource set in each transmission mode included in the first transmission scheme set respectively; or
in case that the restriction indicator is configured, reporting CSI obtained by performing measurement using the target resource set jointly in each transmission mode included in the first transmission scheme set; and
reporting the recommended resource pairing group corresponding to the CSI, and/or, the one or more recommended CSI-RS resources in the recommended resource pairing group.

In an embodiment, the reporting module 603 is further used for:
in case that no restriction indicator is configured, reporting the CSI obtained by performing measurement using the target resource set in each transmission mode included in the first transmission scheme set respectively, including:
in case that a transmission mode included in the first transmission scheme set is a single transmission mode, reporting measurement values of a pre-coding matrix indicator (PMI) and a layer indicator (LI) obtained by performing measurement using each CSI-RS resource in the target resource set, and measurement values of an RI and a channel quality indicator (CQI) obtained by performing measurement using the target resource set based on the single transmission mode; or
in case that a transmission mode included in the first transmission scheme set is a combined transmission mode, reporting measurement values of a PMI and an LI obtained by performing measurement using each CSI-RS resource in the target resource set, and measurement values of an RI and a CQI obtained by performing measurement using the target resource set based on each transmission mode included in the combined transmission mode respectively,
where the combined transmission mode at least includes a CJT, and the single transmission mode includes any one of a CJT, an NCJT or a STRP.

In an embodiment, the reporting module 603 is further used for:
in case that the restriction indicator is configured, reporting CSI obtained by performing measurement using the target resource set jointly in each transmission mode included in the first transmission scheme set, including:
in case that a transmission mode included in the first transmission scheme set is a single transmission mode, reporting measurement values of a PMI and an LI obtained by performing measurement using each CSI-RS resource in the target resource set, and measurement values of an RI and a CQI obtained by performing measurement using the target resource set based on the combined transmission mode; or
in case that a transmission mode included in the first transmission scheme set is a combined transmission mode, reporting a maximum value among measurement values of a PMI and an LI obtained by performing measurement using each CSI-RS resource in the target resource set, and measurement values of an RI and a CQI obtained by performing measurement using the target resource set based on each transmission mode included in the combined transmission mode,
where the combined transmission mode at least includes a CJT, and the single transmission mode includes any one of a CJT, an NCJT or a STRP.

In an embodiment, the reporting module 603 is further used for:
comparing CSI obtained by performing measurement using each CSI-RS resource in the target resource set in each transmission mode included in the first transmission scheme set, and determining a first CSI-RS resource in the target resource set used when CSI characterizing a best transmission performance is obtained; and
reporting the CSI corresponding to the first CSI-RS resource.

In an embodiment, the reporting module 603 is further used for:
in case that the second indication information is configured in the CSI-RS resource configuration, based on the transmission scheme configured in the CSI reporting configuration corresponding to the second indication information, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group, including:
determining a target transmission mode applied to the recommended resource pairing group and a CSI reporting configuration corresponding to the target transmission mode based on the second indication information;
determining a second transmission scheme set corresponding to each target transmission mode based on the target transmission mode and the CSI reporting configuration corresponding to the target transmission mode; and
based on whether a restriction indicator and the second transmission scheme set are configured in the CSI reporting configuration, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group,
where the CSI reporting configuration corresponding to the target transmission mode includes multiple transmission schemes, each transmission scheme at least includes the target transmission mode, and the target transmission mode includes a STRP, an NCJT or a CJT; and
the restriction indicator is used to indicate that RIs of different transmission modes included in the transmission scheme are the same.

In an embodiment, the reporting module 603 is further used for:
determining the second transmission scheme set corresponding to each target transmission mode based on the target transmission mode and the CSI reporting configuration corresponding to the target transmission mode, including:
in case that the target transmission mode is a STRP, the second transmission scheme set includes a STRP;
in case that the target transmission mode is a CJT, the second transmission scheme set includes a CJT, a CJT and a STRP, and a CJT, an NCJT and a STRP; or
in case that the target transmission mode is an NCJT, the second transmission scheme set includes an NCJT, an NCJT and a STRP, and a CJT, an NCJT and a STRP.

In an embodiment, the reporting module 603 is further used for:
based on whether the restriction indicator is configured in the CSI reporting configuration and the second transmission scheme set, reporting the CSI obtained by performing measurement using the CSI-RS resource in the recommended resource pairing group, and reporting the recommended resource pairing group corresponding to the CSI, and/or, the one or more recommended CSI-RS resources in the recommended resource pairing group, including:
in case that the second transmission scheme set includes the CJT, determining the target resource set based on all CSI-RS resources included in the recommended resource pairing group or multiple combinations of one or more recommended CSI-RS resources in the recommended resource pairing group; or
in case that the second transmission scheme set does not include the CJT, determining the target resource set based on all CSI-RS resources included in the recommended resource pairing group or one or more recommended CSI-RS resources in the recommended resource pairing group;
in case that no restriction indicator is configured, reporting CSI obtained by performing measurement using the target resource set in each transmission mode included in the second transmission scheme set respectively based on the second transmission scheme set; or
in case that the restriction indicator is configured, reporting CSI obtained by performing measurement using the target resource set in each transmission mode included in the second transmission scheme set jointly based on the second transmission scheme set; and
reporting the recommended resource pairing group corresponding to the CSI, and/or, the one or more recommended CSI-RS resources in the recommended resource pairing group.

In an embodiment, the reporting module 603 is further used for:
in case that no restriction indicator is configured, reporting the CSI obtained by performing measurement using the target resource set in each transmission mode included in the second transmission scheme set respectively based on the second transmission scheme set includes:
in case that the transmission mode included in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode included in the second transmission scheme set is a combined transmission mode, based on each transmission mode included in the combined transmission mode respectively, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set,
where the combined transmission mode at least includes a CJT, and the single transmission mode includes any one of a CJT, an NCJT or a STRP; and
the second resource set is the CSI-RS resource set with a largest number of CSI-RS resources in the target resource set.

In an embodiment, the reporting module 603 is further used for:
in case that the restriction indicator is configured, reporting the CSI obtained by performing measurement using the target resource set in each transmission mode included in the second transmission scheme set jointly based on the second transmission scheme set includes:
in case that the transmission mode included in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode included in the second transmission scheme set is a combined transmission mode, based on each transmission mode included in the combined transmission mode, reporting a maximum value among measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in the target resource set, and measurement values of an RI and a CQI obtained by performing measurement using the target resource set,
where the combined transmission mode at least includes a CJT, and the single transmission mode includes any one of a CJT, an NCJT or a STRP; and
the second resource set is the CSI-RS resource set with a largest number of CSI-RS resources in the target resource set.

In an embodiment, the reporting module 603 is further used for:
comparing CSI obtained by performing measurement using each CSI-RS resource in the target resource set in each transmission mode included in the second transmission scheme set, and determining a first CSI-RS resource in the target resource set used when the CSI characterizing a best transmission performance is obtained; and
reporting the CSI corresponding to the first CSI-RS resource.

It should be noted that the apparatus for reporting the CSI provided by the embodiment of the present application may implement all the method steps performed by the terminal implemented by the method embodiment, and may achieve the same effect. The parts and beneficial effects of this embodiment that are the same or corresponding to the method embodiment is not described in detail.

FIG. 7 is a second schematic flowchart of an apparatus for reporting CSI according to an embodiment of the present application. The apparatus may be applied to a network device. As shown in FIG. 7, the apparatus includes:
a second determining module 701, used for determining a first number of pre-allocated resource groups based on a CSI-RS resource set;
a resource configuring module 702, used for determining a CSI-RS resource configuration including multiple resource pairing groups and first indication information corresponding to each resource pairing group based on the first number of pre-allocated resource groups, where the first indication information is used to indicate the resource pairing group and/or indicate each CSI-RS resource in the resource pairing group, and the resource pairing group includes CSI-RS resources selected from different pre-allocated resource groups;
a CSI reporting configuring module 703, used for determining a CSI reporting configuration based on whether to configure second indication information for each resource pairing group in the CSI-RS resource configuration; and
a transmitting module 704, used for transmitting the CSI-RS resource configuration and the CSI reporting configuration to a terminal,
where the CSI reporting configuration includes a configuration for different transmission schemes, the transmission scheme includes a coordinated multi-point transmission mode or a combination of a single-point transmission mode and a coordinated multi-point transmission mode, the coordinated multi-point transmission mode includes a CJT and an NCJT, the single-point transmission mode includes a STRP, the second indication information is used to indicate that the resource pairing group is applied to a first transmission mode, and the first transmission mode includes a single-point transmission mode or a coordinated multi-point transmission mode.

In an embodiment, during the CSI reporting configuring module 703 being used for determining a CSI reporting configuration based on whether to configure second indication information for each resource pairing group in the CSI-RS resource configuration, the CSI reporting configuring module 703 is further used for:
in case that the second indication information is configured, determining the CSI reporting configuration corresponding to the second indication information based on the second indication information, where the CSI reporting configuration corresponding to the second indication information includes multiple transmission schemes, each transmission scheme at least includes the first transmission mode; or
in case that no second indication information is configured, determining that the CSI reporting configuration includes a configuration of one or more transmission schemes, where the transmission scheme includes a coordinated multi-point transmission mode, or a combination of a single-point transmission mode and a coordinated multi-point transmission mode, the coordinated multi-point transmission mode includes a CJT and an NCJT, and the single-point transmission mode includes a STRP.

In an embodiment, during the CSI reporting configuring module 703 being used for determining the CSI reporting configuration corresponding to the second indication information based on the second indication information the CSI reporting configuring module 703 is further used for:
in case that the second indication information indicates that the first transmission mode applied to the resource pairing group is a STRP, a transmission scheme in the CSI reporting configuration corresponding to the second indication information is a STRP;
in case that the second indication information indicates that the first transmission mode applied to the resource pairing group is a CJT, a transmission scheme in the CSI reporting configuration corresponding to the second indication information includes a CJT, a CJT and a STRP, and a CJT, an NCJT and a STRP; and
in case that the second indication information indicates that the first transmission mode applied to the resource pairing group is an NCJT, a transmission scheme in the CSI reporting configuration corresponding to the second indication information includes an NCJT, an NCJT and a STRP, and a CJT, an NCJT and a STRP.

In an embodiment, the CSI reporting configuration further includes a restriction indicator, and the restriction indicator is used to indicate the terminal to report CSI obtained by performing measurement using the resource pairing group in each transmission mode respectively, or to report CSI obtained by performing measurement using the resource pairing group in each transmission mode jointly.

It should be noted here that the apparatus for reporting the CSI provided by the embodiment of the present application may implement all the method steps performed by the network device implemented by the method embodiment, and may achieve the same effect. The parts and beneficial effects that are the same or corresponding to the method embodiment in this embodiment is not described in detail here.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

It should be noted that the apparatuses provided by the embodiments of the present application may implement all the method steps implemented by the above-mentioned method embodiment, and may achieve the same effect. The parts and beneficial effects of the present embodiment that are the same as those of the method embodiment is not described in detail here.

An embodiment of the present application further provides a computer program product. The computer program product includes a computer program stored on a non-transitory computer-readable storage medium, where the computer program includes a program instruction, when the program instruction is executed by a computer, the computer may perform steps of the above-mentioned method for reporting the CSI, for example, it may include:
receiving a CSI-RS resource configuration and a CSI reporting configuration transmitted from the network device, where the CSI-RS resource configuration includes multiple resource pairing groups and first indication information corresponding to each resource pairing group, the first indication information is used to indicate the resource pairing group and/or indicate each CSI-RS resource in the resource pairing group, each resource pairing group includes CSI-RS resources selected from different pre-allocated resource groups, and the pre-allocated resource groups are a first number of pre-allocated resource groups determined based on a CSI-RS resource set;
based on the CSI-RS resource configuration, determining one or more recommended resource pairing groups in the multiple resource pairing groups, and/or, determining one or more recommended CSI-RS resources in a recommended resource pairing group; and
based on the CSI reporting configuration, reporting CSI obtained by performing measurement using the CSI-RS resource in the recommended resource pairing group, and reporting the recommended resource pairing group corresponding to the CSI, and/or, one or more recommended CSI-RS resources in the recommended resource pairing group,
where the CSI reporting configuration includes a configuration of one or more transmission schemes, and the first number is a positive integer.

Alternatively, it may include:
determining a first number of pre-allocated resource groups based on a CSI-RS resource set;
determining a CSI-RS resource configuration including multiple resource pairing groups and first indication information corresponding to each resource pairing group based on the first number of pre-allocated resource groups, where the first indication information is used to indicate the resource pairing group and/or indicate each CSI-RS resource in the resource pairing group, and the resource pairing group includes CSI-RS resources selected from different pre-allocated resource groups;
determining a CSI reporting configuration based on whether to configure second indication information for each resource pairing group in the CSI-RS resource configuration; and
transmitting the CSI-RS resource configuration and the CSI reporting configuration to a terminal,
where the CSI reporting configuration includes a configuration for different transmission schemes, the transmission scheme includes a coordinated multi-point transmission mode or a combination of a single-point transmission mode and a coordinated multi-point transmission mode, the coordinated multi-point transmission mode includes a CJT and an NCJT, the single-point transmission mode includes a STRP, the second indication information is used to indicate that the resource pairing group is applied to a first transmission mode, and the first transmission mode includes a single-point transmission mode or a coordinated multi-point transmission mode.

An embodiment of the present application further provides a computer-readable storage medium, where the computer-readable storage medium stores a computer program, and the computer program is used to cause a computer to perform steps of the method for reporting the CSI provided by the above embodiments.

It should be noted that the computer-readable storage medium provided by the embodiment of the present application may implement all the method steps implemented in the above method embodiment and may achieve the same effect. The parts and beneficial effects of this embodiment that are the same as those of the method embodiment is not described in detail here.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions provided by the embodiments of the present application may be applied to a variety of systems, especially 5G systems. For example, applicable systems may include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems include a terminal device and a network device. The system may further include a core network parts, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may be personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, or a user device, which is not limited in the embodiments of the present application.

The network device involved in the embodiments of the present application may be a base station, and the base station may include multiple cells providing services for a terminal. Depending on specific application scenarios, the base station may also be called an access point (AP), or may be a device in the access network that communicates with wireless terminal through one or more sectors on the air interface, or other names. The network device may be used to exchange received air frames with Internet protocol (IP) packets, and act as a router between wireless terminal and the rest of the access network, and the rest of the access network may include an Internet protocol (IP) communication network. The network device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), a B5G base station in beyond 5th generation mobile communication system (B5G), a 6G base station in 6G (6th generation mobile communication technology) network architecture, may also be a home evolved node B (HeNB), a relay node, a femto base station (femto), a pico base station (pico), etc., which are not limited in the embodiments of the present application. In some network structures, a network device may include a centralized unit (CU) node and a distributed unit (DU) node, and the centralized unit and the distributed unit may also be geographically separated.

Network devices and terminal devices may each use one or more antennas for multi-input multi-output (MIMO) transmission. The MIMO transmission may be single user MIMO (SU-MIMO) or multi user MIMO (MU-MIMO). Depending on the form and the number of antenna combinations, MIMO transmission may be 2D-MIMO, 3D-MIMO, FD-MIMO or massive-MIMO, or may be diversity transmission, precoding transmission or beamforming transmission, etc.

As may be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It may be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

## Claims

1. A method for reporting channel state information, CSI, performed by a terminal, comprising:
receiving (201) a channel state information-reference signal, CSI-RS, resource configuration and a CSI reporting configuration transmitted from the network device, wherein the CSI-RS resource configuration comprises multiple resource pair groups and first indication information corresponding to each resource pair group, the first indication information is used to indicate a resource pair group from the multiple resource pair groups and/or indicate each CSI-RS resource in the resource pair group, each resource pair group comprises CSI-RS resources selected from different CSI-RS resource groups, and a number of CSI-RS resource groups is determined to be M based on a CSI-RS resource set; wherein the CSI-RS resource set comprises multiple CSI-RS resources;
based on the CSI-RS resource configuration, determining (202) one or more to-be-reported resource pair groups in the multiple resource pair groups, and determining one or more to-be-reported CSI-RS resources in a to-be-reported resource pair group; and
based on the CSI reporting configuration, reporting CSI obtained by performing measurement using the one or more to-be-reported CSI-RS resources in the to-be-reported resource pair group, and reporting (203) the to-be-reported resource pair group corresponding to the CSI, and/or, one or more to-be-reported CSI-RS resources in the to-be-reported resource pair group,
wherein the CSI reporting configuration comprises a configuration for different transmission schemes, and *M* is a positive integer,
a transmission scheme comprises one or more transmission modes, the transmission mode comprises a coordinated multi-point transmission mode or a combination of a single-point transmission mode and a coordinated multi-point transmission mode, the coordinated multi-point transmission mode comprises a coherent joint transmission, CJT, and a non-coherent joint transmission, NCJT, the single-point transmission mode comprises a single transmission reception point, STRP, a second indication information is used to indicate that the resource pair group is applied to a first transmission mode, and the first transmission mode comprises a single-point transmission mode or a coordinated multi-point transmission mode.

2. The method of claim 1, wherein based on the CSI-RS resource configuration, determining the one or more to-be-reported resource pair groups in the multiple resource pair groups comprises:
determining first reference signal received powers, RSRPs, and first signal to interference plus noise ratios, SINRs, of each resource pair group based on RSRPs and SINRs of each CSI-RS resource in each resource pair group in the CSI-RS resource configuration; and
determining the to-be-reported resource pair group based on a first rule,
wherein the first rule comprises one or more of the following:
top *N* resource pair groups having a highest first RSRP;
top N resource pair groups having a highest first SINR; or
a resource pair group having a highest first RSRP and a highest first SINR, wherein the first RSRP or the first SINR has a highest difference with a first threshold,
wherein the first threshold is a preset minimum value of RSRPs or SINRs of all CSI-RS resources in the resource pair group, and *N* is a positive integer;
wherein based on the CSI-RS resource configuration, determining the one or more to-be-reported CSI-RS resources in the to-be-reported resource pair group comprises:
determining RSRPs and SINRs of each CSI-RS resource in the to-be-reported resource pair group as second RSRPs and second SINRs respectively; and
determining the to-be-reported CSI-RS resource in the to-be-reported resource pair group based on a second rule,
wherein the second rule comprises one or more of the following:
top L CSI-RS resources having a highest second RSRP;
top L CSI-RS resources having a highest second SINR; or
a CSI-RS resource having a second RSRP or a second SINR greater than or equal to a second threshold,
wherein the second threshold is a preset minimum value of RSRPs or SINRs of the CSI-RS resource, and *L* is a positive integer.

3. The method of claim 1, wherein based on the CSI reporting configuration, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group comprises:
determining whether second indication information is configured for the multiple resource pair groups in the CSI-RS resource configuration, wherein the second indication information is used to indicate a first transmission mode applied when the CSI-RS resource in the resource pair group is used for measurement, and the first transmission mode comprises a single-point transmission mode or a coordinated multi-point transmission mode; and
in case that no second indication information is configured in the CSI-RS resource configuration, based on a transmission scheme configured in the CSI reporting configuration, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group; or
in case that the second indication information is configured in the CSI-RS resource configuration, based on a transmission scheme configured in the CSI reporting configuration corresponding to the second indication information, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group,
wherein the CSI reporting configuration comprises a configuration of one or more transmission schemes, the transmission scheme comprises one or more transmission modes, the transmission mode comprises a coordinated multi-point transmission mode or a combination of a single-point transmission mode and a coordinated multi-point transmission mode, the coordinated multi-point transmission mode comprises a coherent joint transmission, CJT, and a non-coherent joint transmission, NCJT, and the single-point transmission mode comprises a single transmission reception point, STRP.

4. The method of claim 3, wherein in case that no second indication information is configured in the CSI-RS resource configuration, based on the transmission scheme configured in the CSI reporting configuration, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group comprises:
determining all transmission schemes for CSI reporting as a first transmission scheme set based on the CSI reporting configuration; and
based on whether a restriction indicator and the first transmission scheme set are configured in the CSI reporting configuration, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group,
wherein the restriction indicator is used to indicate that rank indicators, RIs, of different transmission modes comprised in the transmission scheme are the same,
wherein based on whether the restriction indicator is configured in the CSI reporting configuration and the first transmission scheme set, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group comprises:
determining a target resource set based on all CSI-RS resources comprised in the to-be-reported resource pair group or the one or more to-be-reported CSI-RS resources in the to-be-reported resource pair group;
in case that no restriction indicator is configured, reporting CSI obtained by performing measurement using the target resource set in each transmission mode comprised in the first transmission scheme set respectively; or
in case that the restriction indicator is configured, reporting CSI obtained by performing measurement using the target resource set jointly in each transmission mode comprised in the first transmission scheme set; and
reporting the to-be-reported resource pair group corresponding to the CSI, and/or, the one or more to-be-reported CSI-RS resources in the to-be-reported resource pair group.

5. The method of claim 4, wherein in case that no restriction indicator is configured, reporting the CSI obtained by performing measurement using the target resource set in each transmission mode comprised in the first transmission scheme set respectively comprises:
in case that a transmission mode comprised in the first transmission scheme set is a single transmission mode, reporting measurement values of a pre-coding matrix indicator, PMI, and a layer indicator, LI, obtained by performing measurement using each CSI-RS resource in the target resource set, and measurement values of an RI and a channel quality indicator, CQI, obtained by performing measurement using the target resource set based on the single transmission mode; or
in case that a transmission mode comprised in the first transmission scheme set is a combined transmission mode, reporting measurement values of a PMI and an LI obtained by performing measurement using each CSI-RS resource in the target resource set, and measurement values of an RI and a CQI obtained by performing measurement using the target resource set based on each transmission mode comprised in the combined transmission mode respectively,
wherein the combined transmission mode at least comprises a CJT, and the single transmission mode comprises any one of a CJT, an NCJT or a STRP.

6. The method of claim 4, wherein in case that the restriction indicator is configured, reporting CSI obtained by performing measurement using the target resource set jointly in each transmission mode comprised in the first transmission scheme set comprises:
in case that a transmission mode comprised in the first transmission scheme set is a single transmission mode, reporting measurement values of a PMI and an LI obtained by performing measurement using each CSI-RS resource in the target resource set, and measurement values of an RI and a CQI obtained by performing measurement using the target resource set based on the combined transmission mode; or
in case that a transmission mode comprised in the first transmission scheme set is a combined transmission mode, reporting a maximum value among measurement values of a PMI and an LI obtained by performing measurement using each CSI-RS resource in the target resource set, and measurement values of an RI and a CQI obtained by performing measurement using the target resource set based on each transmission mode comprised in the combined transmission mode,
wherein the combined transmission mode at least comprises a CJT, and the single transmission mode comprises any one of a CJT, an NCJT or a STRP.

7. The method of claim 5 or 6, further comprising:
comparing CSI obtained by performing measurement using each CSI-RS resource in the target resource set in each transmission mode comprised in the first transmission scheme set, and determining a first CSI-RS resource in the target resource set used when CSI characterizing a best transmission performance is obtained; and
reporting the CSI corresponding to the first CSI-RS resource.

8. The method of claim 3, wherein in case that the second indication information is configured in the CSI-RS resource configuration, based on the transmission scheme configured in the CSI reporting configuration corresponding to the second indication information, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group comprises:
determining a target transmission mode applied to the to-be-reported resource pair group and a CSI reporting configuration corresponding to the target transmission mode based on the second indication information;
determining a second transmission scheme set corresponding to each target transmission mode based on the target transmission mode and the CSI reporting configuration corresponding to the target transmission mode; and
based on whether a restriction indicator and the second transmission scheme set are configured in the CSI reporting configuration, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group,
wherein the CSI reporting configuration corresponding to the target transmission mode comprises multiple transmission schemes, each transmission scheme at least comprises the target transmission mode, and the target transmission mode comprises a STRP, an NCJT or a CJT; and
the restriction indicator is used to indicate that RIs of different transmission modes comprised in the transmission scheme are the same,
wherein determining the second transmission scheme set corresponding to each target transmission mode based on the target transmission mode and the CSI reporting configuration corresponding to the target transmission mode comprises:
in case that the target transmission mode is a STRP, the second transmission scheme set comprises a STRP;
in case that the target transmission mode is a CJT, the second transmission scheme set comprises a CJT, a CJT and a STRP, and a CJT, an NCJT and a STRP; or
in case that the target transmission mode is an NCJT, the second transmission scheme set comprises an NCJT, an NCJT and a STRP, and a CJT, an NCJT and a STRP,
wherein based on whether the restriction indicator is configured in the CSI reporting configuration and the second transmission scheme set, reporting the CSI obtained by performing measurement using the CSI-RS resource in the to-be-reported resource pair group, and reporting the to-be-reported resource pair group corresponding to the CSI, and/or, the one or more to-be-reported CSI-RS resources in the to-be-reported resource pair group comprises:
in case that the second transmission scheme set comprises the CJT, determining the target resource set based on all CSI-RS resources comprised in the to-be-reported resource pair group or multiple combinations of one or more to-be-reported CSI-RS resources in the to-be-reported resource pair group; or
in case that the second transmission scheme set does not comprise the CJT, determining the target resource set based on all CSI-RS resources comprised in the to-be-reported resource pair group or one or more to-be-reported CSI-RS resources in the to-be-reported resource pair group;
in case that no restriction indicator is configured, reporting CSI obtained by performing measurement using the target resource set in each transmission mode comprised in the second transmission scheme set respectively based on the second transmission scheme set; or
in case that the restriction indicator is configured, reporting CSI obtained by performing measurement using the target resource set in each transmission mode comprised in the second transmission scheme set jointly based on the second transmission scheme set; and
reporting the to-be-reported resource pair group corresponding to the CSI, and/or, the one or more to-be-reported CSI-RS resources in the to-be-reported resource pair group.

9. The method of claim 8, wherein in case that no restriction indicator is configured, reporting the CSI obtained by performing measurement using the target resource set in each transmission mode comprised in the second transmission scheme set respectively based on the second transmission scheme set comprises:
in case that the transmission mode comprised in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode comprised in the second transmission scheme set is a combined transmission mode, based on each transmission mode comprised in the combined transmission mode respectively, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set,
wherein the combined transmission mode at least comprises a CJT, and the single transmission mode comprises any one of a CJT, an NCJT or a STRP; and
the second resource set is the CSI-RS resource set with a largest number of CSI-RS resources in the target resource set.

10. The method of claim 8, wherein in case that the restriction indicator is configured, reporting the CSI obtained by performing measurement using the target resource set in each transmission mode comprised in the second transmission scheme set jointly based on the second transmission scheme set comprises:
in case that the transmission mode comprised in the second transmission scheme set is a single transmission mode, based on the single transmission mode, reporting measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in a second resource set, and measurement values of an RI and a CQI obtained by performing measurement using the target resource set; or
in case that the transmission mode comprised in the second transmission scheme set is a combined transmission mode, based on each transmission mode comprised in the combined transmission mode, reporting a maximum value among measurement values of a PMI and an LI obtained by performing measurement using each CSI-RS resource in the target resource set, and measurement values of an RI and a CQI obtained by performing measurement using the target resource set; or reporting measurement values of a PMI and an LI obtained by performing measurement using each CSI-RS resource in the target resource set, and measurement values of an RI and a CQI obtained by performing measurement using the target resource set,
wherein the combined transmission mode at least comprises a CJT, and the single transmission mode comprises any one of a CJT, an NCJT or a STRP; and
the second resource set is the CSI-RS resource set with a largest number of CSI-RS resources in the target resource set.

11. The method of claim 9 or 10, further comprising:
comparing CSI obtained by performing measurement using each CSI-RS resource in the target resource set in each transmission mode comprised in the second transmission scheme set, and determining a first CSI-RS resource in the target resource set used when the CSI characterizing a best transmission performance is obtained; and
reporting the CSI corresponding to the first CSI-RS resource.

12. A method for reporting channel state information, CSI, performed by a network device, comprising:
determining (301) *M* channel state information-reference signal, CSI-RS, resource groups based on a CSI-RS resource set, wherein the CSI-RS resource set comprises multiple CSI-RS resources;
determining (302) a CSI-RS resource configuration comprising multiple resource pair groups and first indication information corresponding to each resource pair group wherein the first indication information is used to indicate a resource pair group from the multiple resource pair groups and/or indicate each CSI-RS resource in the resource pair group, and each resource pair group comprises CSI-RS resources selected from different CSI-RS resource groups;
determining (303) a CSI reporting configuration based on whether to configure second indication information for each resource pair group in the CSI-RS resource configuration; and
transmitting (304) the CSI-RS resource configuration and the CSI reporting configuration to a terminal,
wherein the CSI reporting configuration comprises a configuration for different transmission schemes, and M is a positive integer, a transmission scheme comprises one or more transmission modes, the transmission mode comprises a coordinated multi-point transmission mode or a combination of a single-point transmission mode and a coordinated multi-point transmission mode, the coordinated multi-point transmission mode comprises a coherent joint transmission, CJT, and a non-coherent joint transmission, NCJT, the single-point transmission mode comprises a single transmission reception point, STRP, a second indication information is used to indicate that the resource pair group is applied to a first transmission mode, and the first transmission mode comprises a single-point transmission mode or a coordinated multi-point transmission mode.

13. The method of claim 12, wherein determining the CSI reporting configuration based on whether to configure the second indication information for each resource pair group in the CSI-RS resource configuration comprises:
in case that the second indication information is configured, determining the CSI reporting configuration corresponding to the second indication information based on the second indication information, wherein the CSI reporting configuration corresponding to the second indication information comprises multiple transmission schemes, each transmission scheme at least comprises the first transmission mode; or
in case that no second indication information is configured, determining that the CSI reporting configuration comprises a configuration of one or more transmission schemes, wherein the transmission scheme comprises a coordinated multi-point transmission mode, or a combination of a single-point transmission mode and a coordinated multi-point transmission mode, the coordinated multi-point transmission mode comprises a CJT and an NCJT, and the single-point transmission mode comprises a STRP,
wherein determining the CSI reporting configuration corresponding to the second indication information based on the second indication information comprises:
in case that the second indication information indicates that the first transmission mode applied to the resource pair group is a STRP, determining that a transmission scheme in the CSI reporting configuration corresponding to the second indication information is a STRP;
in case that the second indication information indicates that the first transmission mode applied to the resource pair group is a CJT, determining that a transmission scheme in the CSI reporting configuration corresponding to the second indication information comprises a CJT, a CJT and a STRP, and a CJT, an NCJT and a STRP; and
in case that the second indication information indicates that the first transmission mode applied to the resource pair group is an NCJT, determining that a transmission scheme in the CSI reporting configuration corresponding to the second indication information comprises an NCJT, an NCJT and a STRP, and a CJT, an NCJT and a STRP,
wherein the CSI reporting configuration further comprises a restriction indicator, and the restriction indicator is used to indicate the terminal to report CSI obtained by performing measurement using the resource pair group in each transmission mode respectively, or to report CSI obtained by performing measurement using the resource pair group in each transmission mode jointly.

14. A terminal apparatus for reporting channel state information, CSI, comprising:
a receiving module (601), used for receiving a channel state information-reference signal, CSI-RS, resource configuration and a CSI reporting configuration transmitted from the network device, wherein the CSI-RS resource configuration comprises multiple resource pair groups and first indication information corresponding to each resource pair group, the first indication information is used to indicate a resource pair group from the multiple resource pair groups and/or indicate each CSI-RS resource in the resource pair group, each resource pair group comprises CSI-RS resources selected from different CSI-RS resource groups, and a number of CSI-RS resource groups is determined to be M based on a CSI-RS resource set; wherein the CSI-RS resource set comprises multiple CSI-RS resources;
a first determining module (602), used for, based on the CSI-RS resource configuration, determining one or more to-be-reported resource pair groups in the multiple resource pair groups, and determining one or more to-be-reported CSI-RS resources in a to-be-reported resource pair group; and
a reporting module (603), used for, based on the CSI reporting configuration, reporting CSI obtained by performing measurement using the one or more to-be-reported CSI-RS resources in the to-be-reported resource pair group, and reporting the to-be-reported resource pair group corresponding to the CSI, and/or, one or more to-be-reported CSI-RS resources in the to-be-reported resource pair group,
wherein the CSI reporting configuration comprises a configuration for different transmission schemes, and *M* is a positive integer, a transmission scheme comprises one or more transmission modes, the transmission mode comprises a coordinated multi-point transmission mode or a combination of a single-point transmission mode and a coordinated multi-point transmission mode, the coordinated multi-point transmission mode comprises a coherent joint transmission, CJT, and a non-coherent joint transmission, NCJT, the single-point transmission mode comprises a single transmission reception point, STRP, a second indication information is used to indicate that the resource pair group is applied to a first transmission mode, and the first transmission mode comprises a single-point transmission mode or a coordinated multi-point transmission mode.

15. A network device apparatus for reporting channel state information, CSI, comprising:
a second determining module (701), used for determining *M* channel state information-reference signal, CSI-RS, resource groups based on a CSI-RS resource set, wherein the CSI-RS resource set comprisese multiple CSI-RS resources;
a resource configuring module (702), used for determining a CSI-RS resource configuration comprising multiple resource pair groups and first indication information corresponding to each resource pair group based on *M* CSI-RS resource groups, wherein the first indication information is used to indicate a resource pair group from the multiple resource pair groups and/or indicate each CSI-RS resource in the resource pair group, and each resource pair group comprises CSI-RS resources selected from different CSI-RS resource groups;
a CSI reporting configuring module (703), used for determining a CSI reporting configuration based on whether to configure second indication information for each resource pair group in the CSI-RS resource configuration; and
a transmitting module (704), used for transmitting the CSI-RS resource configuration and the CSI reporting configuration to a terminal,
wherein the CSI reporting configuration comprises a configuration for different transmission schemes, and M is a positive integer, a transmission scheme comprises one or more transmission modes, the transmission mode comprises a coordinated multi-point transmission mode or a combination of a single-point transmission mode and a coordinated multi-point transmission mode, the coordinated multi-point transmission mode comprises a coherent joint transmission, CJT, and a NCJT, the single-point transmission mode comprises a single transmission reception point, STRP, a second indication information is used to indicate that the resource pair group is applied to a first transmission mode, and the first transmission mode comprises a single-point transmission mode or a coordinated multi-point transmission mode.

## Patentansprüche

1. Verfahren zum Melden von Kanalzustandsinformationen, CSI, die von einem Endgerät durchgeführt werden, umfassend:
Empfangen (201) eines Kanalzustandsinformationsreferenzsignals, CSI-RS, einer Ressourcenkonfiguration und einer CSI-Meldungskonfiguration, die von der Netzwerkvorrichtung übertragen werden, wobei die CSI-RS-Ressourcenkonfiguration mehrere Ressourcenpaargruppen und erste Anzeigeinformationen umfasst, die jeder Ressourcenpaargruppe entsprechen, die ersten Anzeigeinformationen verwendet werden, um eine Ressourcenpaargruppe aus den mehreren Ressourcenpaargruppen anzuzeigen und/oder jede CSI-RS-Ressource in der Ressourcenpaargruppe anzuzeigen, jede Ressourcenpaargruppe CSI-RS-Ressourcen umfasst, die aus verschiedenen CSI-RS-Ressourcengruppen ausgewählt sind, und eine Anzahl von CSI-RS-Ressourcengruppen auf Grundlage eines CSI-RS-Ressourcensatzes als M bestimmt wird; wobei der CSI-RS-Ressourcensatz mehrere CSI-RS-Ressourcen umfasst;
auf Grundlage der CSI-RS-Ressourcenkonfiguration, Bestimmen (202) einer oder mehrerer zu meldender Ressourcenpaargruppen in den mehreren Ressourcenpaargruppen und Bestimmen einer oder mehrerer zu meldender CSI-RS-Ressourcen in einer zu meldenden Ressourcenpaargruppe; und
auf Grundlage der CSI-Meldungskonfiguration, Melden des CSI, der durch Durchführen einer Messung unter Verwendung der einen oder mehreren zu meldenden CSI-RS-Ressourcen in der zu meldenden Ressourcenpaargruppe erhalten wurde, und
Melden (203) der zu meldenden Ressourcenpaargruppe, die dem CSI entspricht, und/oder einer oder mehrerer zu meldender CSI-RS-Ressourcen in der zu meldenden Ressourcenpaargruppe,
wobei die CSI-Meldungskonfiguration eine Konfiguration für verschiedene Übertragungsschemata umfasst und M eine positive ganze Zahl ist, ein Übertragungsschema einen oder mehrere Übertragungsmodi umfasst, der Übertragungsmodus einen koordinierten Mehrpunkt-Übertragungsmodus oder eine Kombination aus einem Einzelpunkt-Übertragungsmodus und einem koordinierten Mehrpunkt-Übertragungsmodus umfasst, der koordinierte Mehrpunkt-Übertragungsmodus eine kohärente gemeinsame Übertragung, CJT, und eine nicht-kohärente gemeinsame Übertragung, NCJT, umfasst, der Einzelpunkt-Übertragungsmodus einen Einzelübetragungsempfangspunkt, STRP, umfasst, zweite Anzeigeinformationen verwendet werden, um anzuzeigen, dass die Ressourcenpaargruppe auf einen ersten Übertragungsmodus angewendet wird, und der erste Übertragungsmodus einen Einzelpunkt-Übertragungsmodus oder einen koordinierten Mehrpunkt-Übertragungsmodus umfasst.

2. Verfahren nach Anspruch 1, wobei das Bestimmen der einen oder mehreren zu meldenden Ressourcenpaargruppen in den mehreren Ressourcenpaargruppen auf Grundlage der CSI-RS-Ressourcenkonfiguration Folgendes umfasst:
Bestimmen von ersten Referenzsignal-Empfangsleistungen, RSRPs, und ersten Signal-zu-Interferenz-Plus-Rausch-Verhältnissen, SINRs, jeder Ressourcenpaargruppe auf Grundlage von RSRPs und SINRs jeder CSI-RS-Ressource in jeder Ressourcenpaargruppe in der CSI-RS-Ressourcenkonfiguration; und
Bestimmen der zu meldenden Ressourcenpaargruppe auf Grundlage einer ersten Regel,
wobei die erste Regel eines oder mehrere der folgenden umfasst:
obere N-Ressourcenpaargruppen mit einem höchsten ersten RSRP;
obere N-Ressourcenpaargruppen mit einem höchsten ersten SINR; oder
eine Ressourcenpaargruppe mit einem höchsten ersten RSRP und einem höchsten ersten SINR, wobei der erste RSRP oder der erste SINR eine höchste Differenz mit einem ersten Schwellenwert aufweist,
wobei der erste Schwellenwert ein voreingestellter Mindestwert von RSRPs oder SINRs aller CSI-RS-Ressourcen in der Ressourcenpaargruppe ist und N eine positive ganze Zahl ist;
wobei das Bestimmen der einen oder mehreren zu meldenden CSI-RS-Ressourcen in der zu meldenden Ressourcenpaargruppe auf Grundlage der CSI-RS-Ressourcenkonfiguration Folgendes umfasst:
Bestimmen von RSRPs und SINRs jeder CSI-RS-Ressource in der zu meldenden Ressourcenpaargruppe als zweite RSRPs bzw. zweite SINRs; und
Bestimmen der zu meldenden CSI-RS-Ressource in der zu meldenden Ressourcenpaargruppe auf Grundlage einer zweiten Regel,
wobei die zweite Regel eines oder mehrere der folgenden umfasst:
obere *L*-CSI-RS-Ressourcen mit einem höchsten zweiten RSRP;
obere *L*-CSI-RS-Ressourcen mit einem höchsten zweiten SINR; oder
eine CSI-RS-Ressource mit einem zweiten RSRP oder einem zweiten SINR größer oder gleich einem zweiten Schwellenwert,
wobei der zweite Schwellenwert ein voreingestellter Mindestwert von RSRPs oder SINRs der CSI-RS-Ressource ist und L eine positive ganze Zahl ist.

3. Verfahren nach Anspruch 1, wobei auf Grundlage der CSI-Meldungskonfiguration das Melden des CSI, der durch Durchführen einer Messung unter Verwendung der CSI-RS-Ressource in der zu meldenden Ressourcenpaargruppe erhalten wurde, und das Melden der zu meldenden Ressourcenpaargruppe, die dem CSI entspricht, und/oder der einen oder mehreren zu meldenden CSI-RS-Ressourcen in der zu meldenden Ressourcenpaargruppe Folgendes umfasst:
Bestimmen, ob zweite Anzeigeinformationen für die mehreren Ressourcenpaargruppen in der CSI-RS-Ressourcenkonfiguration konfiguriert sind, wobei die zweiten Anzeigeinformationen verwendet werden, um einen ersten Übertragungsmodus anzuzeigen, der angewendet wird, wenn die CSI-RS-Ressource in der Ressourcenpaargruppe zur Messung verwendet wird, und der erste Übertragungsmodus einen Einzelpunkt-Übertragungsmodus oder einen koordinierten Mehrpunkt-Übertragungsmodus umfasst; und
falls keine zweiten Anzeigeinformationen in der CSI-RS-Ressourcenkonfiguration konfiguriert sind, auf Grundlage eines Übertragungsschemas, das in der CSI-Meldungskonfiguration konfiguriert ist, Melden des CSI, der durch Durchführen einer Messung unter Verwendung der CSI-RS-Ressource in der zu meldenden Ressourcenpaargruppe erhalten wurde, und Melden der zu meldenden Ressourcenpaargruppe, die dem CSI entspricht, und/oder der einen oder mehreren zu meldenden CSI-RS-Ressourcen in der zu meldenden Ressourcenpaargruppe; oder
falls die zweiten Anzeigeinformationen in der CSI-RS-Ressourcenkonfiguration konfiguriert sind, auf Grundlage eines Übertragungsschemas, das in der CSI-Meldungskonfiguration konfiguriert ist, die den zweiten Anzeigeinformationen entspricht, Melden des CSI, der durch Durchführen einer Messung unter Verwendung der CSI-RS-Ressource in der zu meldenden Ressourcenpaargruppe erhalten wurde und Melden der zu meldenden Ressourcenpaargruppe, die dem CSI entspricht, und/oder der einen oder mehreren zu meldenden CSI-RS-Ressourcen in der zu meldenden Ressourcenpaargruppe,
wobei die CSI-Meldungskonfiguration eine Konfiguration eines oder mehrerer Übertragungsschemata umfasst, das Übertragungsschema einen oder mehrere Übertragungsmodi umfasst, der Übertragungsmodus einen koordinierten Mehrpunkt-Übertragungsmodus oder eine Kombination aus einem Einzelpunkt-Übertragungsmodus und einem koordinierten Mehrpunkt-Übertragungsmodus umfasst, der koordinierte Mehrpunkt-Übertragungsmodus eine kohärente gemeinsame Übertragung, CJT, und eine nicht kohärente gemeinsame Übertragung, NCJT, umfasst und der Einzelpunkt-Übertragungsmodus einen Einzelübetragungsempfangspunkt, STRP, umfasst.

4. Verfahren nach Anspruch 3, wobei, falls keine zweiten Anzeigeinformationen in der CSI-RS-Ressourcenkonfiguration konfiguriert sind, auf Grundlage eines Übertragungsschemas, das in der CSI-Meldungskonfiguration konfiguriert ist, das Melden des CSI, der durch Durchführen einer Messung unter Verwendung der CSI-RS-Ressource in der zu meldenden Ressourcenpaargruppe erhalten wurde, und das Melden der zu meldenden Ressourcenpaargruppe, die dem CSI entspricht, und/oder der einen oder mehreren zu meldenden CSI-RS-Ressourcen in der zu meldenden Ressourcenpaargruppe umfasst:
Bestimmen aller Übertragungsschemata für die CSI-Meldung als ein erster Übertragungsschemasatz auf Grundlage der CSI-Meldungskonfiguration; und
auf Grundlage dessen, ob ein Beschränkungsindikator und der erste Übertragungsschemasatz in der CSI-Meldungskonfiguration konfiguriert sind, Melden des CSI, der durch Durchführen einer Messung unter Verwendung der CSI-RS-Ressource in der zu meldenden Ressourcenpaargruppe erhalten wurde, und Melden der zu meldenden Ressourcenpaargruppe, die dem CSI entspricht, und/oder der einen oder mehreren zu meldenden CSI-RS-Ressourcen in der zu meldenden Ressourcenpaargruppe,
wobei der Beschränkungsindikator verwendet wird, um anzuzeigen, dass Rangindikatoren, Ris, verschiedener Übertragungsmodi, die im Übertragungsschema enthalten sind, gleich sind,
wobei auf Grundlage dessen, ob der Beschränkungsindikator in der CSI-Meldungskonfiguration und dem ersten Übertragungsschemasatz konfiguriert ist, das Melden des CSI, der durch Durchführen einer Messung unter Verwendung der CSI-RS-Ressource in der zu meldenden Ressourcenpaargruppe erhalten wurde, und das Melden der zu meldenden Ressourcenpaargruppe, die dem CSI entspricht, und/oder der einen oder mehreren zu meldenden CSI-RS-Ressourcen in der zu meldenden Ressourcenpaargruppe Folgendes umfasst:
Bestimmen eines Zielressourcensatzes auf Grundlage aller CSI-RS-Ressourcen, die in der zu meldenden Ressourcenpaargruppe oder der einen oder mehreren zu meldenden CSI-RS-Ressourcen in der zu meldenden Ressourcenpaargruppe enthalten sind;
falls kein Beschränkungsindikator konfiguriert ist, Melden des CSI, der durch Durchführen einer Messung unter Verwendung des Zielressourcensatzes in jedem Übertragungsmodus, der jeweils in dem ersten Übertragungsschemasatz enthalten ist, erhalten wurde; oder
falls der Beschränkungsindikator konfiguriert ist, Melden des CSI, der durch Durchführen einer Messung unter Verwendung des Zielressourcensatzes gemeinsam in jedem Übertragungsmodus, der in dem ersten Übertragungsschemasatz enthalten ist, erhalten wurde; und
Melden der zu meldenden Ressourcenpaargruppe, die dem CSI entspricht, und/oder der einen oder mehreren zu meldenden CSI-RS-Ressourcen in der zu meldenden Ressourcenpaargruppe.

5. Verfahren nach Anspruch 4, wobei, falls kein Beschränkungsindikator konfiguriert ist, das Melden des CSI, der durch Durchführen einer Messung unter Verwendung des Zielressourcensatzes in jedem Übertragungsmodus, der jeweils in dem ersten Übertragungsschemasatz enthalten ist, erhalten wurde, umfasst:
Falls ein Übertragungsmodus, der in dem ersten Übertragungsschemasatz enthalten ist, ein Einzelübetragungsmodus ist, Melden von Messwerten eines Vorcodierungsmatrixindikators, PMI, und eines Schichtindikators, LI, die durch Durchführen einer Messung unter Verwendung jeder CSI-RS-Ressource in dem Zielressourcensatz erhalten wurden, und von Messwerten eines RI und eines Kanalqualitätsindikators, CQI, die durch Durchführen einer Messung unter Verwendung des Zielressourcensatzes auf Grundlage des Einzelübetragungsmodus erhalten wurden; oder
falls ein Übertragungsmodus, der in dem ersten Übertragungsschemasatz enthalten ist, ein kombinierter Übertragungsmodus ist, Melden von Messwerten eines PMI und eines LI, die durch Durchführen einer Messung unter Verwendung jeder CSI-RS-Ressource in dem Zielressourcensatz erhalten wurden, und von Messwerten eines RI und eines CQI, die durch Durchführen einer Messung unter Verwendung des Zielressourcensatzes erhalten wurden, jeweils auf Grundlage jedes Übertragungsmodus, der in dem kombinierten Übertragungsmodus enthalten ist,
wobei der kombinierte Übertragungsmodus mindestens eine CJT umfasst und der Einzelübetragungsmodus eines von einer CJT, einer NCJT oder einem STRP umfasst.

6. Verfahren nach Anspruch 4, wobei, falls der Beschränkungsindikator konfiguriert ist, das Melden eines CSI, der durch Durchführen einer Messung unter Verwendung des Zielressourcensatzes gemeinsam in jedem Übertragungsmodus, der in dem ersten Übertragungsschemasatz enthalten ist, erhalten wurde, Folgendes umfasst:
Falls ein Übertragungsmodus, der in dem ersten Übertragungsschemasatz enthalten ist, ein Einzelübetragungsmodus ist, Melden von Messwerten eines PMI und eines LI, die durch Durchführen einer Messung unter Verwendung jeder CSI-RS-Ressource in dem Zielressourcensatz erhalten wurden, und von Messwerten eines RI und eines CQI, die durch Durchführen einer Messung unter Verwendung des Zielressourcensatzes auf Grundlage des kombinierten Übertragungsmodus erhalten wurden; oder
falls ein Übertragungsmodus, der in dem ersten Übertragungsschemasatz enthalten ist, ein kombinierter Übertragungsmodus ist, Melden von einem Maximalwert unter Messwerten eines PMI und eines LI, die durch Durchführen einer Messung unter Verwendung jeder CSI-RS-Ressource in dem Zielressourcensatz erhalten wurden, und von Messwerten eines RI und eines CQI, die durch Durchführen einer Messung unter Verwendung des Zielressourcensatzes erhalten wurden, auf Grundlage jedes Übertragungsmodus, der in dem kombinierten Übertragungsmodus enthalten ist,
wobei der kombinierte Übertragungsmodus mindestens eine CJT umfasst und der Einzelübetragungsmodus eines von einer CJT, einer NCJT oder einem STRP umfasst.

7. Verfahren nach Anspruch 5 oder 6, ferner umfassend:
Vergleichen des CSI, der durch Durchführen einer Messung unter Verwendung jeder CSI-RS-Ressource in dem Zielressourcensatz in jedem Übertragungsmodus erhalten wurde, der in dem ersten Übertragungsschemasatz enthalten ist, und Bestimmen einer ersten CSI-RS-Ressource in dem verwendeten Zielressourcensatz, wenn der CSI, der eine beste Übertragungsleistung charakterisiert, erhalten wird; und
Melden des CSI, der der ersten CSI-RS-Ressource entspricht.

8. Verfahren nach Anspruch 3, wobei, falls die zweiten Anzeigeinformationen in der CSI-RS-Ressourcenkonfiguration konfiguriert sind, auf Grundlage des Übertragungsschemas, das in der CSI-Meldungskonfiguration konfiguriert ist, die den zweiten Anzeigeinformationen entspricht, das Melden des CSI, der durch Durchführen einer Messung unter Verwendung der CSI-RS-Ressource in der zu meldenden Ressourcenpaargruppe erhalten wurde und das Melden der zu meldenden Ressourcenpaargruppe, die dem CSI entspricht, und/oder der einen oder mehreren zu meldenden CSI-RS-Ressourcen in der zu meldenden Ressourcenpaargruppe, umfasst:
Bestimmen eines Zielübertragungsmodus, der auf die zu meldende Ressourcenpaargruppe angewendet wird, und einer CSI-Meldungskonfiguration, die dem Zielübertragungsmodus entspricht, auf Grundlage der zweiten Anzeigeinformationen;
Bestimmen eines zweiten Übertragungsschemasatzes, der jedem Zielübertragungsmodus entspricht, auf Grundlage des Zielübertragungsmodus und der CSI-Meldungskonfiguration, die dem Zielübertragungsmodus entspricht; und
auf Grundlage dessen, ob ein Beschränkungsindikator und der zweite Übertragungsschemasatz in der CSI-Meldungskonfiguration konfiguriert sind, Melden des CSI, der durch Durchführen einer Messung unter Verwendung der CSI-RS-Ressource in der zu meldenden Ressourcenpaargruppe erhalten wurde, und Melden der zu meldenden Ressourcenpaargruppe, die dem CSI entspricht, und/oder der einen oder mehreren zu meldenden CSI-RS-Ressourcen in der zu meldenden Ressourcenpaargruppe,
wobei die CSI-Meldungskonfiguration, die dem Zielübertragungsmodus entspricht, mehrere Übertragungsschemata umfasst, jedes Übertragungsschema zumindest den Zielübertragungsmodus umfasst und der Zielübertragungsmodus einen STRP, eine NCJT oder eine CJT umfasst; und
der Beschränkungsindikator verwendet wird, um anzuzeigen, dass RIs verschiedener Übertragungsmodi, die im Übertragungsschema enthalten sind, gleich sind,
wobei das Bestimmen des zweiten Übertragungsschemasatzes, der jedem Zielübertragungsmodus entspricht, auf Grundlage des Zielübertragungsmodus und der CSI-Meldungskonfiguration, die dem Zielübertragungsmodus entspricht, Folgendes umfasst:
Falls der Zielübertragungsmodus ein STRP ist, umfasst der zweite Übertragungsschemasatz einen STRP;
falls der Zielübertragungsmodus eine CJT ist, umfasst der zweite Übertragungsschemasatz eine CJT, eine CJT und einen STRP und eine CJT, eine NCJT und einen STRP; oder
falls der Zielübertragungsmodus eine NCJT ist, umfasst der zweite Übertragungsschemasatz eine NCJT, eine NCJT und einen STRP und eine CJT, eine NCJT und einen STRP,
wobei auf Grundlage dessen, ob der Beschränkungsindikator in der CSI-Meldungskonfiguration und dem zweiten Übertragungsschemasatz konfiguriert ist, das Melden des CSI, der durch Durchführen einer Messung unter Verwendung der CSI-RS-Ressource in der zu meldenden Ressourcenpaargruppe erhalten wurde, und das Melden der zu meldenden Ressourcenpaargruppe, die dem CSI entspricht, und/oder der einen oder mehreren zu meldenden CSI-RS-Ressourcen in der zu meldenden Ressourcenpaargruppe Folgendes umfasst:
Falls der zweite Übertragungsschemasatz die CJT umfasst, Bestimmen des Zielressourcensatzes auf Grundlage aller CSI-RS-Ressourcen, die in der zu meldenden Ressourcenpaargruppe enthalten sind, oder mehrerer Kombinationen von einer oder mehreren zu meldenden CSI-RS-Ressourcen in der zu meldenden Ressourcenpaargruppe; oder
falls der zweite Übertragungsschemasatz die CJT nicht umfasst, Bestimmen des Zielressourcensatzes auf Grundlage aller CSI-RS-Ressourcen, die in der zu meldenden Ressourcenpaargruppe enthalten sind, oder einer oder mehrerer zu meldender CSI-RS-Ressourcen in der zu meldenden Ressourcenpaargruppe;
falls kein Beschränkungsindikator konfiguriert ist, Melden des CSI, der durch Durchführen einer Messung unter Verwendung des Zielressourcensatzes in jedem Übertragungsmodus, der in dem zweiten Übertragungsschemasatz enthalten ist, jeweils auf Grundlage des zweiten Übertragungsschemasatzes erhalten wurde; oder
falls der Beschränkungsindikator konfiguriert ist, Melden des CSI, der durch Durchführen einer Messung unter Verwendung des Zielressourcensatzes in jedem Übertragungsmodus, der in dem zweiten Übertragungsschemasatz enthalten ist, gemeinsam auf Grundlage des zweiten Übertragungsschemasatzes erhalten wurde; und
Melden der zu meldenden Ressourcenpaargruppe, die dem CSI entspricht, und/oder der einen oder mehreren zu meldenden CSI-RS-Ressourcen in der zu meldenden Ressourcenpaargruppe.

9. Verfahren nach Anspruch 8, wobei, falls kein Beschränkungsindikator konfiguriert ist, das Melden des CSI, der durch Durchführen einer Messung unter Verwendung des Zielressourcensatzes in jedem Übertragungsmodus, der in dem zweiten Übertragungsschemasatz enthalten ist, jeweils auf Grundlage des zweiten Übertragungsschemasatzes erhalten wurde, Folgendes umfasst:
Falls der Übertragungsmodus, der im zweiten Übertragungsschemasatz enthalten ist, ein Einzelübertragungsmodus ist, Melden, auf Grundlage des Einzelübertragungsmodus, von Messwerten eines PMI und eines LI, die durch Durchführen einer Messung unter Verwendung jeder CSI-RS-Ressource in dem Zielressourcensatz erhalten wurden und Messwerten eines RI und eines CQI, die durch Durchführen einer Messung unter Verwendung des Zielressourcensatzes erhalten wurden; oder Melden von Messwerten eines PMI und eines LI, die durch Durchführen einer Messung unter Verwendung jeder CSI-RS-Ressource in einem zweiten Ressourcensatz erhalten wurden und Messwerten eines RI und eines CQI, die durch das Durchführen einer Messung mit dem Zielressourcensatz erhalten wurden; oder
falls der Übertragungsmodus, der im zweiten Übertragungsschemasatz enthalten ist, ein kombinierter Übertragungsmodus ist, auf Grundlage jedes Übertragungsmodus, der jeweils im kombinierten Übertragungsmodus enthalten ist, Melden von Messwerten eines PMI und eines LI, die durch Durchführen einer Messung unter Verwendung jeder CSI-RS-Ressource in dem Zielressourcensatz erhalten wurden und Messwerten eines RI und eines CQI, die durch Durchführen einer Messung unter Verwendung des Zielressourcensatzes erhalten wurden; oder Melden von Messwerten eines PMI und eines LI, die durch Durchführen einer Messung unter Verwendung jeder CSI-RS-Ressource in einem zweiten Ressourcensatz erhalten wurden und Messwerten eines RI und eines CQI, die durch das Durchführen einer Messung mit dem Zielressourcensatz erhalten wurden; oder
wobei der kombinierte Übertragungsmodus mindestens eine CJT umfasst und der Einzelübetragungsmodus eines von einer CJT, einer NCJT oder einem STRP umfasst; und
der zweite Ressourcensatz ist der CSI-RS-Ressourcensatz mit der größten Anzahl von CSI-RS-Ressourcen im Zielressourcensatz.

10. Verfahren nach Anspruch 8, wobei, falls der Beschränkungsindikator konfiguriert ist, das Melden des CSI, der durch Durchführen einer Messung unter Verwendung des Zielressourcensatzes in jedem Übertragungsmodus, der in dem zweiten Übertragungsschemasatz enthalten ist, jeweils auf Grundlage des zweiten Übertragungsschemasatzes erhalten wurde, Folgendes umfasst:
Falls der Übertragungsmodus, der im zweiten Übertragungsschemasatz enthalten ist, ein Einzelübertragungsmodus ist, Melden, auf Grundlage des Einzelübertragungsmodus, von Messwerten eines PMI und eines LI, die durch Durchführen einer Messung unter Verwendung jeder CSI-RS-Ressource in dem Zielressourcensatz erhalten wurden und Messwerten eines RI und eines CQI, die durch Durchführen einer Messung unter Verwendung des Zielressourcensatzes erhalten wurden; oder Melden von Messwerten eines PMI und eines LI, die durch Durchführen einer Messung unter Verwendung jeder CSI-RS-Ressource in einem zweiten Ressourcensatz erhalten wurden und Messwerten eines RI und eines CQI, die durch das Durchführen einer Messung mit dem Zielressourcensatz erhalten wurden; oder
falls der Übertragungsmodus, der im zweiten Übertragungsschemasatz enthalten ist, ein kombinierter Übertragungsmodus ist, auf Grundlage jedes Übertragungsmodus, der im kombinierten Übertragungsmodus enthalten ist, Melden eines Maximalwerts unter Messwerten eines PMI und eines LI, die durch Durchführen einer Messung unter Verwendung jeder CSI-RS-Ressource in dem Zielressourcensatz erhalten wurden, und Messwerten eines RI und eines CQI, die durch Durchführen einer Messung unter Verwendung des Zielressourcensatzes erhalten wurden; oder Melden von Messwerten eines PMI und eines LI, die durch Durchführen einer Messung unter Verwendung jeder CSI-RS-Ressource in dem Zielressourcensatz erhalten wurden, und Messwerten eines RI und eines CQI, die durch Durchführen einer Messung unter Verwendung des Zielressourcensatzes erhalten wurden,
wobei der kombinierte Übertragungsmodus mindestens eine CJT umfasst und der Einzelübetragungsmodus eines von einer CJT, einer NCJT oder einem STRP umfasst; und
der zweite Ressourcensatz ist der CSI-RS-Ressourcensatz mit der größten Anzahl von CSI-RS-Ressourcen im Zielressourcensatz.

11. Verfahren nach Anspruch 9 oder 10, ferner umfassend:
Vergleichen des CSI, der durch Durchführen einer Messung unter Verwendung jeder CSI-RS-Ressource in dem Zielressourcensatz in jedem Übertragungsmodus erhalten wurde, der in dem zweiten Übertragungsschemasatz enthalten ist, und Bestimmen einer ersten CSI-RS-Ressource in dem verwendeten Zielressourcensatz, wenn der CSI, der eine beste Übertragungsleistung charakterisiert, erhalten wird; und
Melden des CSI, der der ersten CSI-RS-Ressource entspricht.

12. Verfahren zum Melden von Kanalzustandsinformationen, CSI, durch eine Netzwerkvorrichtung, umfassend:
Bestimmen (301) von M-Kanalzustandsinformationsreferenzsignal-, CSI-RS-, Ressourcengruppen auf Grundlage eines CSI-RS-Ressourcensatzes, wobei der CSI-RS-Ressourcensatz mehrere CSI-RS-Ressourcen umfasst;
Bestimmen (302) einer CSI-RS-Ressourcenkonfiguration, die mehrere Ressourcenpaargruppen und erste Anzeigeinformationen umfasst, die jeder Ressourcenpaargruppe entsprechen, wobei die ersten Anzeigeinformationen verwendet werden, um eine Ressourcenpaargruppe aus den mehreren Ressourcenpaargruppen anzuzeigen und/oder jede CSI-RS-Ressource in der Ressourcenpaargruppe anzuzeigen, und jede Ressourcenpaargruppe CSI-RS-Ressourcen umfasst, die aus verschiedenen CSI-RS-Ressourcengruppen ausgewählt sind;
Bestimmen (303) einer CSI-Meldungskonfiguration auf Grundlage dessen, ob zweite Anzeigeinformationen für jede Ressourcenpaargruppe in der CSI-RS-Ressourcenkonfiguration konfiguriert werden sollen; und
Übertragen (304) der CSI-RS-Ressourcenkonfiguration und der CSI-Meldungskonfiguration an ein Endgerät,
wobei die CSI-Meldungskonfiguration eine Konfiguration für verschiedene Übertragungsschemata umfasst und M eine positive ganze Zahl ist, ein Übertragungsschema einen oder mehrere Übertragungsmodi umfasst, der Übertragungsmodus einen koordinierten Mehrpunkt-Übertragungsmodus oder eine Kombination aus einem Einzelpunkt-Übertragungsmodus und einem koordinierten Mehrpunkt-Übertragungsmodus umfasst, der koordinierte Mehrpunkt-Übertragungsmodus eine kohärente gemeinsame Übertragung, CJT, und eine nicht-kohärente gemeinsame Übertragung, NCJT, umfasst, der Einzelpunkt-Übertragungsmodus einen Einzelübetragungsempfangspunkt, STRP, umfasst, zweite Anzeigeinformationen verwendet werden, um anzuzeigen, dass die Ressourcenpaargruppe auf einen ersten Übertragungsmodus angewendet wird, und der erste Übertragungsmodus einen Einzelpunkt-Übertragungsmodus oder einen koordinierten Mehrpunkt-Übertragungsmodus umfasst.

13. Verfahren nach Anspruch 12, wobei das Bestimmen der CSI-Meldungskonfiguration auf Grundlage dessen, ob zweite Anzeigeinformationen für jede Ressourcenpaargruppe in der CSI-RS-Ressourcenkonfiguration konfiguriert werden sollen, umfasst:
Falls die zweiten Anzeigeinformationen konfiguriert sind, Bestimmen der CSI-Meldungskonfiguration, die den zweiten Anzeigeinformationen entspricht, auf Grundlage der zweiten Anzeigeinformationen, wobei die CSI-Meldungskonfiguration, die den zweiten Anzeigeinformationen entspricht, mehrere Übertragungsschemata umfasst, wobei jedes Übertragungsschema zumindest den ersten Übertragungsmodus umfasst; oder
falls keine zweiten Anzeigeinformationen konfiguriert sind, Bestimmen, dass die CSI-Meldungskonfiguration eine Konfiguration eines oder mehrerer Übertragungsschemata umfasst, wobei das Übertragungsschema einen koordinierten Mehrpunkt-Übertragungsmodus oder eine Kombination aus einem Einzelpunkt-Übertragungsmodus und einem koordinierten Mehrpunkt-Übertragungsmodus umfasst, der koordinierte Mehrpunkt-Übertragungsmodus eine CJT und eine NCJT umfasst und der Einzelpunkt-Übertragungsmodus einen STRP umfasst,
wobei das Bestimmen der CSI-Meldungskonfiguration, die den zweiten Anzeigeinformationen entspricht, auf Grundlage der zweiten Anzeigeinformationen Folgendes umfasst:
Falls die zweiten Anzeigeinformationen anzeigen, dass der erste Übertragungsmodus, der auf die Ressourcenpaargruppe angewendet wird, ein STRP ist, Bestimmen, dass ein Übertragungsschema in der CSI-Meldungskonfiguration, die den zweiten Anzeigeinformationen entspricht, ein STRP ist;
falls die zweiten Anzeigeinformationen anzeigen, dass der erste Übertragungsmodus, der auf die Ressourcenpaargruppe angewendet wird, eine CJT ist, Bestimmen, dass ein Übertragungsschema in der CSI-Meldungskonfiguration, die den zweiten Anzeigeinformationen entspricht, eine CJT, eine CJT und einen STRP und eine CJT, eine NCJT und einen STRP umfasst; und
falls die zweiten Anzeigeinformationen anzeigen, dass der erste Übertragungsmodus, der auf die Ressourcenpaargruppe angewendet wird, eine NCJT ist, Bestimmen, dass ein Übertragungsschema in der CSI-Meldungskonfiguration, die den zweiten Anzeigeinformationen entspricht, eine NCJT, eine NCJT und einen STRP und eine CJT, eine NCJT und einen STRP umfasst,
wobei die CSI-Meldungskonfiguration ferner einen Beschränkungsindikator umfasst und der Beschränkungsindikator verwendet wird, um anzuzeigen, dass das Endgerät CSI melden soll, der durch Durchführen einer Messung unter Verwendung der Ressourcenpaargruppe jeweils in jedem Übertragungsmodus erhalten wurde, oder CSI melden soll, der durch Durchführen einer Messung unter Verwendung der Ressourcenpaargruppe in jedem gemeinsamen Übertragungsmodus erhalten wurde.

14. Endgerät zum Melden von Kanalzustandsinformationen, CSI, umfassend:
Ein Empfangsmodul (601), das zum Empfangen eines Kanalzustandsinformationsreferenzsignals, CSI-RS, einer Ressourcenkonfiguration und einer CSI-Meldungskonfiguration, die von der Netzwerkvorrichtung übertragen werden, verwendet wird, wobei die CSI-RS-Ressourcenkonfiguration mehrere Ressourcenpaargruppen und erste Anzeigeinformationen umfasst, die jeder Ressourcenpaargruppe entsprechen, die ersten Anzeigeinformationen verwendet werden, um eine Ressourcenpaargruppe aus den mehreren Ressourcenpaargruppen anzuzeigen und/oder jede CSI-RS-Ressource in der Ressourcenpaargruppe anzuzeigen, jede Ressourcenpaargruppe CSI-RS-Ressourcen umfasst, die aus verschiedenen CSI-RS-Ressourcengruppen ausgewählt sind, und eine Anzahl von CSI-RS-Ressourcengruppen auf Grundlage eines CSI-RS-Ressourcensatzes als M bestimmt wird; wobei der CSI-RS-Ressourcensatz mehrere CSI-RS-Ressourcen umfasst;
ein erstes Bestimmungsmodul (602), das auf Grundlage der CSI-RS-Ressourcenkonfiguration zum Bestimmen einer oder mehrerer zu meldender Ressourcenpaargruppen in den mehreren Ressourcenpaargruppen und Bestimmen einer oder mehrerer zu meldender CSI-RS-Ressourcen in einer zu meldenden Ressourcenpaargruppe verwendet wird; und
ein Meldungsmodul (603), das auf Grundlage der CSI-Meldungskonfiguration zum Melden des CSI, der durch Durchführen einer Messung unter Verwendung einer oder mehreren zu meldenden CSI-RS-Ressourcen in der zu meldenden Ressourcenpaargruppe erhalten wurde, und zum Melden der zu meldenden Ressourcenpaargruppe, die dem CSI entspricht und/oder einer oder mehreren zu meldenden CSI-RS-Ressourcen in der zu meldenden Ressourcenpaargruppe verwendet wird.
wobei die CSI-Meldungskonfiguration eine Konfiguration für verschiedene Übertragungsschemata umfasst und M eine positive ganze Zahl ist, ein Übertragungsschema einen oder mehrere Übertragungsmodi umfasst, der Übertragungsmodus einen koordinierten Mehrpunkt-Übertragungsmodus oder eine Kombination aus einem Einzelpunkt-Übertragungsmodus und einem koordinierten Mehrpunkt-Übertragungsmodus umfasst, der koordinierte Mehrpunkt-Übertragungsmodus eine kohärente gemeinsame Übertragung, CJT, und eine nicht-kohärente gemeinsame Übertragung, NCJT, umfasst, der Einzelpunkt-Übertragungsmodus einen Einzelübetragungsempfangspunkt, STRP, umfasst, zweite Anzeigeinformationen verwendet werden, um anzuzeigen, dass die Ressourcenpaargruppe auf einen ersten Übertragungsmodus angewendet wird, und der erste Übertragungsmodus einen Einzelpunkt-Übertragungsmodus oder einen koordinierten Mehrpunkt-Übertragungsmodus umfasst.

15. Netzwerkvorrichtungsgerät zum Melden von Kanalzustandsinformationen, CSI, umfassend:
Ein zweites Bestimmungsmodul (701), das zum Bestimmen von M - Kanalzustandsinformationsreferenzsignal-, CSI-RS-, Ressourcengruppen auf Grundlage eines CSI-RS-Ressourcensatzes verwendet wird, wobei der CSI-RS-Ressourcensatz mehrere CSI-RS-Ressourcen umfasst;
ein Ressourcenkonfigurationsmodul (702), das zum Bestimmen einer CSI-RS-Ressourcenkonfiguration verwendet wird, die mehrere Ressourcenpaargruppen und erste Anzeigeinformationen umfasst, die jeder Ressourcenpaargruppe entsprechen, auf Grundlage von M CSI-RS-Ressourcengruppen, wobei die ersten Anzeigeinformationen verwendet werden, um eine Ressourcenpaargruppe aus den mehreren Ressourcenpaargruppen anzuzeigen und/oder jede CSI-RS-Ressource in der Ressourcenpaargruppe anzuzeigen, und jede Ressourcenpaargruppe CSI-RS-Ressourcen umfasst, die aus verschiedenen CSI-RS-Ressourcengruppen ausgewählt sind;
ein CSI-Meldungskonfigurationsmodul (703), das zum Bestimmen einer CSI-Meldungskonfiguration auf Grundlage dessen verwendet wird, ob zweite Anzeigeinformationen für jede Ressourcenpaargruppe in der CSI-RS-Ressourcenkonfiguration konfiguriert werden sollen; und
ein Übertragungsmodul (704), das zum Übertragen der CSI-RS-Ressourcenkonfiguration und der CSI-Meldungskonfiguration an ein Endgerät verwendet wird,
wobei die CSI-Meldungskonfiguration eine Konfiguration für verschiedene Übertragungsschemata umfasst und M eine positive ganze Zahl ist, ein Übertragungsschema einen oder mehrere Übertragungsmodi umfasst, der Übertragungsmodus einen koordinierten Mehrpunkt-Übertragungsmodus oder eine Kombination aus einem Einzelpunkt-Übertragungsmodus und einem koordinierten Mehrpunkt-Übertragungsmodus umfasst, der koordinierte Mehrpunkt-Übertragungsmodus eine kohärente gemeinsame Übertragung, CJT, und NCJT, umfasst, der Einzelpunkt-Übertragungsmodus einen Einzelübetragungsempfangspunkt, STRP, umfasst, zweite Anzeigeinformationen verwendet werden, um anzuzeigen, dass die Ressourcenpaargruppe auf einen ersten Übertragungsmodus angewendet wird, und der erste Übertragungsmodus einen Einzelpunkt-Übertragungsmodus oder einen koordinierten Mehrpunkt-Übertragungsmodus umfasst.

## Revendications

1. Procédé de signalement d'une information d'état de canal, CSI, réalisé par un terminal, comprenant :
la réception (201) d'une configuration de ressources de signal de référence d'information d'état de canal, CSI-RS, et d'une configuration de signalement de CSI émises par le dispositif réseau, dans lequel la configuration de ressources de CSI-RS comprend de multiples groupes de paires de ressources et une première information d'indication correspondant à chaque groupe de paires de ressources, la première information d'indication est utilisée pour indiquer un groupe de paires de ressources parmi les multiples groupes de paires de ressources et/ou indiquer chaque ressource de CSI-RS dans le groupe de paires de ressources, chaque groupe de paires de ressources comprend des ressources de CSI-RS sélectionnées parmi différents groupes de ressources de CSI-RS, et un nombre de groupes de ressources de CSI-RS est déterminé comme étant M sur la base d'un ensemble de ressources de CSI-RS ; dans lequel l'ensemble de ressources de CSI-RS comprend de multiples ressources de CSI-RS ;
sur la base de la configuration de ressources de CSI-RS, la détermination (202) d'un ou de plusieurs groupes de paires de ressources à signaler dans les multiples groupes de paires de ressources, et la détermination d'une ou de plusieurs ressources de CSI-RS à signaler dans un groupe de paires de ressources à signaler ; et
sur la base de la configuration de signalement de CSI, le signalement de la CSI obtenue par la réalisation d'une mesure à l'aide des une ou plusieurs ressources de CSI-RS à signaler dans le groupe de paires de ressources à signaler, et
le signalement (203) du groupe de paires de ressources à signaler correspondant à la CSI, et/ou, d'une ou de plusieurs ressources de CSI-RS à signaler dans le groupe de paires de ressources à signaler,
dans lequel la configuration de signalement de CSI comprend une configuration pour différents schémas d'émission, et M est un nombre entier positif, un schéma **d'émission** comprend un ou plusieurs modes **d'émission,** le mode **d'émission** comprend un mode **d'émission** multipoint coordonné ou une combinaison d'un mode d'émission monopoint et **d'un** mode **d'émission** multipoint coordonné, le mode d'émission multipoint coordonné comprend une émission conjointe cohérente, CJT, et une émission conjointe non cohérente, NCJT, le mode d'émission monopoint comprend un point d'émission-réception unique, STRP, une seconde information d'indication est utilisée pour indiquer que le groupe de paires de ressources est appliqué à un premier mode d'émission, et le premier mode d'émission comprend un mode d'émission monopoint ou un mode d'émission multipoint coordonné.

2. Procédé selon la revendication 1, dans lequel, sur la base de la configuration de ressources de CSI-RS, la détermination des un ou plusieurs groupes de paires de ressources à signaler dans les multiples groupes de paires de ressources comprend :
la détermination de premières puissances reçues de signal de référence, RSRP, et de premiers rapports signal sur interférence plus bruit, SINR, de chaque groupe de paires de ressources sur la base des RSRP et des SINR de chaque ressource de CSI-RS dans chaque groupe de paires de ressources dans la configuration de ressources de CSI-RS ; et
la détermination du groupe de paires de ressources à signaler sur la base d'une première règle,
dans lequel la première règle comprend l'un ou plusieurs parmi ce qui suit :
les N meilleurs groupes de paires de ressources ayant une première RSRP la plus élevée ;
les N meilleurs groupes de paires de ressources ayant un premier SINR le plus élevé ;
un groupe de paires de ressources ayant une première RSRP la plus élevée et un premier SINR le plus élevé, dans lequel la première RSRP ou le premier SINR possède une plus différence la plus élevée par rapport à un premier seuil,
dans lequel le premier seuil est une valeur minimale prédéfinie des RSRP ou des SINR de toutes les ressources de CSI-RS dans le groupe de paires de ressources, et N est un nombre entier positif ;
dans lequel, sur la base de la configuration de ressources de CSI-RS, la détermination des une ou plusieurs ressources de CSI-RS à signaler dans le groupe de paires de ressources à signaler comprend :
la détermination des RSRP et des SINR de chaque ressource de CSI-RS dans le groupe de paires de ressources à signaler comme étant des secondes RSRP et des seconds SINR respectivement ; et
la détermination de la ressource de CSI-RS à signaler dans le groupe de paires de ressources à signaler sur la base d'une seconde règle,
dans lequel la seconde règle comprend l'un ou plusieurs parmi ce qui suit :
les L meilleures ressources de CSI-RS ayant une seconde RSRP la plus élevée ;
les L meilleures ressources de CSI-RS ayant un second SINR le plus élevé ; ou
une ressource de CSI-RS ayant une seconde RSRP ou un second SINR supérieur/e ou égal/e à un second seuil,
dans lequel le second seuil est une valeur minimale prédéfinie des RSRP ou des SINR de la ressource de CSI-RS, et L est un nombre entier positif.

3. Procédé selon la revendication 1, dans lequel, sur la base de la configuration de signalement de CSI, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou des une ou plusieurs ressources de CSI-RS à signaler dans le groupe de paires de ressources à signaler comprend :
la détermination de si une seconde information d'indication est configurée pour les multiples groupes de paires de ressources dans la configuration de ressources de CSI-RS, dans lequel la seconde information **d'indication** est utilisée pour indiquer un premier mode d'émission appliqué lorsque la ressource de CSI-RS dans le groupe de paires de ressources est utilisée pour une mesure, et le premier mode d'émission comprenant un mode d'émission monopoint ou un mode d'émission multipoint coordonné ; et
dans le cas où aucune seconde information **d'indication n'est** configurée dans la configuration de ressources de CSI-RS, sur la base d'un schéma d'émission configuré dans la configuration de signalement de CSI, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou des une ou plusieurs ressources de CSI-RS à signaler dans le groupe de paires de ressources à signaler ; ou
dans le cas où la seconde information d'indication est configurée dans la configuration de ressources de CSI-RS, sur la base d'un schéma d'émission configuré dans la configuration de signalement de CSI correspondant à la seconde information **d'indication,** le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou des une ou plusieurs ressources de CSI-RS à signaler dans le groupe de paires de ressources à signaler,
dans lequel la configuration de signalement de CSI comprend une configuration d'un ou de plusieurs schémas d'émission, le schéma d'émission comprend un ou plusieurs modes d'émission, le mode d'émission comprend un mode d'émission multipoint coordonné ou une combinaison d'un mode d'émission monopoint et d'un mode d'émission multipoint coordonné, le mode d'émission multipoint coordonné comprend une émission conjointe cohérente, CJT, et une émission conjointe non cohérente, NCJT, et le mode d'émission monopoint comprend un point d'émission-réception unique, STRP.

4. Procédé selon la revendication 3, dans lequel, dans le cas où aucune seconde information d'indication n'est configurée dans la configuration de ressources de CSI-RS, sur la base du schéma d'émission configuré dans la configuration de signalement de CSI, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou des une ou plusieurs ressources de CSI-RS à signaler dans le groupe de paires de ressources à signaler comprend :
la détermination de tous les schémas d'émission pour un signalement de CSI comme étant un premier ensemble de schémas d'émission sur la base de la configuration de signalement de CSI ; et
sur la base de si un indicateur de restriction et le premier ensemble de schémas d'émission sont configurés dans la configuration de signalement de CSI, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou, des une ou plusieurs ressources de CSI-RS à signaler dans le groupe de paires de ressources à signaler,
dans lequel l'indicateur de restriction est utilisé pour indiquer que des indicateurs de rang, RI, de différents modes d'émission compris dans le schéma d'émission sont identiques,
dans lequel, sur la base de si l'indicateur de restriction est configuré dans la configuration de signalement de CSI et le premier ensemble de schémas d'émission, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou, des une ou plusieurs ressources de CSI-RS à signaler dans le groupe de paires de ressources à signaler comprend :
la détermination d'un ensemble de ressources cible sur la base de toutes les ressources de CSI-RS comprises dans le groupe de paires de ressources à signaler ou des une ou plusieurs ressources de CSI-RS à signaler dans le groupe de paires de ressources à signaler ;
dans le cas où aucun indicateur de restriction n'est configuré, le signalement d'une CSI obtenue par la réalisation d'une mesure à l'aide de l'ensemble de ressources cible dans chaque mode d'émission compris dans le premier ensemble de schémas d'émission respectivement ; ou
dans le cas où l'indicateur de restriction est configuré, le signalement de la CSI obtenue par la réalisation d'une mesure à l'aide de l'ensemble de ressources cible de manière conjointe dans chaque mode d'émission compris dans le premier ensemble de schémas d'émission ; et
le signalement du groupe de paires de ressources à signaler correspondant à la CSI, et/ou, des une ou plusieurs ressources de CSI-RS à signaler dans le groupe de paires de ressources à signaler.

5. Procédé selon la revendication 4, dans lequel, dans le cas où aucun indicateur de restriction n'est configuré, le signalement de la CSI obtenue par la réalisation d'une mesure à l'aide de l'ensemble de ressources cible dans chaque mode d'émission compris dans le premier ensemble de schémas d'émission respectivement comprend :
dans le cas où un mode d'émission compris dans le premier ensemble de schémas d'émission est un mode d'émission unique, le signalement de valeurs de mesure d'un indicateur de matrice de précodage, PMI, et d'un indicateur de couche, LI, obtenues par la réalisation d'une mesure à l'aide de chaque ressource de CSI-RS dans l'ensemble de ressources cible, et de valeurs de mesure d'un RI et d'un indicateur de qualité de canal, CQI, obtenues par la réalisation d'une mesure à l'aide de l'ensemble de ressources cible sur la base du mode d'émission unique ; ou
dans le cas où un mode d'émission compris dans le premier ensemble de schémas d'émission est un mode d'émission combiné, le signalement de valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible sur la base de chaque mode d'émission compris dans le mode d'émission combiné, respectivement,
dans lequel le mode d'émission combiné comprend au moins une CJT, et le mode d'émission unique comprend l'un quelconque parmi une CJT, une NCJT ou un STRP.

6. Procédé selon la revendication 4, dans lequel, dans le cas où l'indicateur de restriction est configuré, le signalement d'une CSI obtenue par la réalisation d'une mesure à l'aide de l'ensemble de ressources cible de manière conjointe dans chaque mode d'émission compris dans le premier ensemble de schémas d'émission comprend :
dans le cas où un mode d'émission compris dans le premier ensemble de schémas d'émission est un mode d'émission unique, le signalement de valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible sur la base du mode d'émission combiné ; ou
dans le cas où un mode d'émission compris dans le premier ensemble de schémas d'émission est un mode d'émission combiné, le signalement d'une valeur maximale parmi des valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible sur la base de chaque mode d'émission compris dans le mode d'émission combiné,
dans lequel le mode d'émission combiné comprend au moins une CJT, et le mode d'émission unique comprend l'un quelconque parmi une CJT, une NCJT ou un STRP.

7. Procédé selon la revendication 5 ou 6, comprenant en outre :
la comparaison d'une CSI obtenue par la réalisation d'une mesure à l'aide de chaque ressource de CSI-RS dans l'ensemble de ressources cible dans chaque mode d'émission compris dans le premier ensemble de schémas d'émission, et la détermination d'une première ressource de CSI-RS dans l'ensemble de ressources cible utilisée lorsqu'une CSI caractérisant la meilleure performance d'émission est obtenue ; et
le signalement de la CSI correspondant à la première ressource de CSI-RS.

8. Procédé selon la revendication 3, dans lequel, dans le cas où la seconde information d'indication est configurée dans la configuration de ressources de CSI-RS, sur la base du schéma d'émission configuré dans la configuration de signalement de CSI correspondant à la seconde information d'indication, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou des une ou plusieurs ressources de CSI-RS à signaler dans le groupe de paires de ressources à signaler comprend :
la détermination d'un mode d'émission cible appliqué au groupe de paires de ressources à signaler et d'une configuration de signalement de CSI correspondant au mode d'émission cible sur la base de la seconde information d'indication ;
la détermination d'un second ensemble de schémas d'émission correspondant à chaque mode d'émission cible sur la base du mode d'émission cible et de la configuration de signalement de CSI correspondant au mode d'émission cible ; et
sur la base de si un indicateur de restriction et le second ensemble de schémas d'émission sont configurés dans la configuration de signalement de CSI, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou, des une ou plusieurs ressources de CSI-RS à signaler dans le groupe de paires de ressources à signaler,
dans lequel la configuration de signalement de CSI correspondant au mode d'émission cible comprend de multiples schémas d'émission, chaque schéma d'émission comprend au moins le mode d'émission cible, et le mode d'émission cible comprend un STRP, une NCJT ou une CJT ; et
l'indicateur de restriction est utilisé pour indiquer que des RI de différents modes d'émission compris dans le schéma d'émission sont identiques,
dans lequel la détermination du second ensemble de schémas d'émission correspondant à chaque mode d'émission cible sur la base du mode d'émission cible et de la configuration de signalement de CSI correspondant au mode d'émission cible comprend :
dans le cas où le mode d'émission cible est un STRP, le second ensemble de schémas d'émission comprend un STRP ;
dans le cas où le mode d'émission cible est une CJT, le second ensemble de schémas d'émission comprend une CJT, une CJT et un STRP, et une CJT, une NCJT et un STRP ; ou
dans le cas où le mode d'émission cible est une NCJT, le second ensemble de schémas d'émission comprend une NCJT, une NCJT et un STRP, et une CJT, une NCJT et un STRP,
dans lequel, sur la base de si l'indicateur de restriction est configuré dans la configuration de signalement de CSI et le second ensemble de schémas d'émission, le signalement de la CSI obtenue par la réalisation d'une mesure à l'aide de la ressource de CSI-RS dans le groupe de paires de ressources à signaler, et le signalement du groupe de paires de ressources à signaler correspondant à la CSI, et/ou, des une ou plusieurs ressources de CSI-RS à signaler dans le groupe de paires de ressources à signaler comprend :
dans le cas où le second ensemble de schémas d'émission comprend la CJT, la détermination de l'ensemble de ressources cible sur la base de toutes les ressources de CSI-RS comprises dans le groupe de paires de ressources à signaler ou de multiples combinaisons d'une ou de plusieurs ressources de CSI-RS à signaler dans le groupe de paires de ressources à signaler ; ou
dans le cas où le second ensemble de schémas **d'émission** ne comprend pas la CJT, la détermination de l'ensemble de ressources cible sur la base de toutes les ressources de CSI-RS comprises dans le groupe de paires de ressources à signaler ou d'une ou de plusieurs ressources de CSI-RS à signaler dans le groupe de paires de ressources à signaler ;
dans le cas où aucun indicateur de restriction n'est configuré, le signalement d'une CSI obtenue par la réalisation d'une mesure à l'aide de l'ensemble de ressources cible dans chaque mode d'émission compris dans le second ensemble de schémas d'émission respectivement sur la base du second ensemble de schémas d'émission ; ou
dans le cas où l'indicateur de restriction est configuré, le signalement d'une CSI obtenue par la réalisation d'une mesure à l'aide de l'ensemble de ressources cible dans chaque mode d'émission compris dans le second ensemble de schémas d'émission de manière conjointe sur la base du second ensemble de schémas d'émission ; et
le signalement du groupe de paires de ressources à signaler correspondant à la CSI, et/ou, des une ou plusieurs ressources de CSI-RS à signaler dans le groupe de paires de ressources à signaler.

9. Procédé selon la revendication 8, dans lequel, dans le cas où aucun indicateur de restriction n'est configuré, le signalement de la CSI obtenue par la réalisation d'une mesure à l'aide de l'ensemble de ressources cible dans chaque mode d'émission compris dans le second ensemble de schémas d'émission respectivement sur la base du second ensemble de schémas d'émission comprend :
dans le cas où le mode d'émission compris dans le second ensemble de schémas d'émission est un mode d'émission unique, sur la base du mode d'émission unique, le signalement de valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible ; ou le signalement de valeurs de mesure d'un PMI et d'un LI obtenues par la réalisation d'une mesure à l'aide de chaque ressource de CSI-RS dans un second ensemble de ressources, et de valeurs de mesure d'un RI et d'un CQI obtenues par la réalisation d'une mesure à l'aide de l'ensemble de ressources cible ; ou
dans le cas où le mode d'émission compris dans le second ensemble de schémas d'émission est un mode d'émission combiné, sur la base de chaque mode d'émission compris dans le mode d'émission combiné respectivement, le signalement de valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible ; ou le signalement de valeurs de mesure d'un PMI et d'un LI obtenues par la réalisation d'une mesure à l'aide de chaque ressource de CSI-RS dans un second ensemble de ressources, et de valeurs de mesure d'un RI et d'un CQI obtenues par la réalisation d'une mesure à l'aide de l'ensemble de ressources cible,
dans lequel le mode d'émission combiné comprend au moins une CJT, et le mode d'émission unique comprend l'un quelconque parmi une CJT, une NCJT ou un STRP ; et
le second ensemble de ressources est l'ensemble de ressources de CSI-RS ayant le plus grand nombre de ressources de CSI-RS dans l'ensemble de ressources cible.

10. Procédé selon la revendication 8, dans lequel, dans le cas où l'indicateur de restriction est configuré, le signalement de la CSI obtenue par la réalisation d'une mesure à l'aide de l'ensemble de ressources cible dans chaque mode d'émission compris dans le second ensemble de schémas d'émission de manière conjointe sur la base du second ensemble de schémas d'émission comprend :
dans le cas où le mode d'émission compris dans le second ensemble de schémas d'émission est un mode d'émission unique, sur la base du mode d'émission unique, le signalement de valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible ; ou le signalement de valeurs de mesure d'un PMI et d'un LI obtenues par la réalisation d'une mesure à l'aide de chaque ressource de CSI-RS dans un second ensemble de ressources, et de valeurs de mesure d'un RI et d'un CQI obtenues par la réalisation d'une mesure à l'aide de l'ensemble de ressources cible ; ou
dans le cas où le mode d'émission compris dans le second ensemble de schémas d'émission est un mode d'émission combiné, sur la base de chaque mode d'émission compris dans le mode d'émission combiné, le signalement d'une valeur maximale parmi des valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible ; ou le signalement de valeurs de mesure d'un PMI et d'un LI obtenues par la réalisation d'une mesure à l'aide de chaque ressource de CSI-RS dans l'ensemble de ressources cible, et de valeurs de mesure d'un RI et d'un CQI obtenues par la réalisation d'une mesure à l'aide de l'ensemble de ressources cible,
dans lequel le mode d'émission combiné comprend au moins une CJT, et le mode d'émission unique comprend l'un quelconque parmi une CJT, une NCJT ou un STRP ; et
le second ensemble de ressources est l'ensemble de ressources de CSI-RS ayant le plus grand nombre de ressources de CSI-RS dans l'ensemble de ressources cible.

11. Procédé selon la revendication 9 ou 10, comprenant en outre :
la comparaison d'une CSI obtenue par la réalisation d'une mesure à l'aide de chaque ressource de CSI-RS dans l'ensemble de ressources cible dans chaque mode d'émission compris dans le second ensemble de schémas d'émission, et la détermination d'une première ressource de CSI-RS dans l'ensemble de ressources cible utilisée lorsque la CSI caractérisant la meilleure performance d'émission est obtenue ; et
le signalement de la CSI correspondant à la première ressource de CSI-RS.

12. Procédé de signalement d'une information d'état de canal, CSI, réalisé par un dispositif réseau, comprenant :
la détermination (301) de M groupes de ressources de signal de référence d'information d'état de canal, CSI-RS, sur la base d'un ensemble de ressources de CSI-RS, dans lequel l'ensemble de ressources de CSI-RS comprend de multiples ressources de CSI-RS ;
la détermination (302) d'une configuration de ressources de CSI-RS comprenant de multiples groupes de paires de ressources et une première information d'indication correspondant à chaque groupe de paires de ressources, dans lequel la première information d'indication est utilisée pour indiquer un groupe de paires de ressources parmi les multiples groupes de paires de ressources et/ou indiquer chaque ressource de CSI-RS dans le groupe de paires de ressources, et chaque groupe de paires de ressources comprend des ressources de CSI-RS sélectionnées parmi différents groupes de ressources de CSI-RS ;
la détermination (303) d'une configuration de signalement de CSI sur la base de s'il faut configurer une seconde information d'indication pour chaque groupe de paires de ressources dans la configuration de ressources de CSI-RS ; et
l'émission (304) de la configuration de ressources de CSI-RS et de la configuration de signalement de CSI vers un terminal,
dans lequel la configuration de signalement de CSI comprend une configuration pour différents schémas d'émission, et M est un nombre entier positif, un schéma d'émission comprend un ou plusieurs modes d'émission, le mode d'émission comprend un mode d'émission multipoint coordonné ou une combinaison d'un mode d'émission monopoint et d'un mode d'émission multipoint coordonné, le mode d'émission multipoint coordonné comprend une émission conjointe cohérente, CJT, et une émission conjointe non cohérente, NCJT, le mode d'émission monopoint comprend un point d'émission-réception unique, STRP, une seconde information d'indication est utilisée pour indiquer que le groupe de paires de ressources est appliqué à un premier mode d'émission, et le premier mode d'émission comprend un mode d'émission monopoint ou un mode d'émission multipoint coordonné.

13. Procédé selon la revendication 12, dans lequel la détermination de la configuration de signalement de CSI sur la base de s'il faut configurer la seconde information d'indication pour chaque groupe de paires de ressources dans la configuration de ressources de CSI-RS comprend :
dans le cas où la seconde information d'indication est configurée, la détermination de la configuration de signalement de CSI correspondant à la seconde information d'indication sur la base de la seconde information d'indication, dans lequel la configuration de signalement de CSI correspondant à la seconde information d'indication comprend de multiples schémas d'émission, chaque schéma d'émission comprend au moins le premier mode d'émission ; ou
dans le cas où aucune seconde information d'indication n'est configurée, la détermination que la configuration de signalement de CSI comprend une configuration d'un ou de plusieurs schémas d'émission, dans lequel le schéma d'émission comprend un mode d'émission multipoint coordonné, ou une combinaison d'un mode d'émission monopoint et d'un mode d'émission multipoint coordonné, le mode d'émission multipoint coordonné comprend une CJT et une NCJT, et le mode d'émission monopoint comprend un STRP,
dans lequel la détermination de la configuration de signalement de CSI correspondant à la seconde information d'indication sur la base de la seconde information d'indication comprend :
dans le cas où la seconde information d'indication indique que le premier mode d'émission appliqué au groupe de paires de ressources est un STRP, la détermination qu'un schéma d'émission dans la configuration de signalement de CSI correspondant à la seconde information d'indication est un STRP ;
dans le cas où la seconde information d'indication indique que le premier mode d'émission appliqué au groupe de paires de ressources est une CJT, la détermination qu'un schéma d'émission dans la configuration de signalement de CSI correspondant à la seconde information d'indication comprend une CJT, une CJT et un STRP, et une CJT, une NCJT et un STRP ; et
dans le cas où la seconde information d'indication indique que le premier mode d'émission appliqué au groupe de paires de ressources est une NCJT, la détermination qu'un schéma d'émission dans la configuration de signalement de CSI correspondant à la seconde information d'indication comprend une NCJT, une NCJT et un STRP, et une CJT, une NCJT et un STRP,
dans lequel la configuration de signalement de CSI comprend en outre un indicateur de restriction, et l'indicateur de restriction est utilisé pour indiquer au terminal de signaler une CSI obtenue par la réalisation d'une mesure à l'aide du groupe de paires de ressources dans chaque mode d'émission respectivement, ou de signaler une CSI obtenue par la réalisation d'une mesure à l'aide du groupe de paires de ressources dans chaque mode d'émission de manière conjointe.

14. Appareil terminal pour le signalement d'une information d'état de canal, CSI, comprenant :
un module de réception (601), utilisé pour la réception d'une configuration de ressources de signal de référence d'information d'état de canal, CSI-RS, et d'une configuration de signalement de CSI émises par le dispositif réseau, dans lequel la configuration de ressources de CSI-RS comprend de multiples groupes de paires de ressources et une première information d'indication correspondant à chaque groupe de paires de ressources, la première information d'indication est utilisée pour indiquer un groupe de paires de ressources parmi les multiples groupes de paires de ressources et/ou indiquer chaque ressource de CSI-RS dans le groupe de paires de ressources, chaque groupe de paires de ressources comprend des ressources de CSI-RS sélectionnées parmi différents groupes de ressources de CSI-RS, et un nombre de groupes de ressources de CSI-RS est déterminé comme étant M sur la base d'un ensemble de ressources de CSI-RS ; dans lequel l'ensemble de ressources de CSI-RS comprend de multiples ressources de CSI-RS ;
un premier module de détermination (602), utilisé pour, sur la base de la configuration de ressources de CSI-RS, la détermination d'un ou de plusieurs groupes de paires de ressources à signaler dans les multiples groupes de paires de ressources, et la détermination d'une ou de plusieurs ressources de CSI-RS à signaler dans un groupe de paires de ressources à signaler ; et
un module de signalement (603), utilisé pour, sur la base de la configuration de signalement de CSI, le signalement d'une CSI obtenue par la réalisation d'une mesure à l'aide des une ou plusieurs ressources de CSI-RS à signaler dans le groupe de paires de ressources à signaler, et le signalement du groupe de paires de ressources à signaler correspondant à la CSI, et/ou d'une ou de plusieurs ressources de CSI-RS à signaler dans le groupe de paires de ressources à signaler,
dans lequel la configuration de signalement de CSI comprend une configuration pour différents schémas d'émission, et *M* est un nombre entier positif, un schéma d'émission comprend un ou plusieurs modes d'émission, le mode d'émission comprend un mode d'émission multipoint coordonné ou une combinaison d'un mode d'émission monopoint et d'un mode d'émission multipoint coordonné, le mode d'émission multipoint coordonné comprend une émission conjointe cohérente, CJT, et une émission conjointe non cohérente, NCJT, le mode d'émission monopoint comprend un point d'émission-réception unique, STRP, une seconde information d'indication est utilisée pour indiquer que le groupe de paires de ressources est appliqué à un premier mode d'émission, et le premier mode d'émission comprend un mode d'émission monopoint ou un mode d'émission multipoint coordonné.

15. Appareil de dispositif réseau pour le signalement d'une information d'état de canal, CSI, comprenant :
un second module de détermination (701), utilisé pour la détermination de M groupes de ressources de signal de référence d'information d'état de canal, CSI-RS, sur la base d'un ensemble de ressources de CSI-RS, dans lequel l'ensemble de ressources de CSI-RS comprend de multiples ressources de CSI-RS ;
un module de configuration de ressources (702), utilisé pour la détermination d'une configuration de ressources de CSI-RS comprenant de multiples groupes de paires de ressources et une première information d'indication correspondant à chaque groupe de paires de ressources sur la base de *M* groupes de ressources de CSI-RS, dans lequel la première information d'indication est utilisée pour indiquer un groupe de paires de ressources parmi les multiples groupes de paires de ressources et/ou indiquer chaque ressource de CSI-RS dans le groupe de paires de ressources, et chaque groupe de paires de ressources comprend des ressources de CSI-RS sélectionnées parmi différents groupes de ressources de CSI-RS ;
un module de configuration de signalement de CSI (703), utilisé pour la détermination d'une configuration de signalement de CSI sur la base de s'il faut configurer une seconde information d'indication pour chaque groupe de paires de ressources dans la configuration de ressources de CSI-RS ; et
un module d'émission (704), utilisé pour l'émission de la configuration de ressources de CSI-RS et de la configuration de signalement de CSI vers un terminal,
dans lequel la configuration de signalement de CSI comprend une configuration pour différents schémas d'émission, et *M* est un nombre entier positif, un schéma d'émission comprend un ou plusieurs modes d'émission, le mode d'émission comprend un mode d'émission multipoint coordonné ou une combinaison d'un mode d'émission monopoint et d'un mode d'émission multipoint coordonné, le mode d'émission multipoint coordonné comprend une émission conjointe cohérente, CJT, et une NCJT, le mode d'émission monopoint comprend un point d'émission-réception unique, STRP, une seconde information d'indication est utilisée pour indiquer que le groupe de paires de ressources est appliqué à un premier mode d'émission, et le premier mode d'émission comprend un mode d'émission monopoint ou un mode d'émission multipoint coordonné.
